# EUROPÄISCHE PATENTSCHRIFT

(11) **EP 3 555 182 B1**
(45) Veröffentlichungstag und Bekanntmachung des Hinweises auf die Patenterteilung: **14.10.2020**
(21) Anmeldenummer: 17816631.0
(22) Anmeldetag: 07.12.2017
(51) Int. Cl.: C08J 5/18, B29D 7/01, B32B 27/00, C08F 120/06, C08J 3/05, C08J 3/07

(54) **VERFAHREN ZUR HERSTELLUNG FUNKTIONELLER WASSERLÖSLICHER FOLIEN**
METHOD FOR PRODUCING FUNCTIONAL WATER SOLUBLE FILMS
PROCÉDÉ POUR LA FABRICATION DE FEUILLES FONCTIONNELLES SOLUBLES DANS L'EAU

(30) Priorität: 16.12.2016 EP 16204803
(43) Veröffentlichungstag der Anmeldung: 23.10.2019
(73) Patentinhaber: BASF SE, 67056 Ludwigshafen am Rhein (DE)
(72) Erfinder: FUCHS, Yannick, 67056 Ludwigshafen (DE); DETERING, Juergen, 67056 Ludwigshafen (DE); MEISE, Markus, 67056 Ludwigshafen (DE); WITTELER, Helmut, 67056 Ludwigshafen (DE); SCHMIDT-HANSBERG, Benjamin, 67056 Ludwigshafen (DE); ESPER, Claudia, 67056 Ludwigshafen (DE); SCHMITT, Marcel, 67056 Ludwigshafen (DE); DE MORAGAS, Maria, 08017 Barcelona (ES)
(74) Vertreter: BASF IP Association
(86) Internationale Anmeldenummer: PCT/EP2017/081801
(87) Internationale Veröffentlichungsnummer: WO 2018/108687

(56) Entgegenhaltungen:
- WO-A1-2005/012378
- WO-A1-2015/000970
- WO-A1-2015/000971
- WO-A2-2015/000969

## Beschreibung

Die vorliegende Erfindung betrifft ein Verfahren zur Herstellung wasserlöslicher Folien, wobei die wasserlösliche Folie mindestens eine Schicht S1) umfasst enthaltend oder bestehend aus eine(r) Polymerzusammensetzung P1), erhältlich durch radikalische Polymerisation einer Monomerzusammensetzung M1), die wenigstens ein Monomer A) enthält, das ausgewählt ist unter α,β-ethylenisch ungesättigten Mono- und Dicarbonsäuren, Salzen α,β-ethylenisch ungesättigter Mono- und Dicarbonsäuren, Anhydriden, α,β-ethylenisch ungesättigter Mono- und Dicarbonsäuren und Mischungen davon, in Gegenwart wenigstens einer Polyetherkomponente PE), die ausgewählt ist unter Polyetherolen mit einem zahlenmittleren Molekulargewicht von wenigstens 200 g/mol, Mono- und Di-(C₁-C₆-alkyl)ethern solcher Polyetherole, Polyethergruppen-haltigen Tensiden und Mischungen davon, wobei die Folie noch weitere Schichten umfassen kann, und wobei die Schichten auf ein Trägermaterial gegossen werden.

Es ist bekannt, wasserlösliche Folien aus Polyvinylalkohol zur portionsweisen Verpackung von flüssigen, gelförmigen und festen Wasch- und Reinigungsmitteln oder auch für Agrarformulierungen zu verwenden. Die Polyvinylalkoholfolie löst sich zu Beginn des Wasch- und Reinigungsprozesses auf und setzt die Wasch- und Reinigungsmittel frei, so dass diese ihre Wirkung entfalten können. Die Vorteile der portionsweise verpackten Wasch- und Reinigungsmittel (sogenannte single dose units oder mono dose units) für den Verbraucher sind vielfältig. Dazu zählen die Vermeidung von Fehldosierungen, die bequeme Handhabung, und dass der Verbraucher nicht physisch mit den Inhaltsstoffen der Wasch- und Reinigungsmittel in Kontakt kommt. Dazu zählen weiterhin auch ästhetische Aspekte, die zu einer Bevorzugung der portionsweise verpackten Wasch- und Reinigungsmittel führen. Aktuelle Dosierungsformen können eine Vielzahl von separat formulierten Wirk- und Hilfsstoffen enthalten, die im Reinigungsprozess individuell freigesetzt werden. Solche Mehrkammersysteme gestatten beispielsweise das Trennen von nicht kompatiblen Inhaltsstoffen und damit die Gestaltung von neuen Formulierungskonzepten. Der Anteil der Polyvinylalkoholfolie an dem Gesamtgewicht der Wasch- oder Reinigungsmittelportion (single dose unit) beträgt je nach Anwendung zwischen 2 und 20 Gew.-%.

Ein Nachteil der Polyvinylalkoholfolien ist, dass sie nur als Verpackungsmaterial dienen und keinerlei Beitrag zur Wasch- und Reinigungsleistung liefern. Es besteht somit ein Bedarf an wasch- und reinigungsaktiven Polymerfolien.

Lev Bromberg beschreibt im Journal of Physical Chemistry B (1998), 102, 11, 1956-1963, ein Material mit thermoreversibler Gelbildung, zu dessen Herstellung man Acrylsäure in Gegenwart eines PEO-PPO-PEO-Blockcopolymers polymerisiert. Die Reaktion erfolgt in Abwesenheit externer Lösungsmittel, um einen hohen Anteil an Verzweigung und Vernetzung in den erhaltenen Produkten zu erzielen. Diese sind weder wasserlöslich noch transparent. Als mögliche Einsatzbereiche für diese Polymere werden nur ganz allgemein die Pharmazie und die Nahrungsergänzung genannt (S. 1956, linke Spalte, "Introduction").

Lev Bromberg beschreibt in Ind. Eng. Chem. Res. 1998, 37, 4267-4274 Polyether-modifizierte Polyacrylsäuren, wobei konkret teilneutralisierte Acrylsäure in Gegenwart eines PEO-PPO-PEO-Blockcopolymers polymerisiert wird.

WO 2005/012378 beschreibt wässrige Dispersionen von wasserlöslichen Polymeren von anionischen Monomeren und deren Verwendung als Verdickungsmittel für wässrige Systeme. Zu ihrer Herstellung werden anionische Monomere in Gegenwart von zwei wasserlöslichen Polymeren aus verschiedenen Klassen polymerisiert, wobei es sich unter anderem auch um Polyalkylenglycole handeln kann. Beispiel 4 (Seite 19, Zeilen 14-27) betrifft die Polymerisation von Acrylsäure in Gegenwart von zwei verschiedenen Polypropylenglycolen und von Maltodextrin. Die Dispersionen werden unter anderem in Personal care-Produkten sowie in Wasch- und Reinigungsmitteln eingesetzt. Ein Einsatz in Form von Folien ist nicht beschrieben.

WO 2015/000969 beschreibt die Verwendung einer gelförmigen Polymerzusammensetzung, erhältlich durch ein Verfahren, bei dem man
a) eine Monomerzusammensetzung M1) bereitstellt, die aus
   A) wenigstens einer α,β-ethylenisch ungesättigten Säure und
   B) 0 bis 0,1 Gew.-%, bezogen auf das Gesamtgewicht der Monomerzusammensetzung M1), vernetzend wirkenden Monomeren, die zwei oder mehr als zwei polymerisierbare α,β-ethylenisch ungesättigte Doppelbindungen pro Molekül aufweisen,
   besteht,
b) die in Schritt a) bereitgestellte Monomerzusammensetzung M1) einer radikalischen Polymerisation in Gegenwart wenigstens einer Polyetherkomponente PE) unterzieht, die ausgewählt ist unter Polyetherolen mit einem zahlenmittleren Molekulargewicht von wenigstens 200 g/mol und deren Mono- und Di-(C₁-C₆-alkylethern), Polyethergruppen-haltigen Tensiden und Mischungen davon,
in Formulierungen für die maschinelle Geschirrreinigung. Ein Einsatz in Form von Folien ist wiederum nicht beschrieben.

WO 2015/000971 beschreibt die Verwendung einer gelförmigen Polymerzusammensetzung, wie sie in der WO 2015/000969 beschrieben, ist für weitere Verwendungen, jedoch nicht in Form von Folien.

WO 2015/000971 beschreibt ein Verfahren zur Herstellung einer festen Polymerzusammensetzung, insbesondere in Form einer Folie oder in Form einer festen Beschichtung auf einem Substrat oder in Teilchenform, bei dem man
a) eine Monomerzusammensetzung M1) bereitstellt, die
   A) wenigstens eine α,β-ethylenisch ungesättigte Carbonsäure, und
   B) weniger als 0,1 Gew.-%, bezogen auf das Gesamtgewicht der Monomerzusammensetzung M1) vernetzend wirkende Monomere, die zwei oder mehr als zwei polymerisierbare α,β-ethylenisch ungesättigte Doppelbindungen pro Molekül aufweisen,
   enthält, und
b) die in Schritt a) bereitgestellte Monomerzusammensetzung M1) einer radikalischen Polymerisation in Gegenwart wenigstens einer Polyetherkomponente PE) unterzieht, die ausgewählt ist unter Polyetherolen mit einem zahlenmittleren Molekulargewicht von wenigstens 200 g/mol und deren Mono- und Di-(C₁-C₆-alkylethern), Polyethergruppen-haltigen Tensiden und Mischungen davon.

WO 01/00781 beschreibt eine Wirkstoffportionspackung, umfassend wenigstens eine wasch-, reinigungs- oder spülaktive Zubereitung und eine die wasch-, reinigungs-oder spülaktive Zubereitung ganz oder teilweise umschließende Umfassung, worin die Umfassung unter Wasch-, Reinigungs- oder Spülbedingungen löslich ist und wenigstens eine Einzelkomponente der wasch-, reinigungs- oder spülaktiven Zubereitung gebunden enthält. Es ist nicht beschrieben, dass das Material der Umfassung selbst aktiv am Wasch- oder Reinigungsvorgang teilnimmt.

Es ist bekannt, Mehrschichtfolien bereitzustellen, die einen Schichtverbund aus wenigstens zwei Folienlagen aufweisen.

WO 2010/069553 beschreibt eine Mehrschichtfolie, umfassend einen zumindest spülbaren, thermoplastischen Schichtverbund aus
A) wenigstens einer durch Einwirkung von Wasser zumindest zerkleinerbaren, gegen kaltes Wasser resistenten oder darin zögerlich auflösbaren Schicht basierend auf wenigstens einem zumindest teilverseiften Polyvinylacetat und
B) wenigstens einer kaltwasserlöslichen Schicht basierend auf wenigstens einem zumindest teilverseiften Polyvinylacetat und wenigstens einer wasserlöslichkeitsverstärkenden Substanz, ausgewählt aus der Gruppe umfassend biologisch abbaubare Polymere, Tenside, anorganische Pigmente und Füllstoffe.

Unter einem spülbaren Schichtverbund wird verstanden, dass daraus resultierende Verpackungen bei Spülung mit Wasser, z.B. einer Toilettenspülung, keine Verstopfungen in Abflüssen verursachen. Sie dienen als Schutzverpackungen für unterschiedlichste Güter, wie Waschmittel oder Spülmittel, die in Einzelportionen (z.B. in Form von Tabs) verpackt sind, und für Hygieneartikel wie Tampons oder Damenbinden, die zusammen mit der spülbaren Verpackung zum Einsatz kommen. Nach dem Entfernen der Verpackung zum Gebrauch dieser Artikel kann die Verpackung durch einfache Wasserspülung mit Hilfe einer Toilettenspülung entsorgt werden. US 7,727,946 beschreibt ein Verfahren zur Herstellung funktionalisierter Filme für Reinigungsprodukte, wobei ein wasserlöslicher Film eine Beschichtung aus einer Zusammensetzung trägt, die eine bestimmte Funktion ausübt. Dazu wird auf wenigstens einer Seite des wasserlöslichen Films schrittweise eine wässrige Lösung eines funktionellen Materials aufgetragen, um eine mehrschichtige Beschichtung auf dem Film zu erzeugen. Dazu lässt man jeweils die aufgetragene Schicht zumindest teilweise trocknen, bevor die nächste Schicht aufgetragen wird. Jede Schicht kann unterschiedliche funktionelle Materialien mit reinigenden Eigenschaften, Barriere-Eigenschaften und/oder die Löslichkeit modifizierenden Eigenschaften enthalten. Zusätzlich enthält die wässrige Lösung ein Mittel, das die Löslichkeit des wasserlöslichen Films temporär verringert, so dass dieser zwar benetzt wird, sich aber nicht auflöst oder quillt. Die einzelnen Schichten werden vorzugsweise durch ein Druckverfahren, wie Flexographie, aufgetragen. Als geeignete filmbildende Polymere werden Polyvinylalkohole, Polyvinylpyrrolidone, Polyalkylenoxide, Polyacrylamide, Polyacrylsäuren, Cellulose, Celluloseether, Celluloseesters, Celluloseamide, Polyvinylacetate, Polycarbonsäuren und deren Salze, Polyaminosäuren, Polyamide, Polyacrylamide, Malein-/Acrylsäure-Copolymere, Polysaccharide und Mischungen davon genannt. Besonders bevorzugt werden Polyvinylalkoholfilme eingesetzt, die kommerziell zum Beispiel unter der Bezeichnung Monosol M8630 erhältlich sind. Als Mittel, die die Löslichkeit des wasserlöslichen Films temporär verringern, werden Salze, wie Natriumsulfat, Natriumcitrat, etc. eingesetzt. Es ist nicht beschrieben, dass die funktionellen Materialien zusammen mit filmbildenden Polymeren aufgetragen werden.

Der Stand der Technik offenbart nicht die Bereitstellung oder Herstellung einer Folie, welche eine filmbildende funktionelle Polymerzusammensetzung aufweist, die über dispergierende, belagsinhibierende, emulgierende und/oder tensidische Eigenschaften verfügt und somit zur Wasch- und Reinigungsleistung beiträgt und sich zur lagerstabilen Formulierung eignet. Auch wird kein effizientes Verfahren zur Herstellung einer solchen Folie gezeigt.

Die sich aus dem Stand der Technik ergebenden Nachteile werden gelöst durch den erfindungsgemäßen Gegenstand wie hierin beschrieben und in den Ansprüchen definiert.

Die vorliegende Erfindung betrifft ein Verfahren zur Herstellung einer funktionellen wasserlöslichen Folie, wobei die wasserlösliche Folie mindestens eine Schicht S1) umfasst enthaltend oder bestehend aus eine(r) Polymerzusammensetzung P1), erhältlich durch radikalische Polymerisation einer Monomerzusammensetzung M1) in Gegenwart mindestens einer Polyetherkomponente PE), wobei M1) wenigstens ein Monomer A) enthält, das ausgewählt ist unter α,β-ethylenisch ungesättigten Mono- und Dicarbonsäuren, Salzen α,β-ethylenisch ungesättigter Mono- und Dicarbonsäuren, Anhydriden, α,β-ethylenisch ungesättigter Mono- und Dicarbonsäuren und Mischungen davon, in Gegenwart wenigstens einer Polyetherkomponente PE), die ausgewählt ist unter Polyetherolen mit einem zahlenmittleren Molekulargewicht von wenigstens 200 g/mol, Mono- und Di-(C₁-C₆-alkyl)ethern solcher Polyetherole, Polyethergruppen-haltigen Tensiden und Mischungen davon,
wobei das Verfahren folgende Schritte umfasst:
(a) Herstellen einer wässrigen Lösung der Polymerzusammensetzung P1), wobei die wässrige Lösung neben oder statt Wasser unter anderem auch Alkohol wie 2-Propanol umfassen kann,
(b) Gießen der wässrigen Polymerzusammensetzung P1) aus (a) als Film auf ein Trägermaterial,
(c) Optional Trocknen des Films nach dem Auftragen von S1) auf das Trägermaterial,
(d) Auftragen einer Schicht S2),
   wobei die Schicht S2) wenigstens ein Polymer P2) enthält oder aus wenigstens einem Polymer P2) besteht, das von der Polymerzusammensetzung P1) verschieden und ausgewählt ist unter
   - natürlichen und modifizierten Polysacchariden,
   - Homo- und Copolymeren, die Wiederholungseinheiten enthalten, die sich von Vinylalkohol, Vinylestern, alkoxilierten Vinylalkoholen oder Mischungen davon ableiten,
   - Homo- und Copolymeren, die wenigstens ein Monomer einpolymerisiert enthalten, das ausgewählt ist unter N-Vinylpyrrolidon, N-Vinylcaprolactam, N-Vinylimidazol, 2-Vinylpyridin, 4-Vinylpyridin, Salzen der drei letztgenannten Monomere, Vinylpyridin-N-oxid, N-carboxymethyl-4-vinylpyridiumhalogeniden und Mischungen davon,
   - Homo- und Copolymeren der Acrylsäure und/oder Methacrylsäure, insbesondere Copolymeren, die wenigstens ein Acrylsäuremonomer, ausgewählt unter Acrylsäure, Acrylsäuresalzen und Mischungen davon und wenigstens ein Maleinsäuremonomer, ausgewählt unter Maleinsäure, Maleisäureanhydrid, Maleinsäuresalzen und Mischungen davon, einpolymerisiert enthalten,
   - Copolymeren, die wenigstens ein (Meth)acrylsäuremonomer, ausgewählt unter Acrylsäure, Methacrylsäure, ihren Salzen und Mischungen davon und wenigstens ein hydrophobes Monomer, ausgewählt unter C₁-C₈-Alkylestern der (Meth)acrylsäure, C₂-C₁₀-Olefinen, Styrol und α-Methylstyrol einpolymerisiert enthalten,
   - Copolymeren, die wenigstens ein Maleinsäuremonomer, ausgewählt unter Maleinsäure, Maleinsäureanhydrid, Maleinsäuresalzen und Mischungen davon und wenigstens ein C₂-C₈-Olefin einpolymerisiert enthalten,
   - Homo- und Copolymeren des Acrylamids und/oder Methacrylamids,
   - Polyaminosäuren,
   - wasserlöslichen oder wasserdispergierbaren Polyamiden,
   - Polyalkylenglykolen, Mono- oder Diethern von Polyalkylenglykolen,
   - Polyalkylenoxide wie bspw. Polyethylenoxid, und
   - Mischungen davon,
(e) Optional Trocknen des Films nach dem Auftragen von S2) auf das Trägermaterial,
(f) Optional Auftragen einer oder mehrerer weiteren Schichten S1) und/oder S2),
(g) Optional Trocknen des Films nach dem Auftragen von einer oder mehreren weiteren Schichten S1) und/oder S2) auf das Trägermaterial nach (f),
   Trocknen der Folie nach dem Auftragen aller Schichten S1) und S2) auf das Trägermaterial, wobei die Schichten S1) und/oder S2) in frei gewählter Reihenfolge oder auch gleichzeitig aufgetragen und jeweils optional nach jedem Auftragen einer oder mehrerer Schichten getrocknet werden können.

C₁-C₆ Alkyl bei den hier für PE) definierten Mono- und Di-(C₁-C₆-alkyl)ethern steht dabei für Alkyle mit 1 bis 6 Kohlenstoffatomen, die lineare oder verzweigte Alkyle bilden.

In einer Ausführungsform der vorliegenden Erfindung wird die Schicht S2) nach dem Trocknen des Films nach dem Auftragen von S2) auf das Trägermaterial (Schritt (e)) im Sinne einer Laminierung mit einer zweiten zweilagigen Folie zusammengeführt.
Die zweite zweilagige Folie kann in den Schritten (a) bis (d) zuvor oder in einer parallel geschalteten Anlage simultan hergestellt werden. Wurde die gleiche Zusammensetzung für die sich berührenden Lagen der beiden Folien verwendet, besteht die auf diesem Weg über Laminierung hergestellte Mehrlagenfolie aus drei chemisch unterschiedlichen Lagen.

In einer weiteren Ausführungsform der vorliegenden Erfindung wird die in den Schritten (a) bis (d) hergestellte zweilagige Folie mittig in Maschinenrichtung geschnitten; anschließend werden die beiden erhaltenen Folienhälften laminiert.
Bei dieser Ausführungsform besteht auch die Möglichkeit, die chemisch identische Grenzfläche aufeinander zu laminieren, um effektiv drei chemisch unterschiedliche Lagen zu erhalten.
Der Vorteil der beiden oben genannten Ausführungsformen der vorliegenden Erfindung besteht in einer deutlich beschleunigten Trocknung durch die reduzierte Schichtdicke, die direkt mit einer erhöhten Produktionsgeschwindigkeit zusammenhängt. Ohne auf die Theorie beschränkt zu sein, ist der Stofftransport des Lösemittels durch den Film bei konstantem Diffusionskoeffizient proportional zu 1/Filmdicke.
In einer Ausführungsform der vorliegenden Erfindung umfasst die Folie keine Vernetzer.

Erfindungsgemäß ist es aber ferner möglich, dass alle Schichten S1) und S2) der erfindungsgemäß herzustellenden Folie ferner dem Fachmann bekannte Weichmacher enthalten können.

Geeignete Weichmacher umfassen bspw. Alkylenamine, Alkanolamine, Polyole, wie Alkylenglycole und Oligoalkylenglycole, z. B. 2-Methyl-1,3-propandiol, 3-Methyl-1,5-Pentadiol, Hydroxypropylglycerin, Neopentylglycol, alkoxyliertes Glycerin (wie z. B. Voranol ® von Dow Chemicals), wasserlösliche Polyesterpolyole (wie z. B. TriRez von Geo Specialty Chemicals) und Mischungen davon. Geeignete Weichmacher sind weiterhin Polyetherpolyole, die unter der Bezeichnung Lupranol® von BASF SE erhältlich sind. Der Begriff "Alkylenamine" bezeichnet Kondensationsprodukte von Alkanolaminen mit Ammoniak oder primären Aminen, z. B. werden Ethylenamine durch Umsetzung von Monoethanolamin mit Ammoniak in Gegenwart eines Katalysators erhalten. Dabei resultieren als Hauptkomponenten: Ethylendiamin, Piperazin, Diethylentriamin und Aminoethylethanolamin.

Bevorzugt sind die Weichmacher ausgewählt unter Glycerin, Diglycerin, Propylenglykolen mit einem gewichtsmittleren Molekulargewicht von bis zu 400, Ethylenglykol, Polyethylenglykole mit einem gewichtsmittleren Molekulargewicht von bis zu 400, Diethylenglycol, Triethylenglykol, Tetraethylenglykol, Zuckeralkoholen wie Sorbitol, Mannitol, Xylitol, Isomalt, Lactitol, Isopentyldiol, Neopentylglykol, , Trimethylolpropan, Diethylentriamin, Triethylenpentamin, Ethanolamin, Diethanolamin, Triethanolamin und Mischungen davon.

Um die erfindungsgemäß herzustellenden Folien resistenter gegenüber aggressiven Inhaltsstoffen zu machen (wie z. B. Chlor freisetzende Verbindungen, wie sie im Bereich der Desinfektion von Wasser, etc. verwendet werden), können ferner im Zusammenhang mit der vorliegenden Erfindung auch "Scavenger" (Fängermoleküle) der Folie hinzugefügt werden, so dass sie von S1) nud/oder S2) enthalten sind. Geeignete Scavenger umfassen beispielsweise Polyamine, polymere Polyamine, wie Polyethylenimine, Poly(amidoamine) und Polyamide. Darüber hinaus können auch Ammoniumsulfat, primäre und sekundäre Amine mit einem geringen Dampfdruck, wie Ethanolamine, Aminosäure und deren Salze, sowie Polyaminosäure und deren Salze, Fettamine, Glucoseamine und andere aminierte Zucker verwendet werden. Des Weiteren können Reduktionsmittel wie Sulfite, Bisulfite, Thiosulfite, Thiosulfate, lodide, Nitrite und Antioxidanzien wie Carbamate, Ascorbate und Mischungen davon verwendet werden.

Die Schichten S1 und/oder S2 der erfindungsgemäß herzustellenden Folien können neben Weichmachern und/oder Scavengern wie beispielhaft hier dargestellt auch noch weitere Polymeren, Mitteln zur Modifikation der Gasdurchlässigkeit und Wasserdampfdurchlässigkeit, Antistatikmitteln, Gleitmitteln, Slipmitteln, Auflösungshilfsmitteln, Farbstoffen, Pigmenten, Enzymen, Korrosionsinhibitoren, Entschäumern, Duftstoffen, Verdickern, Löslichkeitsvermittlern, Lösemitteln, pH-Stellmitteln, Antiredepositionsmitteln, optischen Aufhellern, Vergrauungsinhibitoren, Farbübertragungsinhibitoren, antimikrobiellen Wirkstoffen, Antioxidantien, UV-Absorbern, Anti-Vergilbungsmittel, Bitterstoffe (z. B. Bitrex®) und/oder Mischungen davon enthalten.

Generell umfasst der Schritt des Lösens der Polymerzusammensetzung P1) in Wasser auch das bereits in der Polymerzusammensetzung enthaltene Wasser, so dass hier nicht zwingend noch Wasser zugegeben werden muss, sofern in der Polymerzusammensetzung bereits Wasser enthalten ist, bevorzugt ausreichend Wasser zur Lösung der Polymerzusammensetzung.

Im Folgenden werden die Begriffe "Folie" und "Film" insoweit synonym verwendet, dass beide jeweils eine zusammenhängende flächige Ausdehnung einer die Polymerzusammensetzung P1) enthaltenden Zusammensetzung beschreiben, wobei der Begriff "Folie" zusätzlich mechanische Belastbarkeit umfasst, welche beim Begriff "Film" noch nicht zwingend vorliegen muss, insbesondere nicht vor entsprechender Trocknung.

Es wurde im Rahmen der vorliegenden Erfindung gefunden, dass eine Polymerzusammensetzung P1), erhältlich durch radikalische Polymerisation einer Monomerzusammensetzung M1), die wenigstens ein Monomer A) enthält, das ausgewählt ist unter α,β-ethylenisch ungesättigten Mono- und Dicarbonsäuren, Salzen α,β-ethylenisch ungesättigter Mono- und Dicarbonsäuren, Anhydriden, α,β-ethylenisch ungesättigter Mono- und Dicarbonsäuren und Mischungen davon, in Gegenwart wenigstens einer Polyetherkomponente (PE), die ausgewählt ist unter Polyetherolen mit einem zahlenmittleren Molekulargewicht von wenigstens 200 g/mol, Mono- und Di-(C₁-C₆-alkyl)ethern solcher Polyetherole, Polyethergruppen-haltigen Tensiden und Mischungen geeignet ist, beim Gießen auf ein geeignetes Trägermaterial eine Folie (bzw. zunächst einen Film) zu bilden, die nicht nur mechanische Belastbarkeit, sondern aufgrund ihrer Zusammensetzung vor allem funktionelle Eigenschaften wie dispergierende, belagsinhibierende, komplexierende, emulgierende, Oberflächen modifizierende und/oder tensidische Eigenschaften aufweist. Ein weiterer Vorteil der gegenwärtigen Erfindung liegt darin, dass die Folie als mehrschichtige Folie ausgearbeitet werden kann, indem mehrere und ggf. unterschiedliche Schichten, bspw. S1) und/oder S2) wie hier beschrieben und definiert aufeinander gegossen werden. Bemerkenswert und überraschend ist hierbei, dass eine solche Mehrschichtfolie gegossen werden kann, ohne zwischendurch die jeweils darunterliegende Schicht abtrocknen zu müssen. So ist es auch möglich, zwei oder mehrere Schichten gleichzeitig, bspw. mittels einer Mehrschlitzdüse, zu gießen, oder zunächst eine oder mehrere Schichten zu gießen und anschließend, ohne zwischenzeitliches aktives Trocknen, eine oder mehrere weitere Schichten darüber zu gießen. Zwischenzeitliche Trocknungsschritte können jedoch dennoch durchgeführt werden, um eine Viskositätserhöhung der zu trocknenden Schicht(en) zu erzielen.

Die erfindungsgemäß einzusetzenden Folien eignen sich insbesondere für einen Einsatz in Wasch- und Reinigungsmitteln. Zu diesem Zweck können einzelne Komponenten eines Wasch- oder Reinigungsmittels oder auch ein vollständiges Wasch- oder Reinigungsmittel in Form einer Mehrschichtfolie formuliert sein. Ein Wasch- oder Reinigungsmittel in Form einer Mehrschichtfolie löst sich zu Beginn und/oder im Verlauf der jeweiligen Anwendung (z. B. im Wasch- oder Spülwasser) auf, setzt somit die Inhaltsstoffe der Wasch- und Reinigungsmittel frei und trägt in aufgelöster Form aufgrund der dispergierenden, belagsinhibierenden, komplexbildenden, emulgierenden und/oder tensidischen Eigenschaften der enthaltenen Polymerzusammensetzung P1) zur Wasch- und Reinigungsleistung in erheblichem Maße bei.

Die erfindungsgemäß einzusetzenden Folien eignen sich auch zur portionsweisen Verpackung von flüssigen, gelförmigen und festen Wasch- und Reinigungsmitteln. Sie lösen sich zu Beginn und/oder im Verlauf der jeweiligen Anwendung (z. B. im Wasch- oder Spülwasser) auf, setzen somit die Inhaltsstoffe der Wasch- und Reinigungsmittel frei und tragen in aufgelöster Form aufgrund der dispergierenden, belagsinhibierenden, komplexbildenden, emulgierenden und/oder tensidischen Eigenschaften der enthaltenen Polymerzusammensetzung P1) zur Wasch- und Reinigungsleistung in erheblichem Maße bei.

Unter den Begriffen "Waschmittelportion" und "Reinigungsmittelportion" wird im Rahmen der vorliegenden Erfindung eine für einen in einer wässrigen Phase stattfindenden Wasch- oder Reinigungsvorgang ausreichende Menge eines Waschmittels bzw. eines Reinigungsmittels verstanden. Dies kann beispielsweise ein maschineller Waschvorgang sein, wie er mit handelsüblichen Waschmaschinen durchgeführt wird. Erfindungsgemäß wird unter diesem Begriff auch eine Wirkstoffportion für einen Handwaschgang oder einen von Hand durchgeführten Reinigungsvorgang verstanden (wie er z. B. im Handwaschbecken oder in einer Schüssel durchgeführt wird). Die erfindungsgemäßen wasch- und reinigungsaktiven Mehrschichtfolien werden bevorzugt zur Herstellung von Wirkstoffportionen für maschinelle Wasch- oder Reinigungsvorgänge eingesetzt.

Die erfindungsgemäß einzusetzende Folie hat dabei den großen Vorteil, dass sie selbst funktioneller Natur ist, also nicht lediglich mechanische Stabilität verleiht wie bspw. die standardmäßig eingesetzten Polyvinylalkoholfolien bei Pouches, Pods oder ähnlichem, da die Folienschicht S1) bereits funktionelle Bestandteile wie vor allem Polymere und Tenside aufweist. Es ist darüber hinaus auch Bestandteil der vorliegenden Erfindung, dass noch weitere Schichten hinzukommen können, welche noch weitere funktionelle Bestandteile umfassen (bspw. Gerüststoffe, Polymere, Enzyme, etc.), und/oder auch weitere mechanische Stabilität verleihen (bspw. Polyvinylalkohol (im folgenden PVA oder PVOH) oder andere wie hier beschrieben). Auch können die unterschiedlichen Schichten jeweils unterschiedliche Lösungskapazitäten haben, bspw. kann die Wasserlöslichkeit der einzelnen Schichten der erfindungsgemäß herzustellenden Folie eingestellt werden entsprechend den anwendungstechnischen Erfordernissen Die unterschiedliche Löslichkeit kann daher bspw. variieren abhängig von der Temperatur (unterschiedliche Zeitpunkte im Wasch- oder Spülvorgang) und/oder pH-Wert.

In einer bevorzugten Ausführungsform sind die einzelnen Schichten der erfindungsgemäßen Mehrschichtfolien wasserlöslich oder wasserdispergierbar. Je nach Einsatzgebiet der erfindungsgemäßen Mehrschichtfolien kann es vorteilhaft sein, wenn die einzelnen Schichten eine bestimmte Löslichkeit in Wasser aufweisen. So kann es beispielsweise gewünscht sein, dass verschiedene Schichten eine unterschiedliche Löslichkeit in Wasser aufweisen. Auch kann es z.B. gewünscht sein, dass eine außenliegende Oberflächenschicht weniger stark wasserlöslich ist, um zu verhindern, dass es bei hoher Luftfeuchte und/oder hoher Kontaktfeuchte (z.B. Handfeuchte) zum Verblocken und/oder einer teilweisen Auflösung kommt. Alternativ dazu kann es aber auch gewünscht sein, dass eine außenliegende Oberflächenschicht stark wasserlöslich ist, um einen darin befindlichen oder damit ummantelten Wirkstoff bei Kontakt mit Wasser schnell freizusetzen. Dabei kann es in bestimmten Anwendungsgebieten sinnvoll sein, aus Sicherheitsaspekten die Freisetzung bei Wasserkontakt nicht unter 30 Sekunden zu ermöglichen, bspw. um ein Auflösen im Mund bei versehentlicher oder ungewollter oraler Aufnahme zu verhindern. Solche oder ähnliche Grenzwerte sind in verschiedenen Ländern auch gesetzlich vorgeschrieben und entsprechend zu beachten. Eine solche Folie kann dann zum Schutz vor unerwünschtem Wasserkontakt eine wasserunlösliche Umverpackung aufweisen.

Je nach Einsatzgebiet der erfindungsgemäßen Mehrschichtfolien kann es weiterhin vorteilhaft sein, wenn die einzelnen Schichten eine temperaturabhängige Löslichkeit in Wasser aufweisen.

Es ist beim Gießen der Polymerzusammensetzung P1) auf ein geeignetes Trägermaterial wie hier beschrieben und definiert nicht zwingend nötig, dass die Polymerzusammensetzung P1) beim Gießen bereits vollständig auspolymerisiert ist. Es ist im Gegenteil im Zusammenhang der vorliegenden Erfindung ebenfalls möglich, dass die Polymerzusammensetzung P1) beim Gießen auf das Trägermaterial wie hier beschrieben und definiert erst zum Teil oder gar nicht polymerisiert ist, und erst während des Gießens und/oder nach dem Gießen vollständig auspolymerisiert. In einer Ausführungsform der vorliegenden Erfindung ist die wässrige Polymerzusammensetzung P1) beim Gießen auf das Trägermaterial bereits auspolymerisiert.

Wie bereits dargestellt wird die Polymerzusammensetzung P1) erfindungsgemäß vor dem Gießen auf ein Trägermaterial in Wasser gelöst bzw. ist nach dem Herstellprozess bereits gelöst. Das Lösen in Wasser erfolgt dabei idealerweise dergestalt, dass sich in der wässrigen Polymerzusammensetzung P1) nicht mehrere Phasen bilden. Dies ist dem Fachmann bekannt und kann insbesondere durch eine reduzierte Lösungsgeschwindigkeit (Zugabe von Wasser zur Polymerzusammensetzung P1) bzw. umgekehrt) und sachte Mischung (wie niedrige Mischgeschwindigkeit, bspw. beim Mischen mittels Impeller niedrige Umdrehungszahl) erreicht werden. Die Konzentration der wässrigen Polymerzusammensetzung P1) vor dem Gießen liegt erfindungsgemäß bei mind. etwa 40 w/w%, mind. 45 w/w%, mind. 50 w/w%, oder mind. 55 w/w%, jeweils bezogen auf die Gesamtmasse Polymerzusammensetzung P1) und Wasser, bevorzugt bezogen auf die Gesamtmasse des Anteil nicht flüchtiger Polymerzusammensetzung P1) und Wasser. Die Temperatur der Lösung sollte dabei so gewählt werden, dass sich keine Blasen bilden. Das ist dem Fachmann bekannt und kann bspw. dadurch erreicht werden, dass eine maximale Temperatur von nicht mehr als 90 °C, bspw. etwa 40 bis 90 °C oder 60 bis 90 °C angelegt wird. Blasenbildung kann auch bspw. durch reduzierten Druck und gleichzeitiger oder anschließender Entgasung der Lösung erfolgen und entsprechend vermieden werden. In einer Ausführungsform kann auch die Temperatur, bei welcher die wässrige Polymerzusammensetzung P1) auf das Trägermatrial gegossen wird, bei etwa 40 bis 90 °C liegen, oder auch darunter, bspw. max. etwa 90 °C, max. 60 °C, oder max. 40 °C. Die Konzentration der wässrigen Polymerzusammensetzung P1) und die Temperatur können dabei jeweils variiert werden, um eine gewünschte Viskosität der wässrigen Polymerzusammensetzung P1) zu erreichen. Im Rahmen der vorliegenden Erfindung wird die Viskosität der wässrigen Polymerzusammensetzung P1) vor dem Gießen bevorzugt so eingestellt, dass sie sich leicht gießen lässt, ohne nach dem Gießen das Trägermaterial zu verlassen (d.h. vom Trägermaterial herunterzufließen), und gleichzeitig sowohl eine gleichmäßige Verteilung der Folie auf dem Trägermaterial als auch eine einfache zwischenzeitliche oder abschließende Trocknung der gebildeten Folie erlaubt. Die gewünschte Viskosität ist dabei insbesondere auch abhängig von der Art und Weise, wie die Polymerzusammensetzung P1) auf das Trägermaterial gegossen wird, unter anderem durch eine Düse wie bspw. Schlitzdüse, Kaskadendüse, Vorhanggießen oder andere, wobei die Schlitzdüse auch mehrere Schlitze aufweisen kann (z.B. 1, 2 oder 3 Schlitze), um ein gleichzeitiges Gießen mehrere Schichten zu erlauben. So kann im Rahmen der vorliegenden Erfindung bspw. beim Gießen mittels einer Schlitzdüse eine Viskosität der wässrigen Polymerzusammensetzung P1) von etwa max. 30 Pa*s, max. 20 Pa*s oder max. 10 Pa*s vorteilhaft sein (auch je nach Größe der Düsenöffnung), insbesondere wenn nur eine Schicht gleichzeitig gegossen wird. Beim Kaskandenguss, wenn also mehrere Schichten zugleich aufgetragen werden, kann im Zusammenhang mit der vorliegenden Erfindung eine Viskosität der wässrigen Polymerzusammensetzung P1) von nur max. etwa 1 Pa*s, max. 500 mPa*s oder max. 350 mPa*s vorteilhaft sein. Der Fachmann kann hier die Viskosität entsprechend variieren (u.a. durch Konzentration und Temperatur der wässrigen Polymerzusammensetzung P1), s.o.), um sich den weiteren Parametern wie Gießtechnik, anschließende Trocknung und Folienzweck anzupassen. Messungverfahren zur Viskosität sind dem Fachmann bekannt und umfassen bspw. Kegel-Platte Rheometrie nach DIN 53019 bspw. bei einer Temperatur von etwa 25 °C und einer Scherrate von 1/100 s⁻¹, oder durch Hochdruck-Kapillar Rheometrie nach DIN 54811 bestimmt werden.

Die mehrlagige Folie kann über ein- oder mehrlagige Gieß- bzw. Beschichtungswerkzeuge wie z. B. Schlitzdüsen, Rakel, Vorhanggießen, Kaskadenguss, etc. auf ein Stahlband oder eine beheizte Walze aufgetragen werden. Dabei können eine oder mehrere Lagen gleichzeitig aufgetragen werden und die weiteren Lagen wahlweise auf einer anderen Position des Stahlbands oder der Walze. In einer weiteren Ausführung kann eine weitere Lage in einem Nachtrocknungsschritt auf dem freistehenden Film nach dem Ablösen vom Träger (Stahlband oder Walze) aufgebracht werden. Für diese Nachbeschichtung eignen sich insbesondere walzenbasierte Beschichtungsverfahren.
In einer weiteren Ausführung können auch mehrere Stahlband- oder Walzentrockner-Anlagen in der Art kombiniert werden, dass zwei separat hergestellte ein- oder mehrlagige Folien direkt im Anschluss in einem Laminier-Schritt miteinander verbunden werden. Dieser Schritt kann auch mit einer zuvor hergestellten oder kommerziell erhältlichen Folie durchgeführt werden. Der Laminierschritt der Folien kann vor dem Abziehen einer Folie, unmittelbar nach dem Abziehen der Folie und vor der Nachtrocknung der freistehenden Folie, während der Nachtrocknung der freistehenden Folie oder nach der Nachtrocknung, aber vor der Aufwicklung durchgeführt werden. Eine separat durchgeführte Laminierung zweier Folien ist auch möglich. In allen Varianten der Laminierung ist alleine über eine gezielte Einstellung der Restfeuchte in der Folie und entsprechend gewählte Linienlasten eine Laminierung möglich.

Das Gießen der wässrigen Polymerzsuammensetzung kann erfindungsgemäß durch unterschiedliche Techniken erfolgen, unter anderem durch Düsen wie bspw. Schlitzdüse, Kaskadendüse, Vorhanggießen, oder andere, wobei die Schlitzdüse auch mehrere Schlitze aufweisen kann (z.B. 1, 2 oder 3 Schlitze), um ein gleichzeitiges Gießen mehrere Schichten zu erlauben. Die Düse kann dabei auch selbst beheizt sein, um die gewünschte Temperatur der wässrigen Polymerzusammensetzung P1) zum Zeitpunkt des Gießens auf das Trägermaterial aufrecht zu erhalten. Bevorzugte Temperaturen liegen hierbei erfindungsgemäß bei max. etwa 90 °C, bevorzugt max. etwa 60 oder 40 °C. Geeignete Materialien, aus welchen die Düse im Zusammenhang der vorliegenden Erfindung besteht oder welche sie enthält, umfassen unter anderem Stahllegierungen (z.B. austenitischer Stahl, rostfreier Stahl, passivierter Stahl (Römpp Online, Version 3.5, Georg Thieme Verlag 2009), Stahllegierungen bspw. nach AISI/SAE/DIN EN 10088; bspw. Stahl umfassend etwa 10 bis 22 (oder 12 bis 20, 13 bis 17) Gew% Chrom, etwa 0,02 bis 0,2 (oder 0,05 bis 0,15 oder 0,05 bis 0,12) Gew% Kohlenstoff, und/oder etwa 9 bis 15 Gew% Nickel, ggf. auch umfassend Mangan, Molybdän, Vanadium, und/oder Titan), Titanlegierungen, Wolframkarbide, Korrosionsresistente Legierungen (z.B. MAT mit etwa 19-22 Gew% Nickel, 18-20 Gew% Molybdän,, 1-2 Gew% Titan), und/oder Hastelloy.

Das Gießen eines Polymers P2) zur Bildung einer Schicht S2) kann generell analog erfolgen wie hier anhand des Gießens der Polymerzusammensetzung P1) zur Bildung der Schicht S1) beschrieben.

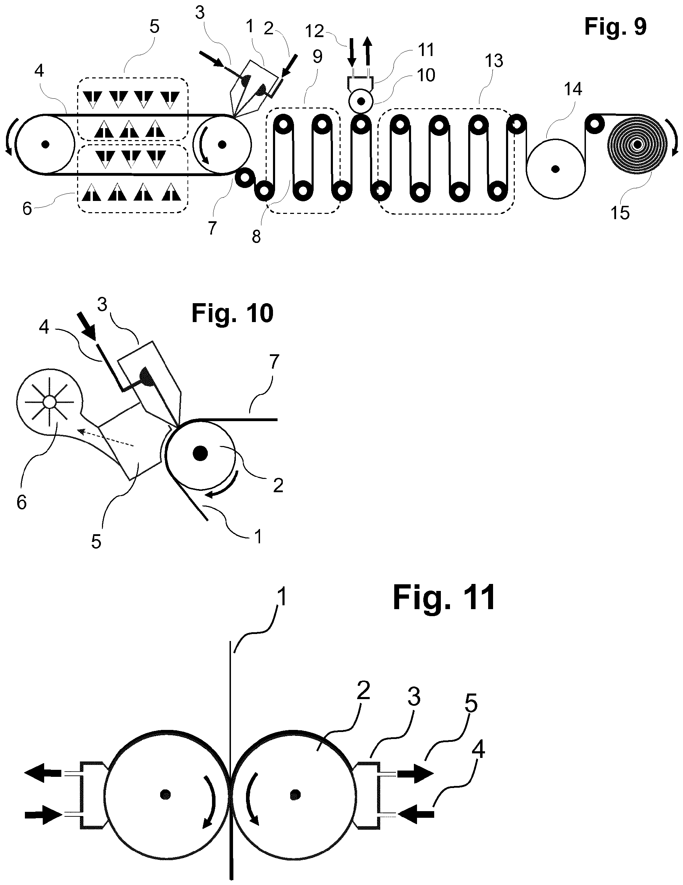

Das Trägermaterial, auf welches die wässrige Polymerzusammensetzung P1) im Rahmen der vorliegenden Erfindung gegossen wird, besteht aus einem Material, welches die Folienbildung und ggf. Polymerisierung und ggf. Trocknung der Folie erlaubt. Das Trägermaterial kann dabei als Lauf- oder Fließband arrangiert sein, welches sich unter der Gießvorrichtung (bspw. Düse wie hier beschrieben und exemplarisch dargestellt) im Laufe des Gießvorgangs vorbeibewegt, um die gegossene wässrige Polymerzusammensetung P1) als Folie aufzunehmen. Solche Konstellationen sind hier auch exemplarisch beschrieben und in den Figuren gezeigt. Auch möglich ist es, die wässrige Polymerzusammensetzung P1) auf das Trägermaterial unter verringerten Druckbedingungen gegenüber dem Umgebungsdruck der Gießvorrichtung (bspw. Düse) zu gießen, bspw. indem der Düse eine Unterdruckkammer vorgeschaltet ist, so dass weniger Luft in den Gießvorgang eingeschleppt wird wie auch exemplarisch in Figur 10 beschrieben und gezeigt.

Unter "Trägermaterial" wird im Zusammenhang mit der Erfindung dasjenige Material verstanden, auf welches die wässrige Polymerzusammensetzung P1) gegossen wird. Es ist dabei auch möglich, dass sich das Trägermaterial auf einem anderen Material befindet, welches aber erfindungsgemäß selbst nicht in Kontakt mit der wässrigen Polymerzusammensetzung P1) kommt. So kann es bspw. sein, dass die wässrige Polymerzusammensetzung P1) auf eine Polyvinylalkoholschicht gegossen wird, welche selbst auf einem Laufband aus Stahl liegt. Das Trägermaterial im Sinne der vorliegenden Erfindung wäre in diesem zuletzt genannten Fall die Polyvinylalkoholschicht.

Geeignete Trägermaterialien im Zusammenhang mit der vorliegenden Erfindung können bspw. metallhaltige Trägermaterialien, eine Schicht S2) und/oder auch eine vorhergehende Schicht S1) wie hier weiter beschrieben, Vliesstoffe, und/oder andere Polymere sein. "Metallhaltige Trägermaterialien" enthalten oder bestehen beispielsweise aus Aluminium, Eisenlegierung wie Stahl (z.B. austenitischer Stahl, rostfreier Stahl (stainless steel), passivierter Stahl (Römpp Online, Version 3.5, Georg Thieme Verlag 2009), Stahllegierungen bspw. nach AISI/SAE/DIN EN 10088; bspw. Stahl umfassend etwa 10 bis 22 (oder 12 bis 20, 13 bis 17) Gew% Chrom, etwa 0,02 bis 0,2 (oder 0,05 bis 0,15 oder 0,05 bis 0,12) Gew% Kohlenstoff, und/oder etwa 9 bis 15 Gew% Nickel, ggf. auch umfassend Mangan, Molybdän, Vanadium, und/oder Titan). "Metallhaltige Trägermaterialien" sind vorzugsweise rostfrei oder weitestgehend rostfrei (stainless steel). Polymere als Trägermaterialien können bspw. enthalten oder bestehen aus solchen wie hier als Schicht S2) oder auch S1) beschrieben. Trägermaterialien können u.a. auch enthalten oder bestehen aus orientiertem Polypropylen (PP), Polyethylen (PE), Polystyrol (PS), Polyalkylenglykol (PAG; bspw. Polyethylenglykol PEG), Polyolefinen, Polyethylenterephthalaten (PET), Polyvinylchloriden (PVC), Polytetrafluorethylen (PTFE), Polyvinylakoholen (PVA oder PVOH, hier synonym verwendet), und/oder Polyethylenoxide (bspw. mit Mw mind. etwa 70.000 bis etwa 1.000.000). PVOH kann dabei auch in verschiedenen Varianten eingesetzt werden, bspw. mit einem Verseifungsgrad von 75 mol% bis 98 mol%, und/oder einer 4%igen Lösung in Wasser gemäß DIN 53015 bspw. von 1 mPa*s bis 60 mPa*s, und/oder PVOH, die weitere Comonomere wie Methylmethacrylat, Methylacrylat, 2-Acrylamido-2-methylpropansulfonsäure, Maleinsäure, und/oder Itaconsäure einpolymerisiert enthalten; ebenso und beispielsweise auch PVOH Co-Polymere mit dem Markennamen Nichigo® G-Polymer von Nippon Gohsei Group, und deren Mischungen. Das Trägermaterial, auf welches die wässrige Polymerzusammensetzung P1) erfindungsgemäß gegossen wird, stellt in sich auch eine Schicht dar und wird hier daher generell auch als "Trägermaterialschicht" bezeichnet.

Die Trägermaterialschicht kann im Rahmen der vorliegenden Erfindung auch weiter beschichtet sein mit Mitteln oder Stoffen, welche ein späteres Ablösen der darauf gegossenen Polymerzusammensetzung P1) erleichtern. Als Beispiel hierfür können aufgeführt werden Mittel und Stoffe mit anti-Haft-Wirkung, wie z.B. Talk, Tenside, silikonhaltige Tenside (u.a. Zonyl-FSP), Kunststofffolien (bspw. aus Polyolefin, Polyethylen, Polypropylen, Polyvinylchlorid, Polystyrol, Silikon) und/oder Wachsschichten.

Die wässrige Polymerzusammensetzung P1) bildet erfindungsgemäß nach dem Gießen auf das Trägermaterial bzw. die Trägermaterialschicht die Schicht S1) als Bestandteil der erfindungsgemäß herzustellenden funktionellen wasserlöslichen Folie.

Im Rahmen der vorliegenden Erfindung ist es auch möglich, dass eine oder mehrere geeignete Trägermaterialschichten wie hier beschrieben nicht Bestandteil der erfindungsgemäß herzustellenden Folie werden, sondern bspw. der besseren Abziehbarkeit der gegossenen Folie vom Trägermaterial selbst dienen. So kann bspw. das Polymer P1) auf ein geeignetes Trägermaterial wie hier beschrieben gegossen werden, um eine Schicht S1) auszubilden, um anschließend (z.B. nach dem Trocknen von S1)) die Schicht S1) und ggf. weitere darauf gegossene Schichten S1) und/oderS2) abzurollen, wobei sie von der Trägerschicht abgezogen wird. Nähere Beispiele und Erläuterungen hierzu finden sich in den Figuren und den Beispielen. So werden im Zusammenhang mit der vorliegenden Erfindung bevorzugt solche Trägermaterialien nicht Bestandteil der herzustellenden Folie, welche nicht oder nur schwer löslich in Wasser sind. Hierzu zählen bspw. (orientiertes) Polypropylen (PP), Polyethylenterephthalat, Polyvinylchlorid (PVC), Polystyrol, Polytetrafluorethylen, und andere.

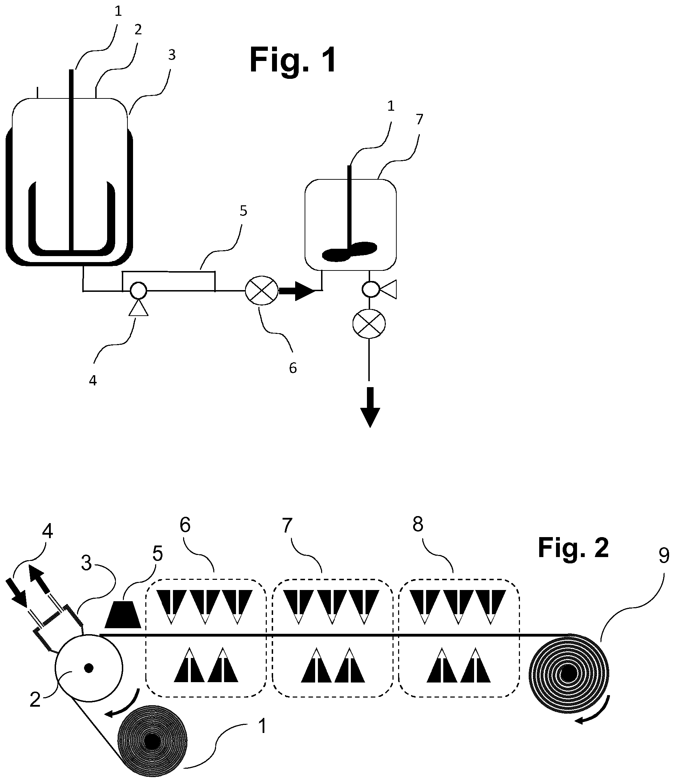

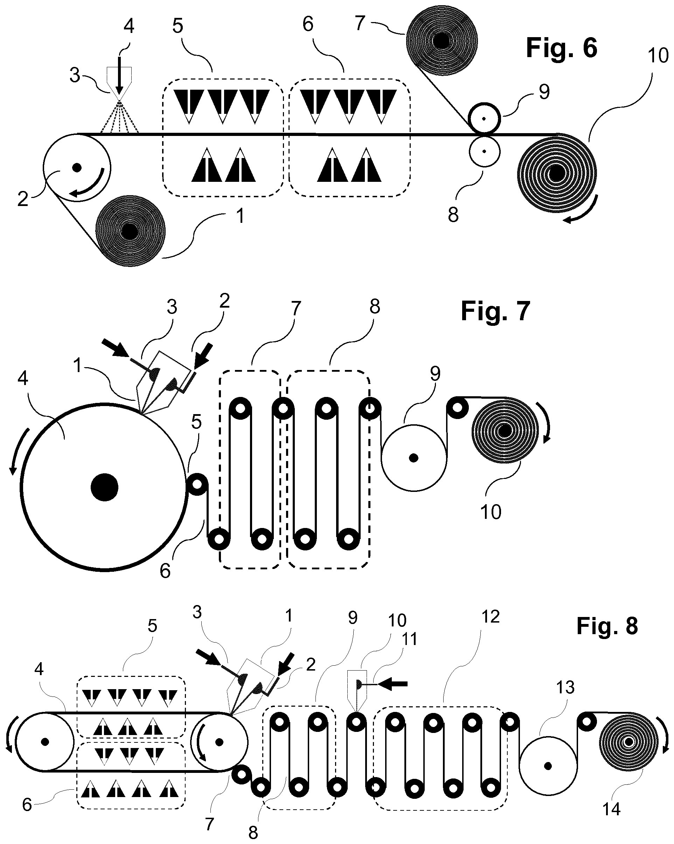

Im Rahmen der vorliegenden Erfindung ist es auch möglich, dass eine oder mehrere geeignete Trägermaterialschichten wie hier beschrieben auch Teil der erfindungsgemäß herzustellenden Folie werden, indem sie sich über einen wesentlichen Teil (mind. etwa 50%, 55%, 60%, 65%, 70%, 75%, 80%, 85%, 90%, 95%, oder 98%) der Fläche der Schicht S1) wie hier beschrieben und dargestellt verbinden. Eine Verbindung erfolgt dabei insbesondere durch Adhäsionskräfte zwischen den einzelnen Schichten, wobei ein Ineinanderfließen der einzelnen Schichten weitestgehend vermieden werden sollte, wenn eine funktionelle Trennung der Schichten aufgrund unterschiedlicher funktioneller Bestandteile und/oder unterschiedlicher Löslichkeit (bspw. bei unterschiedlichen Temperaturen, pH-Werten, etc.) angestrebt wird. Dabei kann ein geringfügiges Ineinanderfließen der Folien dennoch geduldet oder gewünscht sein, bspw. um das Verkleben der einzelnen Schichten weiter zu verstärken. Die Adhäsion oder Verklebungsneigung (z.B. auch durch Ineinanderfließen) der einzelnen Schichten kann der Fachmann nach gängigen Methoden erreichen bzw. variieren, bspw. durch Steuerung der Restfeuchte, Viskosität, Dichte, und/oder Hydrophobizität der Schichten. Dabei ist es, wie hier weiter ausgeführt, im Rahmen der vorliegenden Erfindung möglich, Schichten der herzustellenden Folie sowohl einzeln nacheinander zu gießen (mit oder ohne zwischenzeitliches trocknen; nacheinander gießen bspw. mittels Rakel wie auch in den Beispielen und unter anderem in Figuren 2, 13 und 14 gezeigt), oder auch gleichzeitig bspw. durch Mehrschlitzdüsen oder Kaskadenguss oder Vorhanggießen oder einer Kombination aus ein- und mehrlagigem Gießen (siehe z.B. Figuren 8 und 9). Geeignete Trägermaterialien, welche sich in diesem Sinne als Bestandteil der erfindungsgemäß herzustellenden Folie eignen, umfassen insbesondere wasserlösliche Stoffe, bspw. eine Schicht S2) wie hier weiter beschrieben, Vliesstoffe, oder (insbesondere wasserlösliche) Polymere wie u.a. Polyalkylenglykol (PAG; bspw. Polyethylenglykol PEG), und/oder Polyvinylakoholen (PVA oder PVOH, hier synonym verwendet), und/oder Polyethylenoxide (bspw. mit Mw mind. etwa 70.000, bis etwa 1.000.000). PVOH kann dabei auch in verschiedenen Varianten eingesetzt werden, bspw. mit einem Verseifungsgrad von 75 mol% bis 98 mol%, und/oder einer 4%igen Lösung in Wasser gemäß DIN 53015 bspw. von 1 mPa*s bis 60 mPa*s, und/oder PVOH bestehend aus weiteren Comonomeren wie Methylmethacrylat, Methylacrylat, 2-Acrylamido-2-methylpropansulfonsäure, Maleinsäure, und/oder Itaconsäure; ebenso und beispielsweise auch PVOH Co-Polymere mit dem Markennamen Nichigo® G-Polymer von Nippon Gohsei Group, und deren Mischungen. Beispielsweise PVOH-Schichten können zur weiteren mechanischen Stabilisierung der verfassungsgemäß herzustellenden wasserlöslichen funktionellen Folie dienen und daher Bestandteil der Folie sein. Solche Trägermaterialien wie hier dargestellt und exemplarisch aufgelistet, welche sich als Bestandteil der erfindungsgemäß herzustellenden Folie eignen, werden hierin auch allgemein als "inkludierbare Trägermaterialien" bezeichnet. Solche inkludierbaren Trägermaterialien können prinzipiell auch als Zwischen- oder Abschlussschicht als Teil der erfindungsgemäß einzusetzenden Folie aufgebracht werden, bspw. indem sie auf eine Schicht S1) oder eine weitere, darüber liegende Schicht wie hier weiter ausgeführt aufgebracht (z.B. gegossen oder laminiert) werden, entweder zeitversetzt oder zeitgleich mit der darunterliegenden Schicht. Als Abschlussschicht der erfindungsgemäß herzustellenden Folie eignet sich u.a. insbesondere PVOH wie hier beschrieben, da dadurch eine erhöhte mechanische Belastbarkeit bei geringer Hygroskopie erreicht werden kann. Das Gießen solcher Polymerschichten ist dem Fachmann bekannt und auch hier oben als Teil des Standes der Technik beschrieben.

Eine gleichbleibende Dicke und/oder Oberfläche der Zwischen- oder Abschlussschicht der erfindungsgemäß herzustellenden Folie kann durch im Stand der Technik bekannte Maßnahmen erreicht werden, bspw. durch ein Streichmesser (doctor blade; bspw. BTG, Norcross Ga) oder Rakel wie oben beschrieben, welche jeweils bevorzugt keramikbeschichtet sind.

Auch ein Bedrucken oder Prägen der erfindungsgemäß herzustellenden Folie ist möglich, indem bspw. Gravurwalzen oder flexographische Walzen mit gewünschten Mustern, Motiven, oder Schriftzügen eingesetzt werden wie bspw. in US 5,458,590 oder US 7,727,946 beschrieben. Die hier erfindungsgemäß einzusetzende Folie eignet sich hierfür besonders, zumal sie mit mehreren Schichten auch eine Dicke erreichen kann, welche besonders tiefe und damit beständige Prägungen ermöglicht. Bei Bedrucken der Folie wie hier beschrieben ist es bevorzugt, mechanisch belastbare Abschlussschichten auf die erfindungsgemäße Folie aufzubringen, bspw. PVOH wie hier insbesondere als inkludierbares Trägermaterial beschrieben.

Die erfindungsgemäße mehrlagige Folie kann, wie gesagt, zum Schluss oder in einem Zwischenschritt während dem Aufbau des Multilayers bedruckt werden. Dieser Druckschitt kann direkt im Anschluss an die Folienherstellung inline, in einem separaten Druck- bzw. Convertingprozess oder inline mit der Podherstellung geschehen. Geeignete Druckmethoden sind Tintenstrahldruck, sowie Tief- und Flachdruckverfahren wie Flexodruck, Gravurdruck oder Offsetdruck.

Nach der Trocknung der zweiten Schicht S2) und vor dem Laminierschritt, wie z. B. dargestellt in der Verfahrensvariante gem. Fig. 6, können auf einer der später innen liegenden Grenzflächen Muster oder Information aufgedruckt werden. Dadurch dass sich das aufgedruckte Objekt auf einer innen liegenden Fläche befindet, ist das Objekt gegen äußere Einflüsse wie z. B. kratzen, Umgebungsfeuchte, Kontakt zu klebrigen Oberflächen oder Kontakt zu sonstigen Umgebungseinflüssen geschützt. Geeignete Druckverfahren umfassen Tief- und Flachdruckverfahren wie z. B. Flexodruck, Gravurdruck, Offsetdruck und Inkjetdruck.

Eine weitere Möglichkeit ist das Aufbringen eines Einlegers oder Etiketts auf eine der innen liegenden Grenzflächen vor dem Laminier-Schritt. In diesem Fall wird der Einleger beim Laminieren umschlossen und auf der innen liegenden Grenzfläche fixiert. Ein Vorteil dieses Verfahrens ist die Dimensionsstabilität in der späteren Verarbeitung der Folie z. B. beim Tiefziehen in der Herstellung von Unit dose Kapseln, Pouches, Pods, und Ähnlichem. In diesem Verarbeitungsschritt wird das Druckbild verzerrt, was z. B. die Lesbarkeit von Gefahrenhinweisen beeinträchtigen kann.

Die Herstellung der Folie kann erfindungsgemäß auch durch ein Laminierungsverfahren erfolgen. Beim Laminieren werden zwei oder mehrere Schichten der Mehrschichtfolie flächig miteinander verklebt. Erfolgt die Herstellung der Folie ausschließlich durch Laminierung, werden alle Schichten der Folie bevorzugt flächig miteinander verklebt. Dabei kann die Laminierung sukzessive (Schicht für Schicht) erfolgen oder es werden Laminate, die bereits aus mehreren Schichten bestehen, miteinander verbunden. Die Herstellung der Folie kann auch durch ein nass-in-nass-Auftragsverfahren erfolgen. Weiterhin können zur Herstellung der Folie Kombinationen der zuvor genannten Herstellungsverfahren eingesetzt werden.

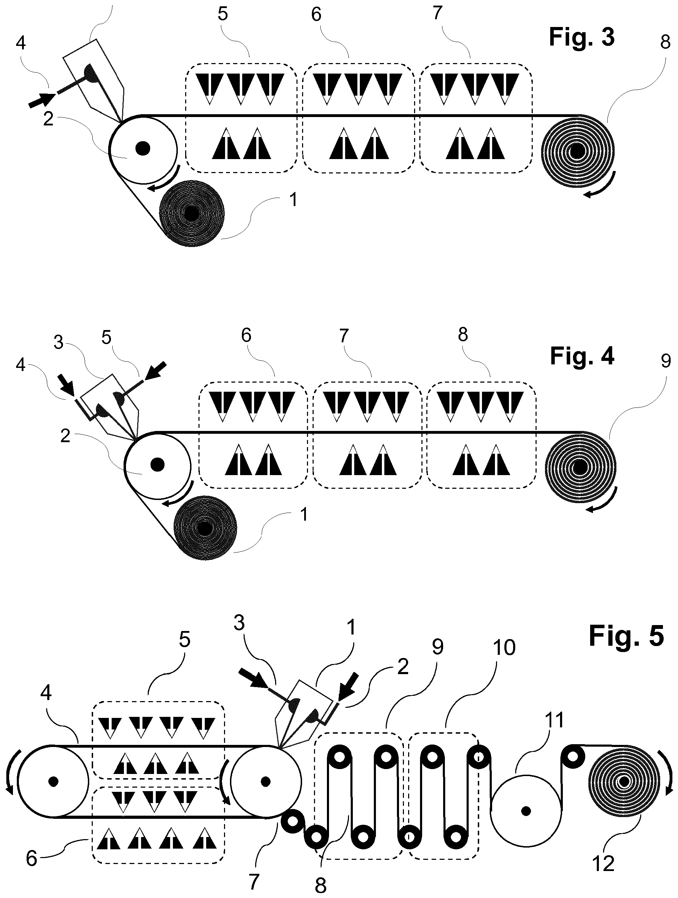

Nach dem Auftragen der Schicht S1) auf das Trägermaterial kann optional ein Trocknungsschritt erfolgen, bei welchem der Restfeuchtegehalt der Polymerzusammensetzung reduziert wird, um die Folienbildung zu beschleunigen und die Reißfestigkeit (mechanische Stabilität) zu erhöhen. Eine solche Trocknung kann durch dem Fachmann bekannte Maßnahmen erfolgen. Beispielsweise kann die Polymerzusammensetzung auf dem Trägermaterial nach dem Gießen verbleiben, bis ein gewünschter Trocknungsgrad erreicht ist. Zum Beispiel kann die Polymerzusammensetzung P1) auf ein Laufband gegossen werden (entweder direkt mit dem Laufband als Trägermaterial, oder indirekt auf ein Trägermaterial, das sich direkt oder indirekt auf dem Laufband befindet), welches über eine ausreichende Lauflänge verfügt, so dass die Polymerzusammensetzung ausreichend Zeit zur Trocknung (z.B. durch einen Luftstrom auf die zu trocknende Oberfläche) hat, bis sie abgezogen und nach einer optionalen Nachtrocknung aufgerollt werden kann (s. bspw. Figur 5). Andere geeignete Trocknungsverfahren umfassen u.a. IR-Strahlung (oder andere Strahlungstrocknungstechniken), und/oder das Aufrollen der durch das Gießen der Polymerzusammensetzung gebildeten Schicht S1) auf eine Wärmetrommel oder einen Heizzylinder (s. bspw. Figur 7). Die Restfeuchte erlaubt dabei erfindungsgemäß entweder das Auftragen und ggf. Verkleben mit einer oder mehrere weiterer Schichten, oder das Aufrollen der S1)-enthaltenden Folie zur weiteren Verwendung. In einer Ausführungsform liegt die Restfeuchte nach dem Trocknungsschritt bei max. etwa 15% oder 10%, bezogen auf die Gesamtmasse der Schicht. Wird die erfindungsgemäße herzustellende Folie vom Trägermaterial getrennt, kann sie als freistehende Folie mit dem Fachmann bekannten Methoden (z.B. Schlitzdüsen- oder Umluft Trockner) nachgetrocknet werden. Die Messung der Restfeuchte kann über dem Fachmann bekannte Verfahren durchgeführt werden bspw. gravimetrisch oder über online Bestimmung des Wassergehaltes gemäß DIN EN ISO 15512 durch bspw. NIR-Messung, VIS/NIR-Messung, Mikrowellenresonanz-Messung; oder auch offline bspw. durch Karl-Fischer Titration, und Kalibrierung der Ergebnisse der genannten Messmethoden auf Basis der DIN EN ISO 15512, wobei online bevorzugt ist.

Auf die Schicht S1) wie hier dargestellt können optional noch eine oder mehrere weitere Schichten aufgetragen werden, beispielsweise solche wie hier als Schicht S1) (bzw. Polymerzusammensetzung P1)), als inkludierbare Trägermaterialien oder als Schicht S2) (bzw. Polymer P2)) beschrieben, oder auch solche wie hier als Trägermaterialschicht beschrieben, welche dann nicht zwingend als Teil der erfindungsgemäß herzustellenden Folie verbleiben muss.

Das optionale Auftragen der Schicht S2) erfolgt dabei erfindungsgemäß in geeigneter Weise wie dem Fachmann bekannt (s. oben), beispielsweise auch genauso wie oben für das Gießen der Polymerzusammensetzung P1) zur Bildung der Schicht S1) beschrieben. Dabei ist es auch möglich, dass zunächst eine Schicht S2) auf ein geeignetes Material wie hier analog für S1) als Trägermaterial beschrieben aufgetragen wird, und dann die Schicht S2) selbst als Trägermaterial für die Schicht S1) dient. Die Erfindung wie hier vorgelegt erlaubt eine freie Wahl der Reihenfolge der aufgetragenen Schichten. Die erfindungsgemäß herzustellende funktionelle wasserlösliche Folie enthält allerdings wie beschrieben mindestens eine Schicht S1).

Wie auch nach dem Auftragen der Schicht S1) kann nach dem Aufragen der Schicht S2) auf das Trägermaterial optional ein Trocknungsschritt erfolgen, bei welchem der Restfeuchtegehalt der Polymerzusammensetzung reduziert wird, um die Filmbildung zu beschleunigen und die Reißfestigkeit (mechanische Stabilität) zu erhöhen. Eine solche Trocknung kann durch dem Fachmann bekannte Maßnahmen erfolgen, z.B. durch einen Luftstrom auf die zu trocknende Oberfläche. Beispielsweise kann die Polymerzusammensetzung auf dem Trägermaterial nach dem Gießen verbleiben, bis ein gewünschter Trocknungsgrad erreicht ist. Zum Beispiel kann Polymer P2) auf ein Laufband gegossen werden (entweder direkt mit dem Laufband als Trägermaterial (s. bspw. Figur 5), oder indirekt auf ein Trägermaterial, das sich direkt oder indirekt auf dem Laufband befindet), welches über eine ausreichende Lauflänge verfügt, so dass die Polymerzusammensetzung ausreichend Zeit zur Trocknung hat, bis sie abgezogen und nach einer optionalen Nachtrocknung aufgerollt werden kann. Andere geeignete Trocknungsverfahren umfassen u.a. IR-Strahlung oder andere Strahlungstrocknungstechniken, und/oder das Aufrollen der durch das Gießen der Polymerzusammensetzung gebildeten Schicht auf eine Wärmetrommel oder einen Heizzylinder (s. bspw. Figur 7). Die Restfeuchte erlaubt dabei erfindungsgemäß entweder das Auftragen einer oder mehrere weiterer Schichten, oder das Aufrollen der S2)-enthaltenden Folie zur weiteren Verwendung. In einer Ausführungsform liegt die Restfeuchte nach dem Trocknungsschritt bei max. etwa 15% oder 10%, bezogen auf die Gesamtmasse der Schicht.

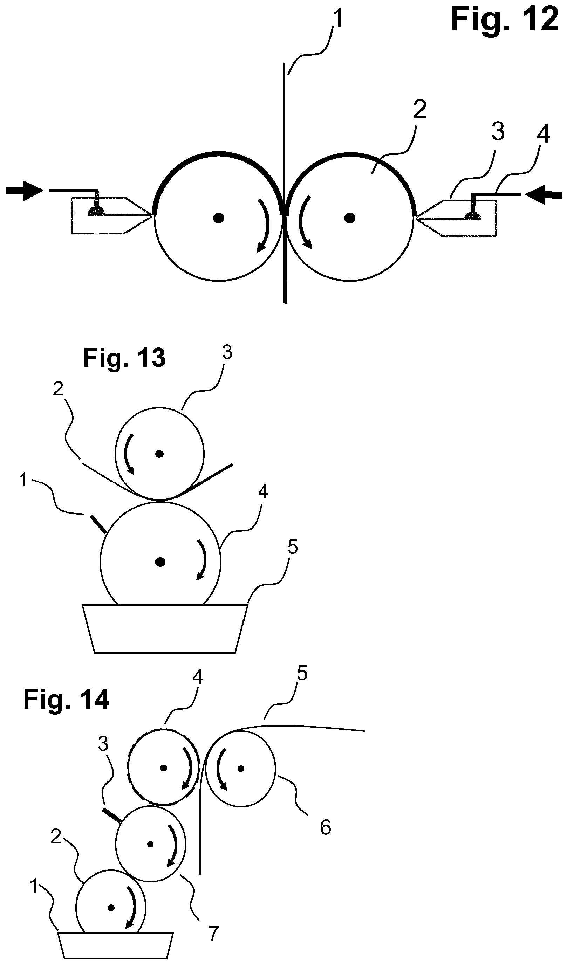

Anschließend können je nach Bedarf eine oder mehrere weitere Schichten aufgetragen werden, beispielsweise eine oder mehrere Schichten S1), S2), und/oder inkludierbare Trägermaterialien, jeweils optional mit einem Trocknungsschritt zwischen dem Auftragen der Schichten. Die Schichten können dabei je nach Bedarf in beliebiger Reihenfolge aufgetragen werden, gleichzeitig oder nacheinander, mit oder ohne zwischenzeitlichen Trocknungsschritt wie hierfür Schichten S1), S2) und beschrieben. Auch das gleichzeitige Gießen mehrerer Schichten S1), S2), und/oder inkludierbarer Trägerschichten ist prinzipiell möglich, beispielsweise durch Mehrschlitzdüsen oder Kaskadensysteme wie hier oben beschrieben. Ebenso ist eine beidseitige Beschichtung möglich (s. bspw. Figuren 11 und 12).

Nachdem alle Schichten aufgetragen wurden, welche von der erfindungsgemäß herzustellenden funktionellen wasserlöslichen Folie umfasst sind, wird die Folie wie beschrieben getrocknet (sofern nicht bereits zuvor für die einzelnen Schichten geschehen), bevorzugt bis zu einem Restfeuchtegehalt von max. etwa 15% oder 10%, bezogen auf die Gesamtmasse der Folie. Dadurch soll u.a. die Reißfestigkeit erhöht und ein Aufrollen der Folie ermöglicht werden.

Die erfindungsgemäß hergestellte funktionelle wasserlösliche Folie umfasst zumindest eine Schicht S1) wie hier dargestellt, kann aber auch mehrere Schichten enthalten, bspw. eine oder mehrere Schichten S1), S2), und/oder inkludierbare Trägermaterialien. In einer Ausführungsform der vorliegenden Erfindung umfasst die Folie mindestens 2 oder 3 Schichten. In einer Ausführungsform der vorliegenden Erfindung umfasst die Folie mindestens eine Schicht S1), eine Schicht S2), und eine weitere Schicht ausgewählt aus der Gruppe bestehend aus S1, S2, und inkludierbare Trägermaterialien.

Die Dicke der einfachen Schicht S1) wie hier dargestellt kann je nach Bedarf variieren. So kann naturgemäß eine dickere Schicht mehr funktionelle Bestandteile enthalten und weist eine höhere mechanische Stabilität auf. In einer Ausführungsform weist die Schicht S1) der erfindungsgemäß herzustellenden Folie eine Dicke von etwa 10 bis 200 µm auf, bevorzugt 20-80 µm, jeweils gemessen nach Trocknung bei einem Restfeuchtegehalt von max. etwa 15%, gemessen an der Gesamtmasse der Schicht S1). Außerdem ist die Dicke der erfindungsgemäß herzustellenden Folie im Verhältnis zur Länge und Breite in einer Ausführungsform klein. Vorzugsweise ist die Dicke der Folie um einen Faktor von wenigstens 10, besonders bevorzugt wenigstens 20, insbesondere wenigstens 50, speziell wenigstens 100, spezieller wenigstens 500 kleiner als die Länge der größten Längsachse. Es ist wie hier auch dargestellt ebenfalls möglich, dass mehrere Folienschichten auch übereinander gelagert und ggf. verklebt werden können, um durch Mehrschichtigkeit noch dickere Gesamtschichten zu erzeugen; bspw. in der Anwendung als Hülle oder Scheibe bzw. Pouch oder Pod. Auch lässt sich die erfindungsgemäß herzustellende Folie besser bedrucken wie hier beschrieben, je dicker sie ist.

Die Dicke der gesamten erfindungsgemäß herzustellenden Folie liegt bevorzugt unter 3 mm, unter 1mm, unter 500 µm, unter 300 µm, unter 200 mm, oder unter 100 µm. Bei Herstellung einer Folie, welche mehrere Schichten mit einer Vielzahl, insbesondere auch unterschiedlicher, funktioneller Bestandteile umfasst, kann die Dicke der gesamten erfindungsgemäß herzustellenden Folie auch deutlich darüber liegen, bspw. als Hülle oder Scheibe bzw. Pouch oder Pod, die vorwiegend aus der erfindungsgemäß herzustellenden Folie bestehen.

Die Polymerzusammensetzung P1) der erfindungsgemäß herzustellenden Folie weist vorteilhaften Eigenschaften auf. Ohne an eine Theorie gebunden zu sein, können sich zwischen dem wachsenden Polymer und der Polyetherkomponente Wasserstoffbrücken ausbilden und die Eigenschaften der erhaltenen Polymerzusammensetzung beeinflussen. So lassen sich Polymerzusammensetzung P1) mit einem hohen Gehalt an der Polyetherkomponente erzielen, wie sie durch Mischung des separat hergestellten Polymers mit der Polyetherkomponente nicht hergestellt werden können. Ein radikalischer Polymerabbau findet dabei vorteilhafterweise nicht statt.

Zur Herstellung der erfindungsgemäßen Mehrschichtfolien werden vorzugsweise Polymerzusammensetzungen P1) mit einer niedrigen Glasübergangstemperatur T_{G} eingesetzt. Vorzugsweise weisen die zur Herstellung der erfindungsgemäßen Mehrschichtfolien eingesetzten Polymerzusammensetzungen P1) eine Glasübergangstemperatur T_{G} im Bereich von 0 bis 80 °C, vorzugsweise von 0 bis 60 °C, 0 bis 45 °C, insbesondere 0 bis 30° C, auf.

Die im Rahmen dieser Erfindung beschriebenen Glasübergangstemperaturen (Tg) können mittels Differential Scanning Calorimetry (DSC) bestimmt werden wie hier beschrieben und dem Fachmann allgemein bekannt.

Das gewichtsmittlere Molekulargewicht M_{w} kann mittels dem Fachmann allgemein bekannten Verfahren bestimmt werden, bspw. mittels GPC wie dem Fachmann bekannt und hier beispielhaft beschrieben.

In einer bevorzugten Ausführung liegen die zur Herstellung der erfindungsgemäßen wasch- und reinigungsaktiven Polymerfolien eingesetzten Polymerzusammensetzungen P1) in Form einer transparenten Folie vor.

### Monomer A

Wie bereits beschrieben erfolgt die Herstellung der Polymerzusammenstzung P1) durch radikalische Polymerisation der Monomerzusammensetzung M1) in Gegenwart wenigstens einer Polyetherkomponente PE), wobei die eingesetzte Monomerzusammensetzung M1) wenigstens ein Monomer A) enthält, das ausgewählt ist unter α,β-ethylenisch ungesättigten Mono- und Dicarbonsäuren, Salzen α,β -ethylenisch ungesättigter Mono- und Dicarbonsäuren, Anhydriden α,β - ethylenisch ungesättigter Mono- und Dicarbonsäuren und Mischungen davon.

In einer speziellen Ausführungsform besteht die Monomerzusammensetzung M1) nur aus α,β - ethylenisch ungesättigten Carbonsäuren, Salzen α,β -ethylenisch ungesättigter Carbonsäuren und Mischungen davon.

Die α,β -ethylenisch ungesättigte Carbonsäure ist vorzugsweise ausgewählt unter Acrylsäure, Methacrylsäure, Ethacrylsäure Maleinsäure, Fumarsäure, Itaconsäure, α-Chloracrylsäure, Crotonsäure, Citraconsäure, Mesaconsäure, Glutaconsäure und Aconitsäure. Geeignete Salze der zuvor genannten Säuren sind insbesondere die Natrium-, Kalium- und Ammoniumsalze sowie die Salze mit Aminen oder Aminoalkoholen. Die Monomere A) können als solche oder als Mischungen untereinander eingesetzt werden. Die angegebenen Gewichtsanteile beziehen sich sämtlich auf die Säureform.

Bevorzugt wird die wenigstens eine α,β -ethylenisch ungesättigte Carbonsäure in nicht neutralisierter Form zur Polymerisation eingesetzt. Werden die α,β -ethylenisch ungesättigten Carbonsäuren in teilweise neutralisierter Form zur Polymerisation eingesetzt, so sind die Säuregruppen bevorzugt zu höchstens 50 Mol-%, besonders bevorzugt zu höchstens 30 Mol-% neutralisiert.

Besonders bevorzugt ist das Monomer A) ausgewählt unter Acrylsäure, Methacrylsäure, Maleinsäure, Fumarsäure, Itaconsäure, Salzen der zuvor genannten Carbonsäuren und Mischungen davon.

Insbesondere ist das Monomer A) ausgewählt unter Acrylsäure, Methacrylsäure, Salzen der Acrylsäure, Salzen der Methacrylsäure und Mischungen davon.

In einer speziellen Ausführungsform wird als Monomer A) ausschließlich Acrylsäure eingesetzt.

Das Monomer A) wird vorzugsweise in einer Menge von 50 bis 100 Gew.-%, besonders bevorzugt 60 bis 100 Gew.-%, bezogen auf das Gesamtgewicht der Monomerzusammensetzung M1), eingesetzt.

In einer bevorzugten Ausführungsform besteht die Monomerzusammensetzung M1) zu mindestens 50 Gew-%, bevorzugt zu mindestens 80 Gew.-%, insbesondere zu mindestens 90 Gew.-%, bezogen auf das Gesamtgewicht der Monomerzusammensetzung M1), aus Acrylsäure und/oder Acrylsäuresalzen.

### Monomer B)

Die Monomerzusammensetzung M1) kann zusätzlich zu den Monomeren A) wenigstens ein Monomer B) enthalten, das ausgewählt ist unter ungesättigten Sulfonsäuren, Salzen ungesättigter Sulfonsäuren, ungesättigten Phosphonsäure, Salzen ungesättigter Phosphonsäuren und Mischungen davon.

Das Monomer B) ist vorzugsweise ausgewählt unter 2-Acrylamido-2-methylpropansulfonsäure, Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäure, Vinylphosphonsäure, Allylphosphonsäure, Salzen der zuvor genannten Säuren sowie Mischungen davon.

Bevorzugt als Monomer B) ist 2-Acrylamido-2-methylpropansulfonsäure.

Geeignete Salze der zuvor genannten Säuren sind insbesondere die Natrium-, Kalium- und Ammoniumsalze sowie die Salze mit Aminen. Die Monomere B) können als solche oder als Mischungen untereinander eingesetzt werden. Die angegebenen Gewichtsanteile beziehen sich sämtlich auf die Säureform.

Bevorzugt besteht die Monomerzusammensetzung M1) dann zu mindestens 50 Gew-%, besonders bevorzugt zu mindestens 80 Gew.-%, insbesondere zu mindestens 90 Gew.-%, bezogen auf das Gesamtgewicht der Monomerzusammensetzung M1), aus Monomeren A) und B). Wenn die Monomerzusammensetzung M1) wenigstens ein Monomer B) enthält, so wird dieses vorzugsweise in einer Menge von 0,1 bis 50 Gew.-%, besonders bevorzugt 1 bis 25 Gew.-%, bezogen auf das Gesamtgewicht der Monomerzusammensetzung M1), eingesetzt.

### Monomere C)

Die Monomerzusammensetzung M1) kann zusätzlich wenigstens ein weiteres von den säuregruppenhaltigen Monomeren und deren Salzen verschiedenes Monomer (= Monomer C) enthalten.

Die Monomerzusammensetzung M1) kann somit folgende Monomerzusammensetzungen aufweisen: A) oder A) + B) oder A) + C) oder A) + B) + C).

Bevorzugt enthält die Monomerzusammensetzung M1) zusätzlich wenigstens ein Monomer C), ausgewählt unter
C1) Stickstoffheterocyclen mit einer radikalisch polymerisierbaren α,β-ethylenisch ungesättigten Doppelbindung,
C2) Verbindungen der allgemeinen Formeln (I.a) und (I.b) 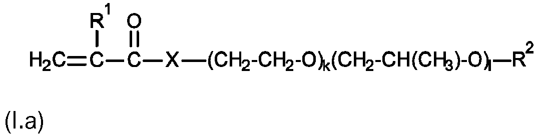 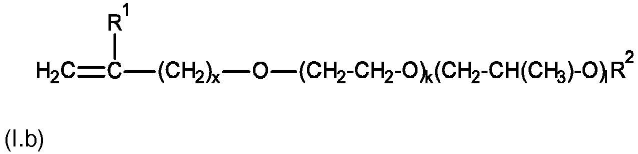 worin
   die Reihenfolge der Alkylenoxideinheiten beliebig ist,
   x für 0, 1 oder 2 steht,
   k und l unabhängig voneinander für eine ganze Zahl von 0 bis 100 stehen, wobei die Summe aus k und l mindestens 2 beträgt, vorzugsweise mindestens 5 beträgt,
   R¹ für Wasserstoff oder C₁-C₈-Alkyl steht,
   R² für Wasserstoff, C₁-C₃₀-Alkyl, C₂-C₃₀-Alkenyl oder C₅-C₈-Cycloalkyl steht, und
   X für O oder eine Gruppe der Formel NR³ steht, worin R³ für H, Alkyl, Alkenyl, Cycloalkyl, Heterocycloalkyl, Aryl oder Hetaryl steht;
C3) Vinylaromaten,
C4) ungesättigten Kohlenwasserstoffen, die ausgewählt sind unter C₂-C₁₀-Monoolefinen und nichtaromatischen Kohlenwasserstoffen mit wenigstens zwei konjugierten Doppelbindungen,
C5) Estern α,β-ethylenisch ungesättigter Mono- und Dicarbonsäuren mit C₁-C₃₀-Alkanolen,
C6) Verbindungen mit einer radikalisch polymerisierbaren α,β-ethylenisch ungesättigten Doppelbindung und wenigstens einer kationogenen und/oder kationischen Gruppe pro Molekül,
C7) Estern von Vinylalkohol oder Allylalkohol mit C₁-C₃₀-Monocarbonsäuren,
C8) Estern α,β-ethylenisch ungesättigter Mono- und Dicarbonsäuren mit C₂-C₃₀-Alkandiolen, Amiden α,β-ethylenisch ungesättigter Mono- und Dicarbonsäuren mit C₂-C₃₀-Aminoalkoholen mit einer primären oder sekundären Aminogruppe,
C9) Amidgruppen-haltigen Monomeren, die von I.a), C6 und C8) verschieden sind;
C10) α,β-ethylenisch ungesättigten Nitrilen,
C11) Vinylhalogeniden, Vinylidenhalogeniden,
C12) ethylenisch ungesättigten Monomeren mit Harnstoffgruppen,
und Mischungen aus zwei oder mehr als zwei der zuvor genannten Monomere C1) bis C12).

### Monomer C1)

Bevorzugte Stickstoffheterocyclen mit einer radikalisch polymerisierbaren α,β-ethylenisch ungesättigten Doppelbindung C1) sind ausgewählt unter 1-Vinylimidazol (N-Vinylimidazol), von 1-Vinylimidazol verschiedenen vinyl- und allylsubstituierten Stickstoffheterocyclen und Mischungen davon.

Aus den Aminstickstoffen der zuvor genannten Verbindungen lassen sich entweder durch Protonierung mit Säuren oder durch Quaternisierung mit Alkylierungsmitteln geladene kationische Gruppen erzeugen. Geeignete Monomere C1) sind auch die durch Protonierung oder Quaternisierung von 1-Vinylimidazol und davon verschiedenen vinyl- und allylsubstituierten Stickstoffheterocyclen erhaltenen Verbindungen. Zur Protonierung geeignete Säuren sind z. B. Carbonsäuren, wie Milchsäure, oder Mineralsäuren, wie Phosphorsäure, Schwefelsäure und Salzsäure. Zur Quaternisierung geeignete Alkylierungsmittel sind C₁-C₄-Alkylhalogenide oder Di-(C₁-C₄-alkyl)sulfate, wie Ethylchlorid, Ethylbromid, Methylchlorid, Methylbromid, Dimethylsulfat und Diethylsulfat. Eine Protonierung oder Quaternisierung kann im Allgemeinen sowohl vor als auch nach der Polymerisation erfolgen. Bevorzugt erfolgt eine Protonierung oder Quaternisierung nach der Polymerisation. Beispiele für solche geladenen Monomere C1) sind quaternisierte Vinylimidazole, insbesondere 3-Methyl-1-vinylimidazoliumchlorid, -methosulfat und -ethosulfat.

Bevorzugte Monomere C1) sind weiterhin von Vinylimidazolen verschiedene vinyl- und allylsubstituierte Stickstoffheterocyclen, ausgewählt unter 2-Vinylpyridin, 4-Vinylpyridin, 2-Allylpyridin, 4-Allylpyridin, 2-Vinylpiperidin, 4-Vinylpiperidin und den durch Protonierung oder durch Quaternisierung erhaltenen Salzen davon.

Insbesondere enthält die Monomerzusammensetzung M1) wenigstens ein Comonomer C1), ausgewählt unter 1-Vinylimidazol, 2-Vinylpyridin, 4-Vinylpyridin, 2-Allylpyridin, 4-Allylpyridin und den durch Protonierung oder durch Quaternisierung erhaltenen Salzen davon. Speziell enthält die Monomerzusammensetzung M1) als Comonomer C1) 1-Vinylimidazol.

### Monomer C2)

Die Monomerzusammensetzung M1) kann zusätzlich wenigstens ein Monomer C2) enthalten, ausgewählt unter Verbindungen der allgemeinen Formeln (I.a) und (I.b), wie zuvor definiert.

In den Formeln I.a) und I.b) steht k vorzugsweise für eine ganze Zahl von 1 bis 500, besonders bevorzugt 2 bis 400, insbesondere 3 bis 250. Bevorzugt steht l für eine ganze Zahl von 0 bis 100.

Bevorzugt steht R¹ in der Formel I.a) für Wasserstoff, Methyl, Ethyl, n-Propyl, Isopropyl, n-Butyl, sec.-Butyl, tert.-Butyl, n-Pentyl oder n-Hexyl, insbesondere für Wasserstoff, Methyl oder Ethyl.

Vorzugsweise steht R² in den Formeln I.a) und I.b) für n-Octyl, 1,1,3,3-Tetramethylbutyl, Ethylhexyl, n-Nonyl, n-Decyl, n-Undecyl, Tridecyl, Myristyl, Pentadecyl, Palmityl, Heptadecyl, Octadecyl, Nonadecyl, Arrachinyl, Behenyl, Lignocerenyl, Cerotinyl, Melissinyl, Palmitoleinyl, Oleyl, Linolyl, Linolenyl, Stearyl, Lauryl.

Vorzugsweise steht X in der Formel I.a) für O oder NH, insbesondere für O.

Besonders bevorzugt enthält die Monomerzusammensetzung M1) wenigstens ein Monomer C2), das ausgewählt unter Verbindungen der allgemeinen Formeln (I.a1) und (I.b1) 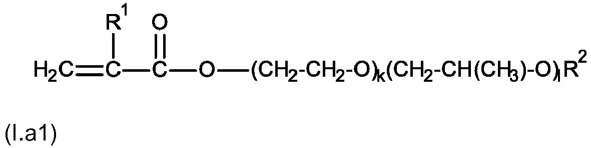 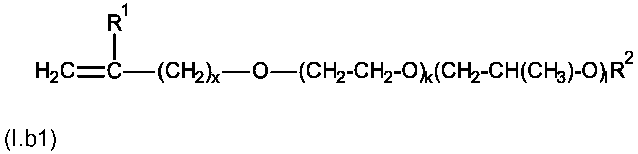 worin
die Reihenfolge der Alkylenoxideinheiten beliebig ist,
x für 0, 1 oder 2 steht,
k und I unabhängig voneinander für eine ganze Zahl von 0 bis 100 stehen, wobei die Summe aus k und l mindestens 2 beträgt, vorzugsweise mindestens 5 beträgt,
R¹ für Wasserstoff oder Methyl steht,
R² für Wasserstoff, C₁-C₄-Alkyl steht,

In den Formeln I.a1) und I.b1) steht k vorzugsweise für eine ganze Zahl von 1 bis 100, besonders bevorzugt 2 bis 50, insbesondere 3 bis 30. Bevorzugt steht l für eine ganze Zahl von 0 bis 50.

Vorzugsweise steht R² in den Formeln I.a1) und I.b1) für Wasserstoff, Methyl, Ethyl, n-Propyl, Isopropyl, n-Butyl, sec.-Butyl oder tert.-Butyl.

In der Formel I.b1) steht x vorzugsweise für 1 oder 2.

Geeignete Polyetheracrylate I.a) bzw. I.a1) sind z. B. die Polykondensationsprodukte der zuvor genannten α,β-ethylenisch ungesättigten Mono- und/oder Dicarbonsäuren und deren Säurechloriden, -amiden und -anhydriden mit Polyetherolen. Geeignete Polyetherole können leicht durch Umsetzung von Ethylenoxid, 1,2-Propylenoxid und/oder Epichlorhydrin mit einem Startermolekül, wie Wasser oder einem kurzkettigen Alkohol R²-OH hergestellt werden. Die Alkylenoxide können einzeln, alternierend nacheinander oder als Mischung eingesetzt werden. Die Polyetheracrylate I.a1) können allein oder in Mischungen zur Herstellung der erfindungsgemäß eingesetzten Polymere verwendet werden.

Geeignete Allylalkoholalkoxilate I.b) bzw. I.b1) sind z. B. die Veretherungsprodukte von Allylchlorid mit entsprechenden Polyetherolen. Geeignete Polyetherole können leicht durch Umsetzung von Ethylenoxid, 1,2-Propylenoxid und/oder Epichlorhydrin mit einem Starteralkohol R²-OH hergestellt werden. Die Alkylenoxide können einzeln, alternierend nacheinander oder als Mischung eingesetzt werden. Die Allylalkoholalkoxilate I.b) können allein oder in Mischungen zur Herstellung der erfindungsgemäß eingesetzten Polymere verwendet werden.

Speziell wird als Monomer C2) Methyldiglycolacrylat, Methyldiglycolmethacrylat, Ethyldiglycolacrylat oder Ethyldiglycolmethacrylat eingesetzt. Bevorzugt ist Ethyldiglycolacrylat.

### Monomer C3)

Die Monomerzusammensetzung M1) kann zusätzlich wenigstens ein Monomer C3) enthalten, ausgewählt unter Vinylaromaten. Bevorzugte Vinylaromaten C3) sind Styrol, 2-Methylstyrol, 4-Methylstyrol, 2-(n-Butyl)styrol, 4-(n-Butyl)styrol, 4-(n-Decyl)styrol und Mischungen davon. Besonders bevorzugt sind Styrol und 2-Methylstyrol, insbesondere Styrol.

### Monomer C4)

Die Monomerzusammensetzung M1) kann zusätzlich wenigstens einen ungesättigten Kohlenwasserstoff C4) enthalten, ausgewählt unter C₂-C₁₀-Monoolefinen und nichtaromatischen Kohlenwasserstoffen mit wenigstens zwei konjugierten Doppelbindungen.

Beispiele für C₂-C₁₀-Monoolefine sind Ethen, Propen, But-1-en, But-2-en, Isobuten, Pent-1-en, Pent-2-en, 2-Methyl-but-1-en, 2-Methyl-but-2-en, 3-Methyl-but-1-en, 3-Methyl-but-2-en, 2,2-Dimethylprop-1-en, Hex-1-en, Hex-2-en, Hex-3-en, Hept-1-en, Hept-2-en, Hept-3-en, Oct-1-en, Oct-2-en, Oct-3-en, Oct-4-en, Non-1-en, Non-2-en, Non-3-en, Non-4-en, Dec-1-en, Dec-2-en, Dec-3-en, Dec-4-en, Dec-5-en und deren Stellungsisomere sowie ungesättigt terminierte Oligomere und Polymere der o.g. Olefine, insbesondere der α-Olefine (Ethen, Propen, But-1-en, Pent-1-en, Hex-1-en, Hept-1-en, Oct-1-en, Non-1-en, Dec-1-en)

Nichtaromatische Kohlenwasserstoffe mit wenigstens zwei konjugierten Doppelbindungen bezeichnen sowohl aliphatische als auch cycloaliphatische ungesättigte Kohlenwasserstoffe mit wenigstens zwei konjugierten Doppelbindungen. Bei den cycloaliphatische ungesättigten Kohlenwasserstoffen mit wenigstens zwei konjugierten Doppelbindungen handelt es sich entweder um solche, die nicht die durch die Ringgröße vorgegebene maximale Anzahl an konjugierten C-C-Doppelbindungen enthalten, oder um solche, die zwar die durch die Ringgröße vorgegebene maximale Anzahl an konjugierten C-C-Doppelbindungen enthalten, aber nicht der Hückel-Regel entsprechen; sei es weil sie homoaromatisch, antiaromatisch oder ein nichtaromatisches Polyen sind.

Aliphatische Kohlenwasserstoffe mit wenigstens zwei konjugierten Doppelbindungen enthalten in der Regel 4 bis 20 Kohlenstoffatome. Beispiele für aliphatische Kohlenwasserstoffe mit wenigstens zwei konjugierten Doppelbindungen sind 1,3-Butadien, 1,3-Pentadien, Isopren, 1,3-Hexadien, 2,4-Hexadien,1,3,5-Hexatrien, 1,3-Heptadien, 2,4-Heptadien, 1,3,4-Heptatrien, 1,3-Octadien, 2,4-Octadien, 3,5-Octadien, 1,3,5-Octatrien, 2,4,6-Octatrien, 1,3,5,7-Octattetraen und dergleichen.

Cycloaliphatische Kohlenwasserstoffe mit wenigstens zwei konjugierten Doppelbindungen enthalten in der Regel 4 bis 20 Kohlenstoffatome als Ringglieder. Beispiele sind 1,3-Cyclopentadien, 1,3-Cyclohexadien, 1,3-Cycloheptadien, 1,3,5-Cycloheptatrien, 1,3-Cyclootadien, 1,3,5-Cyclootatrien, 1,3,5,7-Cyclooctatetraen und dergleichen.

Bevorzugte Monomere C4) sind Ethen, Propen, Buten, Isobuten, Diisobuten, Isopren, 1,3-Butadien und Mischungen davon.

### Monomer C5)

Die Monomerzusammensetzung M1) kann zusätzlich wenigstens ein Monomer C5) enthalten, ausgewählt unter Estern α,β-ethylenisch ungesättigter Mono- und Dicarbonsäuren mit C₁-C₃₀-Alkanolen.

Geeignete Ester α,β-ethylenisch ungesättigter Mono- und Dicarbonsäuren mit C₁-C₃₀-Alkanolen sind z. B. Methyl(meth)acrylat, Methylethacrylat, Ethyl(meth)acrylat, Ethylethacrylat, n-Propyl(meth)acrylat, Isopropyl(meth)acrylat, n-Butyl(meth)acrylat, tert.-Butyl(meth)acrylat, tert.-Butylethacrylat, n-Pentyl(meth)acrylat, n-Hexyl(meth)acrylat, n-Heptyl(meth)acrylat, n-Octyl(meth)acrylat,1,1,3,3-Tetramethylbutyl(meth)acrylat, Ethylhexyl(meth)acrylat, n-Nonyl(meth)acrylat, n-Decyl(meth)acrylat, n-Undecyl(meth)acrylat, Tridecyl(meth)acrylat, Myristyl(meth)acrylat,
Pentadecyl(meth)acrylat, Palmityl(meth)acrylat, Heptadecyl(meth)acrylat, Nonadecyl(meth)acrylat, Arrachinyl(meth)acrylat, Behenyl(meth)acrylat, Lignocerenyl(meth)acrylat, Cerotinyl(meth)acrylat, Melissinyl(meth)acrylat, Palmitoleinyl(meth)acrylat, Oleyl(meth)acrylat, Linolyl(meth)acrylat, Linolenyl(meth)acrylat, Stearyl(meth)acrylat, Lauryl(meth)acrylat und Mischungen davon.

### Monomer C6)

Die Monomerzusammensetzung M1) kann zusätzlich wenigstens ein Monomer C6) enthalten, ausgewählt unter Verbindungen mit einer radikalisch polymerisierbaren α,β-ethylenisch ungesättigten Doppelbindung und wenigstens einer kationogenen und/oder kationischen Gruppe pro Molekül,

Bevorzugt handelt es sich bei den kationogenen und/oder kationischen Gruppen der Monomere C6) um stickstoffhaltige Gruppen, wie primäre, sekundäre und tertiäre Aminogruppen sowie quaternäre Ammoniumgruppen. Vorzugsweise handelt es sich bei den stickstoffhaltigen Gruppen um tertiäre Aminogruppen oder quaternäre Ammoniumgruppen. Geladene kationische Gruppen lassen sich aus den Aminstickstoffen entweder durch Protonierung oder durch Quaternisierung mit Säuren oder Alkylierungsmitteln erzeugen. Dazu zählen z. B. Carbonsäuren, wie Milchsäure, oder Mineralsäuren, wie Phosphorsäure, Schwefelsäure und Salzsäure, oder als Alkylierungsmittel C₁-C₄-Alkylhalogenide oder -sulfate, wie Ethylchlorid, Ethylbromid, Methylchlorid, Methylbromid, Dimethylsulfat und Diethylsulfat. Eine Protonierung oder Quaternisierung kann im Allgemeinen sowohl vor als auch nach der Polymerisation erfolgen.

Vorzugsweise sind die Monomere C6) ausgewählt unter Estern α,β-ethylenisch ungesättigter Mono- und Dicarbonsäuren mit Aminoalkoholen, welche am Aminstickstoff mono- oder dialkyliert sein können, Amiden α,β-ethylenisch ungesättigter Mono- und Dicarbonsäuren mit Diaminen, welche mindestens eine primäre oder sekundäre Aminogruppe aufweisen, N,N-Diallylamin, N,N-Diallyl-N-alkylaminen und deren Derivaten und Mischungen davon.

Die Ester von α,β-ethylenisch ungesättigten Mono- und Dicarbonsäuren mit Aminoalkoholen, welche am Aminstickstoff mono- oder dialkyliert sein können, leiten sich bevorzugt von C₂-C₁₂-Aminoalkoholen, welche am Aminstickstoff C₁-C₈-mono- oder -dialkyliert sind. Als Säurekomponente dieser Ester eignen sich z. B. Acrylsäure, Methacrylsäure, Fumarsäure, Maleinsäure, Itaconsäure, Crotonsäure, Maleinsäureanhydrid, Monobutylmaleat und Gemische davon. Bevorzugt werden als Säurekomponente Acrylsäure, Methacrylsäure und deren Gemische eingesetzt.

Bevorzugte Monomere C6) sind N-Methylaminoethyl(meth)acrylat, N-Ethylaminoethyl(meth)acrylat, N-(n-Propyl)aminoethyl(meth)acrylat, N-(tert.-Butyl)aminoethyl(meth)acrylat, N,N-Dimethylaminomethyl(meth)acrylat, N,N-Dimethylaminoethyl(meth)acrylat, N,N-Diethylaminomethyl(meth)acrylat, N,N-Diethylaminoethyl(meth)acrylat, N,N-Dimethylaminopropyl(meth)acrylat, N,N-Diethylaminopropyl(meth)acrylat und N,N-Dimethylaminocyclohexyl(meth)acrylat.

Geeignete Monomere C6) sind weiterhin die Amide der zuvor genannten α,β-ethylenisch ungesättigten Mono- und Dicarbonsäuren mit Diaminen, welche mindestens eine primäre oder sekundäre Aminogruppe aufweisen. Bevorzugt sind Diamine, die eine tertiäre und eine primäre oder sekundäre Aminogruppe aufweisen.

Bevorzugt als Monomere C6) sind z. B. N-[tert.-Butylaminoethyl](meth)acrylamid, N-[2-(Dimethylamino)ethyl]acrylamid, N-[2-(Dimethylamino)ethyl]methacrylamid, N-[3-(Dimethylamino)propyl]acrylamid, N-[3-(Dimethylamino)propyl]methacrylamid, N-[4-(Dimethylamino)butyl]acrylamid, N-[4-(Dimethylamino)butyl]methacrylamid, N-[2-(Diethylamino)ethyl]acrylamid, N-[4-(Dimethylamino)cyclohexyl]acrylamid und N-[4-(Dimethylamino)cyclohexyl]methacrylamid.

### Monomer C7)

Die Monomerzusammensetzung M1) kann zusätzlich wenigstens ein Monomer C7) enthalten, ausgewählt unter Verbindungen Estern von Vinylalkohol oder Allylalkohol mit C₁-C₃₀-Monocarbonsäuren.

Geeignete Ester von Vinylalkohol mit C₁-C₃₀-Monocarbonsäuren sind z. B. Methylvinylester, Ethylvinylester, n-Propylvinylester, Isopropylvinylester, n-Butylvinylester, tert.-Butylvinylester, n-Pentylvinylester, n-Hexylvinylester, n-Heptylvinylester, n-Octylvinylester, 1,1,3,3-Tetramethylbutylvinylester, Ethylhexylvinylester, n-Nonylvinylester, n-Decylvinylester, n-Undecylvinylester, Tridecylvinylester, Myristylvinylester, Pentadecylvinylester, Palmitylvinylester, Heptadecylvinylester, Octadecylvinylester, Nonadecylvinylester, Arrachinylvinylester, Behenylvinylester, Lignocerenylvinylester, Cerotinylvinylester, Melissinylvinylester, Palmitoleinylvinylester, Oleylvinylester, Linolylvinylester, Linolenylvinylester, Stearylvinylester, Laurylvinylester und Mischungen davon.

### Monomer C8)

Die Monomerzusammensetzung M1) kann zusätzlich wenigstens ein Monomer C8) enthalten, ausgewählt unter Estern α,β-ethylenisch ungesättigter Mono- und Dicarbonsäuren mit C₂-C₃₀-Alkandiolen und Amiden α,β-ethylenisch ungesättigter Mono- und Dicarbonsäuren mit C₂-C₃₀-Aminoalkoholen mit einer primären oder sekundären Aminogruppe.

Geeignete Ester α,β-ethylenisch ungesättigter Mono- und Dicarbonsäuren mit C₂-C₃₀-Alkandiolen sind 2-Hydroxyethylacrylat, 2-Hydroxyethylmethacrylat, 2-Hydroxyethylethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethylhexylmethacrylat, etc.

Geeignete Amide α,β-ethylenisch ungesättigter Mono- und Dicarbonsäuren mit C₂-C₃₀-Aminoalkoholen mit einer primären oder sekundären Aminogruppe sind 2-Hydroxyethylacrylamid, 2-Hydroxyethylmethacrylamid, 2-Hydroxyethylethacrylamid, 2-Hydroxypropylacrylamid, 2-Hydroxypropylmethacrylamid, 3-Hydroxypropylacrylamid, 3-Hydroxypropylmethacrylamid, 3-Hydroxybutylacrylamid, 3-Hydroxybutylmethacrylamid, 4-Hydroxybutylacrylamid, 4-Hydroxybutylmethacrylamid, 6-Hydroxyhexylacrylamid, 6-Hydroxyhexylmethacrylamid, 3-Hydroxy-2-ethylhexylacrylamid und 3-Hydroxy-2-ethylhexylmethacrylamid.

### Monomer C9)

Die Monomerzusammensetzung M1) kann zusätzlich wenigstens ein Monomer C9) enthalten, ausgewählt unter Amidgruppen-haltigen Monomeren, die von I.a, C6) und C8) verschieden sind.

Geeignete amidgruppenhaltige Monomere C9) sind Verbindungen der allgemeinen Formel (V) 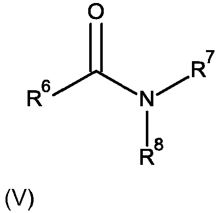 wobei
einer der Reste R⁶ bis R⁸ für eine Gruppe der Formel CH₂=CR⁹- mit R⁹ = H oder C₁-C₄-Alkyl steht und die übrigen Reste R⁶ bis R⁸ unabhängig voneinander für H, Alkyl, Cycloalkyl, Heterocycloalkyl, Aryl oder Hetaryl stehen,
wobei R⁶ und R⁷ gemeinsam mit der Amidgruppe, an die sie gebunden sind, auch für ein Lactam mit 5 bis 8 Ringatomen stehen können,
wobei R⁷ und R⁸ gemeinsam mit dem Stickstoffatom, an das sie gebunden sind, auch für einen fünf- bis siebengliedrigen Heterocyclus stehen können.

Bevorzugt sind die Monomere C9) ausgewählt unter primären Amiden α,β-ethylenisch ungesättigter Monocarbonsäuren, N-Vinylamiden gesättigter Monocarbonsäuren, N-Vinyllactamen, N-Alkyl- und N,N-Dialkylamiden α,β-ethylenisch ungesättigter Monocarbonsäuren und Mischungen davon.

Bevorzugte Monomere C9) sind N-Vinyllactame und deren Derivate, die z. B. einen oder mehrere C₁-C₆-Alkylsubstituenten, wie Methyl, Ethyl, n-Propyl, Isopropyl, n-Butyl, sec.-Butyl, tert.-Butyl, etc. aufweisen können. Dazu zählen z. B. N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam etc.

Besonders bevorzugt werden N-Vinylpyrrolidon und/oder N-Vinylcaprolactam eingesetzt.

Geeignete Monomere C9) sind weiterhin Acrylsäureamid und Methacrylsäureamid.

Geeignete N-Alkyl- und N,N-Dialkylamide α,β-ethylenisch ungesättigter Monocarbonsäuren sind beispielsweise Methyl(meth)acrylamid, Methylethacrylamid, Ethyl(meth)acrylamid, Ethylethacrylamid, n-Propyl(meth)acrylamid, Isopropyl(meth)acrylamid, n-Butyl(meth)acrylamid, tert.-Butyl(meth)acrylamid, tert.-Butylethacrylamid, n-Pentyl(meth)acrylamid, n-Hexyl(meth)acrylamid, n-Heptyl(meth)acrylamid, n-Octyl(meth)acrylamid,1,1,3,3-Tetramethylbutyl(meth)acrylamid, Ethylhexyl(meth)acrylamid, n-Nonyl(meth)acrylamid, n-Decyl(meth)acrylamid, n-Undecyl(meth)acrylamid, Tridecyl(meth)acrylamid, Myristyl(meth)acrylamid, Pentadecyl(meth)acrylamid, Palmityl(meth)acrylamid, Heptadecyl(meth)acrylamid, Nonadecyl(meth)acrylamid, Arrachinyl(meth)acrylamid, Behenyl(meth)acrylamid, Lignocerenyl(meth)acrylamid, Cerotinyl(meth)acrylamid, Melissinyl(meth)acrylamid, Palmitoleinyl(meth)acrylamid, Oleyl(meth)acrylamid, Linolyl(meth)acrylamid, Linolenyl(meth)acrylamid, Stearyl(meth)acrylamid, Lauryl(meth)acrylamid, N-Methyl-N-(n-octyl)(meth)acrylamid, N,N-Di-(n-octyl)(meth)acrylamid und Mischungen davon.

Als Monomere C9) geeignete offenkettige N-Vinylamidverbindungen sind beispielsweise N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid, N-Vinyl-butyramid und Mischungen davon. Bevorzugt wird N-Vinylformamid eingesetzt.

### Monomer C10)

Die Monomerzusammensetzung M1) kann zusätzlich wenigstens ein Monomer C10) enthalten, ausgewählt unter α,β-ethylenisch ungesättigten Nitrilen.

Geeignete α,β-ethylenisch ungesättigte Nitrile sind Acrylnitril oder Methacrylnitril.

### Monomer C11)

Die Monomerzusammensetzung M1) kann zusätzlich wenigstens ein Monomer C11) enthalten, ausgewählt unter Vinylhalogeniden und Vinylidenhalogeniden.

Geeignete Vinylhalogenide und Vinylidenhalogeniden sind Vinylchlorid, Vinylidenchlorid, Vinylfluorid, Vinylidenfluorid und Mischungen davon.

### Monomer C12)

Die Monomerzusammensetzung M1) kann zusätzlich wenigstens ein Monomer C12) enthalten, ausgewählt unter ethylenisch ungesättigten Monomeren mit Harnstoffgruppen.

Geeignete Monomere C12) mit Harnstoffgruppen sind N-vinylharnstoff, N-Allylharnstoff oder Derivative von Imidazolidin-2-on. Diese umfassen N-Vinyl- und N-Allylimidazolidin-2-on, N-Vinyloxyethylimidazolidin-2-on, N-(2-(meth)acrylamidoethyl)imidazolidin-2-on, N-(2-(meth)acryloxyethyl)imidazolidin-2-on (d.h., 2-Ureido(meth)acrylat), N-[2-((meth)acryloxyacetamido)ethyl]imidazolidin-2-on, etc.

In einer besonderen Ausführungsform enthält die Monomerzusammensetzung M1) Acrylsäure und gegebenenfalls wenigstens ein Comonomer, das ausgewählt ist unter von Acrylsäure verschiedenen α,β-ethylenisch ungesättigten Mono- (bspw. Methacrylsäure) oder Dicarbonsäuren, Salzen, Anhydriden, Estern und Amiden solcher von Acrylsäure verschiedenen α,β-ethylenisch ungesättigten Mono- oder Dicarbonsäuren, olefinisch ungesättigten Sulfonsäuren (bspw. 2-Acrylamido-2-methylpropansulfonsäure AMPS), Salzen olefinisch ungesättigter Sulfonsäuren, C₂-C₁₀-Monoolefinen, nichtaromatischen Kohlenwasserstoffen mit wenigstens zwei konjugierten Doppelbindungen, Vinylaromaten, N-Vinyllactamen und Mischungen davon.

In einer speziellen Ausführungsform enthält die Monomerzusammensetzung M1) Acrylsäure und gegebenenfalls wenigstens ein Comonomer, das ausgewählt ist unter Ethen, Propen, Isobuten, Diisobuten, Isopren, 1,3-Butadien, Methacrylsäure, 2-Acrylamido-2-methylpropansulfonsäure, Maleinsäure, Maleinsäureanhydrid, Itaconsäure, N-Vinylpyrrolidon, N-Vinylcaprolactam, N-Vinylimidazol, Styrol und Mischungen davon.

In einer ganz speziellen Ausführungsform enthält die Monomerzusammensetzung M1) Acrylsäure und gegebenenfalls wenigstens ein Comonomer, das ausgewählt ist unter Methacrylsäure, 2-Acrylamido-2-methylpropansulfonsäure Mischungen davon.

Insbesondere besteht die Monomerzusammensetzung M1) zu mindestens 80 Gew-%, bevorzugt zu mindestens 90 Gew.-%, insbesondere zu mindestens 95 Gew.-%, bezogen auf das Gesamtgewicht der Monomerzusammensetzung M1), aus Acrylsäure.

Die Monomerzusammensetzung M1) kann die weiteren Monomere C1) bis C12) jeweils vorzugsweise in einer Menge von 0 bis 30 Gew.-%, besonders bevorzugt 0 bis 20 Gew.-%, insbesondere 0 bis 10 Gew.-%, bezogen auf das Gesamtgewicht der Monomerzusammensetzung M1), enthalten. Wenn die Monomerzusammensetzung M1) wenigstens ein Monomer ausgewählt unter C1) bis C12) enthält, so jeweils vorzugsweise in einer Menge von 0,1 bis 30 Gew.-%, besonders bevorzugt 1 bis 20 Gew.-%, insbesondere 1,5 bis 10 Gew.-%, bezogen auf das Gesamtgewicht der Monomerzusammensetzung M1).

In einer speziellen Ausführung enthält die Monomerzusammensetzung M1) außer den Monomeren A) und B) keine weiteren Comonomere.

Noch spezieller enthält die Monomerzusammensetzung außer Acrylsäure keine weiteren Comonomere.

Die Polymerzusammensetzung P1) enthält im Wesentlichen unvernetzte Polymere. Die zur Herstellung der erfindungsgemäßen Polymerzusammensetzung eingesetzte Monomerzusammensetzung M1) enthält somit insbesondere keine zugesetzten vernetzend wirkenden Monomeren. Vernetzend wirkende Monomere im Sinne der Erfindung sind Verbindungen mit zwei oder mehr als zwei polymerisierbaren ethylenisch ungesättigten Doppelbindungen pro Molekül.

Bevorzugt enthält die Monomerzusammensetzung M1) bezogen auf das Gesamtgewicht weniger als 0,1 Gew.-%, bevorzugter weniger als 0,05 Gew.-%, insbesondere weniger als 0,001 Gew.-% vernetzend wirkenden Monomere, die zwei oder mehr als zwei radikalisch polymerisierbare α,β-ethylenisch ungesättigte Doppelbindungen pro Molekül aufweisen.

In einer speziellen Ausführungsform enthält die Monomerzusammensetzung M1) keine vernetzend wirkenden Monomere, die zwei oder mehr als zwei polymerisierbare α,β-ethylenisch ungesättigte Doppelbindungen pro Molekül aufweisen.

### Polyetherkomponente PE)

Geeignet als Polyetherkomponente PE) sind Polyetherole mit einem zahlenmittleren Molekulargewicht von wenigstens 200 g/mol und deren Mono- und Di-(C₁-C₆-alkylether).

Geeignete Polyetherole und deren Mono- und Di-(C₁-C₆-alkylether) können linear oder verzweigt, vorzugsweise linear sein. Geeignete Polyetherole und deren Mono- und Di-(C₁-C₆-alkylether)weisen im Allgemeinen ein zahlenmittleres Molekulargewicht im Bereich von etwa 200 bis 100000, bevorzugt 300 bis 50000, besonders bevorzugt 500 bis 40000, auf. Geeignete Polyetherole sind beispielsweise wasserlösliche oder wasserdispergierbare nichtionische Polymere, die Alkylenoxid-Wiederholungseinheiten aufweisen. Vorzugsweise beträgt der Anteil an Alkylenoxid-Wiederholungseinheiten mindestens 30 Gew.-%, bezogen auf das Gesamtgewicht der Verbindung. Geeignete Polyetherole sind Polyalkylenglycole, wie Polyethylenglycole, Polypropylenglycole, Polytetrahydrofurane und Alkylenoxidcopolymere. Geeignete Alkylenoxide zur Herstellung von Alkylenoxidcopolymeren sind z. B. Ethylenoxid, Propylenoxid, Epichlorhydrin, 1,2- und 2,3-Butylenoxid. Geeignet sind beispielsweise Copolymerisate aus Ethylenoxid und Propylenoxid, Copolymerisate aus Ethylenoxid und Butylenoxid sowie Copolymerisate aus Ethylenoxid, Propylenoxid und mindestens einem Butylenoxid. Die Alkylenoxidcopolymere können die Alkylenoxideinheiten statistisch verteilt oder in Form von Blöcken einpolymerisiert enthalten. Vorzugsweise beträgt in den Ethylenoxid/Propylenoxid-Copolymeren der Anteil an von Ethylenoxid abgeleiteten Wiederholungseinheiten 40 bis 99 Gew.-%. Besonders bevorzugt als Polyetherkomponente PE) sind Ethylenoxid-Homopolymere und Ethylenoxid/Propylenoxid-Copolymere.

Geeignet als Polyetherkomponente PE) sind weiterhin die Mono- und Di-(C₁-C₂-alkylether) der zuvor beschriebenen Polyetherole. Bevorzugt sind Polyalkylenglycolmonomethylether und Polyalkylenglycoldimethylether.

Geeignet als Polyetherkomponente PE) sind weiterhin Polyethergruppen-haltige Tenside. Geeignet sind allgemein nichtionische und ionische Tenside, die wenigstens eine unpolare und wenigstens eine polare Gruppe aufweisen und die eine Polyethergruppe umfassen.

Die Polyethergruppen-haltigen Tenside PE) sind vorzugsweise ausgewählt unter Alkylpolyoxyalkylenether, Arylpolyoxyalkylenether, Alkylarylpolyoxyalkylenether, alkoxylierte tierische und/oder pflanzliche Fette und/oder Öle, Fettaminalkoxylate, Fettsäureamidalkoxylate, Fettsäurediethanolamidalkoxylate, Polyoxyethylensorbitanfettsäureester, Alkylpolyethersulfate, Arylpolyethersulfate, Alkylarylpolyethersulfate, Alkylpolyethersulfonate, Arylpolyethersulfonate, Alkylarylpolyethersulfonate, Alkylpolyetherphosphateate, Arylpolyetherphosphate, Alkylarylpolyetherphosphate, Glycerinethersulfonate, Glycerinethersulfate, Monoglycerid(ether)sulfate, Fettsäureamidethersulfate, Polyoxyalkylensorbitanfettsäureestern und Mischungen davon.

Zu den bevorzugten nichtionischen Polyethergruppen-haltigen Tensiden PE) gehören beispielsweise:
- Alkylpolyoxyalkylenether, die sich von niedermolekularen C₃-C₆-Alkoholen oder von C₇-C₃₀-Fettalkoholen ableiten. Dabei kann die Etherkomponente aus Ethylenoxideinheiten, Propylenoxideinheiten, 1,2-Butylenoxideinheiten, 1,4-Butylenoxideinheiten und statistischen Copolymeren und Blockcopolymeren davon abgeleitet sein. Geeignete nichtionische Tenside umfassen unter anderem Tenside der allgemeinen Formel (VI)

   R¹⁰-O-(CH₂CH₂O)ₓ-(CHR¹¹CH₂O)_{y}-R¹² (VI),

   worin R¹⁰ ein linearer oder verzweigter Alkylrest mit 6 bis 22 C-Atomen ist,
   R¹¹ und R¹² unabhängig voneinander Wasserstoff oder ein linearer oder verzweigter Alkylrest mit 1 bis 10 C-Atomen oder H sind, wobei R¹² bevorzugt Methyl ist, und
   x und y unabhängig voneinander 0 bis 300 sind. Bevorzugt ist x = 1 bis 100 und y = 0 bis 30.

Dazu zählen speziell auch Fettalkoholalkoxylate und Oxoalkoholalkoxylate, wie iso-Tridecylalkohol- und Oleylalkoholpolyoxyethylenether.
- Hydroxylgruppen-haltige Tenside der allgemeinen Formel (VII)

   R¹³-O-(CH₂CH₂O)ₛ-(CH₂CH₂CH₂O)ₜ-(CH₂CH₂CH₂CH₂O)ᵤ-(CH₂CHR¹⁴O)ᵥ-CH₂CH(OH)R¹⁵ (VII)

   wobei
   in den Verbindungen der Formel (VII) die Reihenfolge der Alkylenoxideinheiten beliebig ist,
   s, t, u und v unabhängig voneinander für eine ganze Zahl von 0 bis 500 stehen, wobei die Summe aus s, t, u und v > 0 ist,
   R¹³ und R¹⁵ unabhängig voneinander für einen geradkettigen oder verzweigten, gesättigten C₁-C₄₀-Alkylrest oder einen ein- oder mehrfach ungesättigten C₂-C₄₀-Alkenylrest stehen, und
   R¹⁴ ausgewählt ist unter Methyl, Ethyl, n-Propyl, Isopropyl oder n-Butyl.

In den Verbindungen der allgemeinen Formel (VII) steht die Summe aus s, t, u und v vorzugsweise für einen Wert von 10 bis 300, besonders bevorzugt von 15 bis 200 und insbesondere von 20 bis 150.

Bevorzugt stehen t und u für 0. Dann steht die Summe aus s und v vorzugsweise für einen Wert von 10 bis 300, besonders bevorzugt von 15 bis 200 und insbesondere von 20 bis 150.

In den Verbindungen der allgemeinen Formel (VII) stehen vorzugsweise R¹³ und R¹⁵ unabhängig voneinander für einen geradkettigen oder verzweigten, gesättigten C₂-C₃₀-Alkylrest. Dabei können R¹³ und R¹⁵ auch für Mischungen verschiedener Alkylreste stehen.

In den Verbindungen der allgemeinen Formel (VII) steht R¹⁴ vorzugsweise für Methyl oder Ethyl, insbesondere für Methyl.

Eine bevorzugte Ausführung sind Hydroxylgruppen-haltige Tenside der allgemeinen Formel (VII.1)

R¹³-O-(CH₂CH₂O)ₛ-(CH₂CH(CH₃)O)ᵥ-CH₂CH(OH)R¹⁵ (VII.1)

wobei
die Reihenfolge der -(CH₂CH₂O)- und der (CH₂CH(CH₃)O)-Einheiten beliebig ist,
s und v unabhängig voneinander für eine ganze Zahl von 0 bis 500 stehen, wobei die Summe aus s und v > 0 ist, und
R¹³ und R¹⁵ unabhängig voneinander für einen geradkettigen, gesättigten C₁-C₃₀-Alkylrest oder einen verzweigten, gesättigten C₃-C₃₀-Alkylrest oder einen ein-
oder mehrfach ungesättigten C₂-C₃₀-Alkenylrest stehen.

In den Verbindungen der allgemeinen Formel (VII.1) steht die Summe aus s und v vorzugsweise für einen Wert von 10 bis 300, besonders bevorzugt von 15 bis 200 und insbesondere von 20 bis 150.

Zur Gruppe dieser nichtionischen Tenside zählen beispielsweise Hydroxymischether der allgemeinen Formel (C₆₋₂₂-Alkyl)-CH(OH)CH₂O-(EO)₂₀₋₁₂₀-(C₂₋₂₆-Alkyl).
- Alkoholpolyoxyalkylenester der allgemeinen Formel (VIII)

   R¹⁶-O-(CH₂CH₂O)ₚ-(CH₂CHR¹⁷O)_{q}-C(=O)R¹⁸ (VIII)

   wobei
   in den Verbindungen der Formel (VIII) die Reihenfolge der Alkylenoxideinheiten beliebig ist,
   p und q unabhängig voneinander für eine ganze Zahl von 0 bis 500 stehen, wobei die Summe aus p und q > 0 ist,
   R¹⁶ und R¹⁸ unabhängig voneinander für einen geradkettigen oder verzweigten, gesättigten C₁-C₄₀-Alkylrest oder einen ein- oder mehrfach ungesättigten C₂-C₄₀-Alkenylrest stehen, und
   R¹⁷ ausgewählt ist unter Methyl, Ethyl, n-Propyl, Isopropyl oder n-Butyl.

In den Verbindungen der allgemeinen Formel (VIII) steht die Summe aus p und q vorzugsweise für einen Wert von 10 bis 300, besonders bevorzugt von 15 bis 200 und insbesondere von 20 bis 150.

In den Verbindungen der allgemeinen Formel (VIII) stehen vorzugsweise R¹⁶ und R¹⁸ unabhängig voneinander für einen geradkettigen oder verzweigten, gesättigten C₄-C₃₀-Alkylrest. Dabei können R¹⁶ und R¹⁸ auch für Mischungen verschiedener Alkylreste stehen.

In den Verbindungen der allgemeinen Formel (VIII) steht R¹⁷ vorzugsweise für Methyl oder Ethyl, insbesondere für Methyl.

Dazu zählt beispielsweise Laurylalkoholpolyoxyethylenacetat.
- Alkylarylalkoholpolyoxyethylenether, z. B. Octylphenol-polyoxyethylenether,
- alkoxylierte tierische und/oder pflanzliche Fette und/oder Öle, beispielsweise Maisölethoxylate, Rizinusölethoxylate, Talgfettethoxylate,
- Alkylphenolalkoxylate, wie beispielsweise ethoxyliertes iso-Octyl-, Octyl- oder Nonylphenol, Tributylphenolpolyoxyethylenether,
- Fettaminalkoxylate, Fettsäureamid- und Fettsäurediethanolamidalkoxylate, insbesondere deren Ethoxylate,
- Polyoxyalkylensorbitanfettsäureester.

Ein Beispiel für ein Alkylpolyethersulfat ist Natriumdodecylpoly(oxyethylen)sulfat (Natriumlaurylethersulfat, SLES). Ein bevorzugter kommerziell erhältlicher modifizierter Fettalkoholpolyglycolether ist ein beidseitig endständig CₓH₂ₓ₊₁/C_{y}H_{2y+1}-terminiertes Polyethylenoxid mit einer freien OH-Gruppe und x, y = 6 - 14.

Wie bereits dargestellt umfasst die erfindungsgemäß herzustellende Folie optional oder bevorzugt noch mindestens eine weitere Schicht S2), welche die wenigstens ein Polymer P2) enthält oder aus wenigstens einem Polymer P2) besteht, das ausgewählt ist unter
- natürlichen und modifizierten Polysacchariden,
- Homo- und Copolymeren, die Wiederholungseinheiten enthalten, die sich von Vinylalkohol, Vinylestern, alkoxilierten Vinylalkoholen oder Mischungen davon ableiten,
- Homo- und Copolymeren, die wenigstens ein Monomer einpolymerisiert enthalten, das ausgewählt ist unter N-Vinylpyrrolidon, N-Vinylcaprolactam, N-Vinylimidazol, 2-Vinylpyridin, 4-Vinylpyridin, Salzen der drei letztgenannten Monomere, Vinylpyridin-N-oxid, N-carboxymethyl-4-vinylpyridiumhalogeniden und Mischungen davon,
- Homo- und Copolymeren der Acrylsäure und/oder Methacrylsäure, insbesondere Copolymeren, die wenigstens ein Acrylsäuremonomer, ausgewählt unter Acrylsäure, Acrylsäuresalzen und Mischungen davon und wenigstens ein Maleinsäuremonomer, ausgewählt unter Maleinsäure, Maleisäureanhydrid, Maleinsäuresalzen und Mischungen davon, einpolymerisiert enthalten,
- Copolymeren, die wenigstens ein (Meth)acrylsäuremonomer, ausgewählt unter Acrylsäure, Methacrylsäure, ihren Salzen und Mischungen davon und wenigstens ein hydrophobes Monomer, ausgewählt unter C₁-C₈-Alkylestern der (Meth)acrylsäure, C₂-C₁₀-Olefinen, Styrol und · -Methylstyrol einpolymerisiert enthalten,
- Copolymeren, die wenigstens ein Maleinsäuremonomer, ausgewählt unter Maleinsäure, Maleinsäureanhydrid, Maleinsäuresalzen und Mischungen davon und wenigstens ein C₂-C₈-Olefin einpolymerisiert enthalten,
- Homo- und Copolymeren des Acrylamids und/oder Methacrylamids,
- Polyaminosäuren,
- wasserlöslichen oder wasserdispergierbaren Polyamiden,
- Polyalkylenglykolen, Mono- oder Diethern von Polyalkylenglykolen, und
- Mischungen davon.

Die erfindungsgemäß herzustellende Folie umfasst besonders bevorzugt wenigstens eine weitere Schicht, die wenigstens ein Polymer P2) enthält oder aus wenigstens einem Polymer P2) besteht, das ausgewählt ist unter
- Celluloseethern und Celluloseestern,
- Homo- und Copolymeren, die Wiederholungseinheiten enthalten, die sich von Vinylalkohol, Vinylestern, alkoxylierten Vinylalkoholen oder Mischungen davon ableiten,
- Polymeren, ausgewählt unter Polyvinylpyrrolidon-Homopolymeren, Polyvinylimidazol-Homopolymeren, Copolymeren, die Vinylpyrrolidon und Vinylimidazol einpolymerisiert enthalten, Polyvinylpyridin-N-oxid, Poly-N-carboxymethyl-4-vinylpyridiumhalogeniden,
- Mischungen davon.

Die erfindungsgemäß herzustellende Folie umfasst insbesondere wenigstens eine weitere Schicht, die wenigstens ein Polymer P2) enthält oder aus wenigstens einem Polymer P2) besteht, das ausgewählt ist unter Cellulosederivaten, vorzugsweise Carboxyalkylcellulosen und Salzen davon, Sulfoalkylcellulosen und Salzen davon, sauren Schwefelsäureestersalzen von Cellulose, Alkylcellulosen, Hydroxyalkylcellulosen, (Hydroxyalkyl)alkylcellulosen und Mischung aus zwei oder mehr dieser Cellulosederivate.

Als Polymere P2) geeignete Polysaccharide sind natürliche Polysaccharide, wie z.B. Cellulose, Hemicellulose, Glykogen, Stärke (Amylose und Amylopektin), Dextran, Pektine, Inulin, Xanthan, Chitin, Callose, thermisch, hydrloytisch oder enzymatisch abgebaute Stärke z.B. Maltodextrin etc.

Bevorzugte modifizierte Polysaccharide sind z.B. Celluloseether, Celluloseesters, Celluloseamide, etc.

Celluloseether sind Derivate der Cellulose, die durch teilweise oder vollständige Substitution der Wasserstoff-Atome in den Hydroxy-Gruppen der Cellulose entstehen. Celluloseether aus der Umsetzung von Cellulose mit mehr als einem Veretherungsmittel werden auch als Cellulose-Mischether bezeichnet.

Bevorzugte Celluloseether sind ausgewählt unter Alkylcellulosen, Hydroxyalkylcellulosen, (Hydroxyalkyl)alkylcellulosen, Carboxyalkylcellulosen und Salzen davon, (Carboxyalkyl)alkylcellulosen und Salzen davon, (Carboxyalkyl)(hydroxyalkyl)cellulosen und Salzen davon, (Carboxyalkyl)(hydroxyalkyl)alkylcellulosen und Salzen, Sulfoalkylcellulosen und Salzen davon.

Bevorzugt als Carboxyalkylrest sind der Carboxymethylrest und der Carboxyethylrest. Besonders bevorzugt als Carboxyalkylrest ist der Carboxymethylrest. Bevorzugt als Sulfoalkylrest sind der Sulfomethylrest und der Sulfoethylrest. Besonders bevorzugt als Sulfoalkylrest ist der Sulfomethylrest. Bevorzugte Salze sind die Natrium-, Kalium-, Calcium- und Ammoniumsalze.

Besonders bevorzugte Celluloseether sind ausgewählt unter Carboxymethylcellulose, Carboxyethylcellulose, Methylcellulose, Ethylcellulose, n-Propylcellulose, Ethylmethylcellulose, Hydroxyethylcellulose, Hydroxypropylcellulose, Hydroxybutylcellulose, Hydroxyethylmethylcellulose, Hydroxypropylmethylcellulose, Hydroxyethylethylcellulose, Hydroxypropylethylcellulose, Carboxymethylmethylcellulose, Carboxymethylethylcellulose, Carboxymethylhydroxyethylcellulose, Carboxymethylhydroxyethylmethylcellulose, Carboxymethylhydroxyethylethylcellulose, Sulfomethylcellulose und Sulfoethylcellulose. Dabei können die Carboxyalkylreste und die Sulfoalkylreste auch in Salzform vorliegen.

Celluloseester sind Derivate der Cellulose, die durch Veresterung der Hydroxygruppen mit Säuren, entstehen. Bevorzugt sind die Schwefelsäureester der Cellulose. In einer speziellen Ausführungsform wird die Schwefelsäure nur einer teilweisen Veresterung unterzogen, so dass die resultierenden Schwefelsäureester noch freie Säuregruppen oder deren Salze aufweisen. Besonders bevorzugt werden saure Schwefelsäureestersalze von Cellulose eingesetzt. Diese zeichnen sich durch ihre vergrauungsinhibierende Wirkung aus.

Bevorzugte modifizierte Polysaccharide sind ausgewählt unter Methylcellulose, Ethylcellulose, Propylcellulose, Methyl/Ethylcellulose, Ethyl/Propylcellulose, Carboxymethylcellulose, Salzen der Carboxymethylcellulose, Hydroxyethylcellulose, Hydroxypropylcellulose, Hydroxyethylmethylcellulose, Hydroxyethylethylcellulose, Hydroxypropylmethylcellulose, Hydroxypropylethylcellulose, etc.

In einer weiteren bevorzugten Ausführungsform sind die Polymere P2) ausgewählt unter Homo- und Copolymeren, die Wiederholungseinheiten enthalten, die sich von Vinylalkohol, Vinylestern, alkoxilierten Vinylalkoholen oder Mischungen davon ableiten.

Geeignete Vinylester (Vinylacylate) sind allgemein die Ester des Vinylalkohols mit C₁-C₁₅-Carbonsäuren, bevorzugt C₁-C₈-Carbonsäuren, besonders bevorzugt C₁-C₄-Carbonsäuren. Bevorzugte Vinylacylate sind Vinylacetat, Vinyl-n-propionat, Vinyl-n-butyrat, Vinyl-2-ethylhexanoat, Vinyllaurat, etc. Besonders bevorzugt ist Vinylacetat.

Teilweise oder vollständig verseifte (hydrolysierte) Polyvinylacetate (PVA) werden im Allgemeinen als "Polyvinylalkohol (PVOH oder PVA)" bezeichnet. Teilverseifte Polyvinylacetate werden durch unvollständige Hydrolyse von Polyvinylacetaten gewonnen, d.h. das teilverseifte Polymer weist sowohl Estergruppen als auch Hydroxylgruppen auf. Die Verseifung der Polyvinylacetate kann in an sich bekannter Weise im Alkalischen oder Sauren, d.h. unter Zugabe von Säure oder Base, erfolgen.

Die anwendungstechnischen Eigenschaften von Polyvinylalkoholen werden unter anderem vom Polymerisationsgrad und dem Hydrolysegrad (Grad der Verseifung) bestimmt. Mit steigendem Verseifungsgrad nimmt dabei die Wasserlöslichkeit ab. Polyvinylalkohole mit Hydrolysegraden bis ca. 90 mol% sind im Allgemeinen kaltwasserlöslich. Polyvinylalkohole mit Hydrolysegraden von ca. 90 bis ca. 99,9 mol% sind im Allgemeinen nicht mehr kaltwasserlöslich, wohl aber heißwasserlöslich.

Als Polymere P2) geeignete Polyvinylalkohole weisen vorzugsweise einen Verseifungsgrad von 50 bis 99,9 mol-%, besonders bevorzugt von 70 bis 99 mol-%, insbesondere von 80 bis 98 mol-%, auf.

Als Polymere P2) geeignete Polyvinylalkohole weisen vorzugsweise ein gewichtsmittleres Molekulargewicht von 10000 bis 300000 g/mol, besonders bevorzugt von 15000 bis 250000 g/mol, auf.

Als Polymere P2) geeignete Polyvinylalkohole weisen vorzugsweise eine Viskosität von 2 bis 120 mPa s, besonders bevorzugt von 7 bis 70 mPa s und insbesondere von 15 bis 60 mPa s, gemessen nach DIN 53015 an einer 4%igen Lösung in Wasser.

In einer weiteren bevorzugten Ausführungsform sind die Polymere P2) ausgewählt unter Homo- und Copolymeren, die wenigstens ein Monomer einpolymerisiert enthalten, das ausgewählt ist unter N-Vinylpyrrolidon, N-Vinylcaprolactam, N-Vinylimidazol, 2-Vinylpyridin, 4-Vinylpyridin, Salzen der drei letztgenannten Monomere, Vinylpyridin-N-oxid, N-carboxymethyl-4-vinylpyridiumhalogeniden und Mischungen davon,

N-Vinylimidazol, 2-Vinylpyridin und 4-Vinylpyridin können durch Protonierung oder Quaternisierung in die entsprechenden Salze überführt werden. Geeignete Säuren sind z. B. Mineralsäuren, wie Schwefelsäure, Salzsäure und Phosphorsäure, sowie Carbonsäuren. Zur Quaternisierung geeignete Alkylierungsmittel sind C₁-C₄-Alkylhalogenide oder C₁-C₄-Alkylsulfate, wie Ethylchlorid, Ethylbromid, Methylchlorid, Methylbromid, Dimethylsulfat und Diethylsulfat.

Bevorzugt sind Polyvinylpyrrolidon-Homopolymere und Copolymere, die N-Vinylpyrrolidon und ein weiteres davon verschiedenes ethylenisch ungesättigtes Monomer einpolymerisiert enthalten. Geeignete N-Vinylpyrrolidon-Copolymere sind ganz allgemein neutrale, anionische, kationische und amphotere Polymere.

Besonders bevorzugte N-Vinylpyrrolidon-Copolymere sind ausgewählt unter
Copolymeren aus N-Vinylpyrrolidon und Vinylacetat,
Copolymeren aus N-Vinylpyrrolidon und Vinylpropionat,
Copolymeren aus N-Vinylpyrrolidon, Vinylacetat und Vinylpropionat,
Copolymeren aus N-Vinylpyrrolidon und Vinylacrylat,
Copolymeren aus N-Vinylpyrrolidon, Ethylmethacrylat und Methacrylsäure,
Copolymeren aus N-Vinylpyrrolidon und N-Vinylimidazol und deren durch Protonierung und/oder Quaternisierung erhaltenen Derivaten,
Copolymeren aus N-Vinylpyrrolidon und Dimethylaminoethyl-methacrylat und deren durch Protonierung und/oder Quaternisierung erhaltenen Derivaten,
Copolymeren aus N-Vinylpyrrolidon, N-Vinylcaprolactam und N-Vinylimidazol und deren durch Protonierung und/oder Quaternisierung erhaltenen Derivaten.

In einer weiteren bevorzugten Ausführungsform sind die Polymere P2) ausgewählt unter Homo- und Copolymeren der Acrylsäure und/oder Methacrylsäure.

In einer ersten speziellen Ausführung der Homo- und Copolymere der Acrylsäure und/oder Methacrylsäure wird als Polymer P2) ein Acrylsäure-Homopolymer eingesetzt wird. Acrylsäure-Homopolymere P2) weisen vorzugsweise ein zahlenmittleres Molekulargewicht im Bereich von 800 bis 70000 g/mol, besonders bevorzugt von 900 bis 50000 g/mol, insbesondere von 1000 bis 20000 g/mol, speziell 1000 bis 10000 g/mol, auf. Der Begriff Acrylsäure-Homopolymer umfaßt dabei auch Polymere, in denen die Carbonsäuregruppen teilweise oder vollständig neutralisiert vorliegen. Dazu zählen Acrylsäure-Homopolymere, in denen die Carbonsäuregruppen teilweise oder vollständig in Form von Alkalimetallsalzen oder Ammoniumsalzen vorliegen. Bevorzugt sind Acrylsäure-Homopolymere, in denen die Carbonsäuregruppen protoniert sind oder in denen die Carbonsäuregruppen teilweise oder vollständig in Form von Natriumsalzen vorliegen. Als Polymere P2) besonders geeignete Homopolymere der Acrylsäure sind die Sokalan ® PA Marken der BASF SE.

In einer zweiten speziellen Ausführung der Homo- und Copolymere der Acrylsäure und/oder Methacrylsäure wird als Polymer P2) ein Copolymer eingesetzt, das wenigstens ein Acrylsäuremonomer, ausgewählt unter Acrylsäure, Acrylsäuresalzen und Mischungen davon und wenigstens ein Maleinsäuremonomer, ausgewählt unter Maleinsäure, Maleisäureanhydrid, Maleinsäuresalzen und Mischungen davon, einpolymerisiert enthält. Diese weisen vorzugsweise ein zahlenmittleres Molekulargewicht im Bereich von 2500 bis 150000 g/mol, besonders bevorzugt von 2800 bis 70000 g/mol, insbesondere von 2900 bis 50000 g/mol, spezieller 3000 bis 30000 g/mol, auf. Umfaßt sind dabei auch Copolymere, in denen die Carbonsäuregruppen teilweise oder vollständig neutralisiert vorliegen. Dazu können entweder zur Polymerisation Monomere in Salzform eingesetzt werden oder das resultierende Copolymer wird einer teilweisen oder vollständigen Neutralisation unterzogen. Bevorzugt sind Copolymere, in denen die Carbonsäuregruppen protoniert sind oder teilweise oder vollständig in Form von Alkalimetallsalzen oder Ammoniumsalzen vorliegen. Bevorzugt als Alkalimetallsalze sind die Natrium- oder Kaliumsalze, speziell die Natriumsalze.

Bevorzugte Polymere P2) sind Copolymere von Maleinsäure (bzw. Maleinsäuremonomeren) und Acrylsäure (bzw. Acrylsäuremonomeren) im Gewichtsverhältnis 10:90 bis 95:5, besonders bevorzugt solche im Gewichtsverhältnis 30:70 bis 90:10.

Bevorzugte Polymere P2) sind weiterhin Terpolymere aus Maleinsäure (bzw. Maleinsäuremonomeren), Acrylsäure (bzw. Acrylsäuremonomeren) und einem Vinylester einer C₁-C₃-Carbonsäure im Gewichtsverhältnis von 10 (Maleinsäure) : 90 (Acrylsäure + Vinylester) bis 95 (Maleinsäure) : 10 (Acrylsäure + Vinylester). Das Gewichtsverhältnis von Acrylsäure zu Vinylester liegt vorzugsweise in einem Bereich von 30:70 bis 70:30.

Besonders geeignete Polymere P2) auf der Basis von Acrylsäuremonomeren und Maleinsäuremonomeren sind die entsprechenden Sokalan ®CP - Marken der BASF SE.
In einer dritten speziellen Ausführung der Homo- und Copolymere der Acrylsäure und/oder Methacrylsäure wird als Polymer P2) ein Copolymer, das wenigstens ein (Meth)acrylsäuremonomer, ausgewählt unter (Meth)acrylsäure, (Meth)acrylsäuresalzen und Mischungen davon und wenigstens ein hydrophobes Monomer enthält. Das hydrophobe Monomer ist insbesondere ausgewählt unter C₁-C₈-Alkylestern der (Meth)acrylsäure wie z.B. die Methyl-, Ethyl-, n- und iso-Propyl-, n-Butyl-und 2-Ethylhexylester der (Meth)acrylsäure und C₂-C₁₀-Olefinen wie z.B. Ethen, Propen, 1,2-Buten, Isobuten, Disobuten, Styrol und α-Methylstyrol.

In einer weiteren bevorzugten Ausführungsform wird als Polymer P2) ein Copolymer von wenigstens einem Maleinsäuremonomer, ausgewählt unter Maleinsäure, Maleinsäureanhydrid, Maleinsäuresalzen und Mischungen davon mit wenigstens einem C₂-C₈-Olefin eingesetzt. Geeignet sind dabei auch Copolymere, die wenigstens ein Maleinsäuremonomer, ausgewählt unter Maleinsäure, Maleinsäureanhydrid, Maleinsäuresalzen und Mischungen davon, wenigstens ein C₂-C₈-Olefin und wenigstens ein weiteres davon verschiedenes Comonomer einpolymerisiert enthalten.

Besonders bevorzugt sind Copolymere, die wenigstens ein Maleinsäuremonomer, ausgewählt unter Maleinsäure, Maleinsäureanhydrid, Maleinsäuresalzen und Mischungen davon und wenigstens ein C₂-C₈-Olefin als alleinige Monomere einpolymerisiert enthalten. Diese weisen vorzugsweise ein zahlenmittleres Molekulargewicht im Bereich von 3000 bis 150000 g/mol, besonders bevorzugt von 5000 bis 70000 g/mol, insbesondere von 8000 bis 50000 g/mol, spezieller 10000 bis 30000 g/mol, auf. Umfaßt sind dabei auch Copolymere, in denen die Carbonsäuregruppen teilweise oder vollständig neutralisiert vorliegen. Dazu können entweder zur Polymerisation Maleinsäuresalze eingesetzt werden oder das resultierende Copolymer wird einer teilweisen oder vollständigen Neutralisation unterzogen. Bevorzugt sind Copolymere, in denen die Carbonsäuregruppen protoniert sind oder teilweise oder vollständig in Form von Alkalimetallsalzen oder Ammoniumsalzen vorliegen. Bevorzugt als Alkalimetallsalze sind die Natrium- oder Kaliumsalze, speziell die Natriumsalze.

Eine spezielle Ausführung sind Copolymere von Maleinsäure mit C₂-C₈-Olefinen im Molverhältnis 40:60 bis 80:20, wobei Copolymere von Maleinsäure mit Ethylen, Propylen, Isobuten, Diisobuten oder Styrol besonders bevorzugt sind. Besonders geeignete polymere carbonsäuregruppenhaltige Verbindungen auf der Basis von Olefinen und Maleinsäure sind ebenfalls die entsprechenden Sokalan ®CP - Marken der BASF SE.

Eine weitere bevorzugte Ausführungsform sind Copolymere, die wenigstens ein Maleinsäuremonomer, ausgewählt unter Maleinsäure, Maleinsäureanhydrid, Maleinsäuresalzen und Mischungen davon, wenigstens ein C₂-C₈-Olefin und wenigstens ein Acrylsäuremonomer, ausgewählt unter Acrylsäure, Acrylsäuresalzen und Mischungen davon, einpolymerisiert enthalten.

Eine weitere bevorzugte Ausführungsform sind Copolymere, die wenigstens ein Maleinsäuremonomer, ausgewählt unter Maleinsäure, Maleinsäureanhydrid, Maleinsäuresalzen und Mischungen davon, wenigstens ein C₂-C₈-Olefin und wenigstens einen Ester der (Meth)acrylsäure einpolymerisiert enthalten. Der Ester der (Meth)acrylsäure ist dann insbesondere ausgewählt unter C₁-C₈-Alkylestern der (Meth)acrylsäure wie z.B. die Methyl-, Ethyl-, n- und iso-Propyl-, n-Butyl-und 2-Ethylhexylester der (Meth)acrylsäure.

In einer weiteren bevorzugten Ausführungsform sind die Polymere P2) ausgewählt unter Homo- und Copolymeren die wenigstens ein Monomer einpolymerisiert enthalten, das ausgewählt ist unter Acrylamid, Methacrylamid und Mischungen davon. Bevorzugt sind diese Polymere P2) wasserlöslich oder wasserdispergierbar. Insbesondere sind diese Polymere P2) wasserlöslich.

In einer speziellen Ausführungsform sind die Polymere P2) ausgewählt unter Homopolymeren des Acrylamids oder Methacrylamids.

In einer weiteren speziellen Ausführungsform sind die Polymere P2) ausgewählt unter Copolymeren des Acrylamids und/oder Methacrylamids. Diese enthalten wenigstens ein Comonomer einpolymerisiert, das ausgewählt ist unter von Acrylamid und Methacrylamid verschiedenen hydrophilen Monomeren (A1), monoethylenisch ungesättigten, amphiphilen Monomeren (A2) sowie weiteren ethylenisch ungesättigten Monomeren (A3).

Geeignete hydrophile, monoethylenisch ungesättigte Monomere (A1) sind neutrale Monomere, wie N-Methyl(meth)acrylamid, N,N'-Dimethyl(meth)acrylamid oder N-Methylol(meth)acrylamid, Hydroxy- und/oder Ethergruppen umfassende Monomere, wie beispielsweise Hydroxyethyl(meth)acrylat, Hydroxypropyl(meth)acrylat, Allylalkohol, Hydroxyvinylethylether, Hydroxyvinylpropylether, Hydroxyvinylbutylether, Polyethylenglykol(meth)acrylat, N-Vinylformamid, N-Vinylacetamid, N-Vinylpyrrolidon oder N-Vinylcaprolactam sowie Vinylester, wie beispielsweise Vinylformiat oder Vinylacetat. N-Vinylderivate können nach Polymerisation zu Vinylamin-Einheiten, Vinylester zu Vinylalkohol-Einheiten hydrolysiert werden. Geeignete hydrophile, monoethylenisch ungesättigte Monomere (A1) sind weiterhin Monomere, welche mindestens eine saure Gruppe bzw. deren Salze umfassen. Dazu zählen Acrylsäure, Methacrylsäure, Crotonsäure, Itaconsäure, Maleinsäure, Fumarsäure, Vinylsulfonsäure, Allylsulfonsäure, 2-Acrylamido-2-methylpropansulfonsäure, 2-Methacrylamido-2-methylpropansulfonsäure, 2-Acrylamidobutansulfonsäure, 3-Acrylamido-3-methylbutansulfonsäure, 2-Acrylamido-2,4,4-trimethylpentansulfonsäure, Vinylphosphonsäure, Allylphosphonsäure, N-(Meth)acrylamidoalkylphosphonsäuren (Meth)acryloyloxyalkylphosphonsäuren und Salze und Mischungen davon. Bei den weiteren, monoethylenisch ungesättigten, hydrophilen Monomeren kann es sich um hydrophile, kationische Monomere handeln. Geeignete kationische Monomere (A1c) umfassen insbesondere Ammoniumgruppen aufweisende Monomere, insbesondere Ammoniumderivate von N-(ω-Aminoalkyl)(meth)acrylamiden oder ω-Aminoalkyl(meth)acrylestern.

Bei den amphiphilen Monomeren (A2) handelt es sich um monoethylenisch ungesättigte, Monomere, welche mindestens eine hydrophile Gruppe und mindestens eine, bevorzugt terminale hydrophobe Gruppe aufweisen.

Bei den Monomeren (A3) kann es sich beispielsweise um monoethylenisch ungesättigte Monomere handeln, welche einen hydrophoberen Charakter haben als die hydrophilen Monomere (A1) und die dementsprechend nur in geringem Maße wasserlöslich sind. Beispiele derartiger Monomere umfassen N-Alkyl- und N,N,'-Dialkyl(meth)acrylamide, wobei die Anzahl der Kohlenstoffatome in den Alkylresten zusammen mindestens 3, bevorzugt mindestens 4 beträgt. Beispiele derartiger Monomere umfassen N-Butyl(meth)acrylamid, N-Cyclohexyl(meth)acrylamid oder N-Benzyl(meth)acrylamid.

In einer weiteren bevorzugten Ausführungsform sind die Polymere P2) ausgewählt unter Polyaminosäuren. Geeignete Polyaminosäuren sind prinzipiell Verbindungen, die wenigstens eine Aminosäure, wie Asparaginsäure, Glutaminsäure, Lysin, Glycin, etc. einpolymerisiert enthalten.

Zu den Polyaminosäuren zählen auch die durch polymeranaloge Umsetzung, wie Veresterung, Amidierung, etc. erhältlichen Derivate. Bevorzugte Polyaminosäuren sind Polyasparaginsäure, Polyasparaginsäurederivate, Polyglutaminsäure, Polyglutaminsäurederivate und Mischungen davon.

Polyasparaginsäure kann z.B. durch alkalische Hydrolyse von Polysuccinimid (PSI, Anhydropolyasparaginsäure) hergestellt werden. Polysuccinimid kann durch thermische Kondensation der Asparaginsäure oder aus Ammoniak und Maleinsäure hergestellt werden kann. Polyasparaginsäure kann z.B. als biologisch abbaubares Komplexierungsmittel und Cobuilder in Wasch- und Reinigungsmitteln eingesetz werden.

Polyaminosäuren mit tensidischen Eigenschaften können erhalten werden, indem die freien Carbonsäuregruppen der Polyasparaginsäure oder Polyglutaminsäure zumindest teilweise in N-Alkylamide und/oder in Ester überführt werden. Polyasparaginsäureamide können auch durch Umsetzung von Polysuccinimid mit Aminen hergestellt werden. Zur Herstellung von Hydroxyethylaspartamiden kann die Ringöffnung von Polysuccinimid mit Ethanolamin durchgeführt werden. Die DE 37 00 128 A und EP 0 458 079 A beschreiben die nachfolgende Veresterung derartiger Hydroxyethylderivate mit Carbonsäurederivaten. Copolymere Polyasparaginsäureester sind, wie in DE 195 45 678 A beschrieben, durch Kondensation von Monoalkylestern der Malein- oder der Fumarsäure unter Ammoniakzugabe erhältlich. In DE 195 45 678 A ist weiterhin beschrieben, daß copolymere Polyasparaginsäureester durch Umsetzung von Polysuccinimid mit Alkoholen und einer sich gegebenenfalls anschließenden Hydrolyse zugänglich sind. Je nach Veresterungsgrad und Hydrophobie der Alkoholkomponente zeichnen sich Polyasparaginsäureester neben ihrer biologischen Abbaubarkeit durch hervorragende Eigenschaften als Stabilisatoren für O/W- und W/O-Emulsionen, als schaumstabilisierendes und schaumverstärkendes Cotensid in Wasch- und Reinigungsmitteln und als Komplexierungsmittel für Metallkationen aus.

In einer weiteren bevorzugten Ausführungsform sind die Polymere P2) ausgewählt unter Polyalkylenglykolen sowie Mono- oder Diethern von Polyalkylenglykolen. Bevorzugte Polyalkylenglykole weisen ein zahlenmittleres Molekulargewicht im Bereich von 1000 bis 4000000 g/mol, besonders bevorzugt von 1500 bis 1000000 g/mol, auf.

Geeignete Polyalkylenglykole und deren Mono- oder Diether können linear oder verzweigt, vorzugsweise linear, sein. Geeignete Polyalkylenglykole sind beispielsweise wasserlösliche oder wasserdispergierbare nichtionische Polymere, die Alkylenoxid-Wiederholungseinheiten aufweisen. Vorzugsweise beträgt der Anteil an Alkylenoxid-Wiederholungseinheiten mindestens 30 Gew.-%, bevorzugt mindestens 50 Gew.-% insbesondere wenigstens 75 Gew.-%, bezogen auf das Gesamtgewicht der Verbindung. Geeignete Polyalkylenglycole sind Polyethylenglycole, Polypropylenglycole, Polytetrahydrofurane und Alkylenoxidcopolymere. Geeignete Alkylenoxide zur Herstellung von Alkylenoxidcopolymeren sind z. B. Ethylenoxid, Propylenoxid, Epichlorhydrin, 1,2- und 2,3-Butylenoxid. Geeignet sind beispielsweise Copolymerisate aus Ethylenoxid und Propylenoxid, Copolymerisate aus Ethylenoxid und Butylenoxid sowie Copolymerisate aus Ethylenoxid, Propylenoxid und mindestens einem Butylenoxid. Die Alkylenoxidcopolymere können die Alkylenoxideinheiten statistisch verteilt oder in Form von Blöcken einpolymerisiert enthalten. Vorzugsweise beträgt in den Ethylenoxid/Propylenoxid-Copolymeren der Anteil an von Ethylenoxid abgeleiteten Wiederholungseinheiten 40 bis 99 Gew.-%. Besonders bevorzugt sind Ethylenoxid-Homopolymere und Ethylenoxid/Propylenoxid-Copolymere.

Geeignete Mono- und Diether von Polyalkylenglykolen sind die Mono-(C₁-C₁₈-alkylether) und Di-(C₁-C₁₈-alkylether). Bevorzugte Mono- und Diether von Polyalkylenglykolen sind die Mono-(C₁-C₆-alkylether) und Di-(C₁-C₆-alkylether). Speziell bevorzugt sind die Mono-(C₁-C₂-alkylether) und Di-(C₁-C₂-alkylether). Insbesondere bevorzugt sind Polyalkylenglycolmonomethylether und Polyalkylenglycoldimethylether.

Polymermischungen eignen sich beispielsweise zur Einstellung der mechanischen Eigenschaften und/oder der Auflösungseigenschaften der erfindungsgemäßen Mehrschichtfolien. Dabei können sich die in der Polymermischung eingesetzten Polymere hinsichtlich ihrer chemischen Zusammensetzung und/oder hinsichtlich ihrer physiko-chemischen Eigenschaften unterscheiden.

In einer speziellen Ausführungsform umfasst die erfindungsgemäße Mehrschichtfolie wenigstens eine Schicht, die eine Mischung aus 2 oder mehr Polymeren enthält. Geeignete Mischungen können 2 oder mehr verschiedene Polymerzusammensetzungen P1) oder wenigstens eine Polymerzusammensetzung P1) und wenigstens ein Polymer P2) oder 2 oder mehr verschiedene Polymere P2) enthalten.

In einer ersten Ausführungsform wird eine Polymermischung eingesetzt, die 2 oder mehr Polymere enthält, die sich hinsichtlich ihrer chemischen Zusammensetzung unterscheiden. In einer zweiten Ausführungsform wird eine Polymermischung eingesetzt, die 2 oder mehr Polymere enthält, die sich hinsichtlich ihres Molekulargewichts unterscheiden. Nach dieser zweiten Ausführungsform wird beispielsweise eine Polymermischung eingesetzt, die wenigstens zwei Polymere P2) enthält, die Wiederholungseinheiten enthalten, die sich von Vinylalkohol ableiten.

Die erfindungsgemäß herzustellenden Folien weisen wie beschrieben wenigstens eine Schicht S1) auf, die eine Polymerzusammensetzung P1) enthält oder aus einer Polymerzusammensetzung P1) besteht.

Vorzugsweise erfolgt die Herstellung der Polymerzusammensetzung P1), indem man
A) eine Monomerzusammensetzung M1) bereitstellt, die wenigstens ein Monomer A) enthält, das ausgewählt ist unter α,β-ethylenisch ungesättigten Mono- und Dicarbonsäuren, Salzen α,β-ethylenisch ungesättigter Mono- und Dicarbonsäuren, Anhydriden α,β -ethylenisch ungesättigter Mono- und Dicarbonsäuren und Mischungen davon,
B) die in Schritt A) bereitgestellte Monomerzusammensetzung M1) einer radikalischen Polymerisation in Gegenwart wenigstens einer Polyetherkomponente PE), die ausgewählt ist unter Polyetherolen mit einem zahlenmittleren Molekulargewicht von wenigstens 200 g/mol, Mono- und Di-(C₁-C₆-alkyl)ethern solcher Polyetherole, Polyethergruppen-haltigen Tensiden und Mischungen davon, und gegebenenfalls in Gegenwart wenigstens eines Zusatzstoffes unterzieht.

Bezüglich der in Schritt A) bereit gestellten Monomerzusammensetzung wird auf die zuvor genannten geeigneten und bevorzugten Monomere A) sowie die optionalen Comonomere B) und C) in vollem Umfang Bezug genommen.

Die radikalische Polymerisation der Monomerzusammensetzung M1) in Schritt B) wird vorzugsweise im Zulaufverfahren durchgeführt. Dabei können im Allgemeinen zumindest die Monomere in flüssiger Form dem Reaktionsansatz zudosiert werden. Unter den Dosierbedingungen flüssige Monomere können dem Reaktionsansatz ohne Zugabe eines Lösungsmittels LM1) zugeführt werden, ansonsten werden die Monomere als Lösung in einem geeigneten Lösungsmittel LM1) eingesetzt. Es können auch in fester Form vorliegende Monomere eingesetzt werden.

Die radikalische Polymerisation zur Herstellung der Polymerzusammensetzung P1) kann in Gegenwart eines Lösungsmittels LM1) erfolgen, das ausgewählt ist unter Wasser, C₁-C₆-Alkanolen, von PE) verschiedenen Polyolen, deren Mono- und Dialkylethern und Mischungen davon. Geeignete Polyole und deren Mono- und Dialkylether umfassen auch Alkylenglycolmono(C₁-C₄-alkyl)ether, Alkylenglycoldi(C₁-C₄-alkyl)ether, Oligoalkylenglycole und deren Mono(C₁-C₄-alkyl)ether und Di(C₁-C₄-alkyl)ether.

Das Lösungsmittel LM1) ist vorzugsweise ausgewählt unter Wasser, Methanol, Ethanol, n-Propanol, Isopropanol, n-Butanol, Ethylenglycol, Ethylenglycolmono(C₁-C₄-alkyl)ethern, Ethylenglycoldi(C₁-C₄-alkyl)ethern, 1,2-Propylenglycol, 1,2-Propylenglycolmono(C₁-C₄-alkyl)ethern, 1,2-Propylenglycoldi(C₁-C₄-alkyl)ethern, Glycerin, Polyglycerinen, Oligoalkylenglycolen mit einem zahlenmittleren Molekulargewicht von weniger als 1000 g/mol und Mischungen davon.

Geeignete Oligoethylenglycole sind unter den CTFA-Bezeichnungen PEG-6, PEG-8, PEG-12, PEG-6-32, PEG-20, PEG-150, PEG-200, PEG-400, PEG-7M, PEG-12M und PEG-115M kommerziell erhältlich. Dazu zählen speziell die Pluriol E ® Marken der BASF SE. Geeignete Alkylpolyalkylenglycole sind die entsprechenden Pluriol A ...E ® Marken der BASF SE.

Das Lösungsmittel LM1) ist besonders bevorzugt ausgewählt unter Wasser, Ethanol, n-Propanol, Isopropanol, Ethylenglycol, Diethylenglycol, Triethylenglycol, 1,2-Propylenglycol, 1,2-Dipropylenglycol und Mischungen davon.

In einer speziellen Ausführungsform wird als Lösungsmittel LM1) Wasser oder ein Gemisch aus Wasser und wenigstens einem von Wasser verschieden Lösungsmittel LM1) eingesetzt, ausgewählt unter Ethanol, n-Propanol, Isopropanol, Ethylenglycol, Diethylenglycol, Triethylenglycol, 1,2-Propylenglycol, 1,2-Dipropylenglycol und Mischungen davon.

In einer speziellen Ausführungsform erfolgt die radikalische Polymerisation in Schritt B) in Gegenwart eines Lösungsmittels LM1), das zu wenigstens 50 Gew.-%, vorzugsweise zu wenigstens 75 Gew.-%, speziell zu wenigstens 90 Gew.-%, bezogen auf das Gesamtgewicht des Lösungsmittels LM1), aus Wasser besteht. Insbesondere erfolgt die radikalische Polymerisation in Schritt B) in Gegenwart eines Lösungsmittels LM1), das vollständig aus Wasser besteht.

Bevorzugt erfolgt die radikalische Polymerisation in Schritt B) in Zulauf-Fahrweise, wobei Zuläufe, die wenigstens eine α,β-ethylenisch ungesättigte Carbonsäure enthalten, kein Lösungsmittel LM1) enthalten.

Die Dosierraten des Monomerzulaufs/der Monomerzuläufe sowie etwaiger weiterer Zuläufe (Initiator, Regler, etc.) werden vorzugsweise so gewählt, dass die Polymerisation mit der gewünschten Umsatzrate aufrechterhalten wird. Die Zugabe der einzelnen Zuläufe kann dabei kontinuierlich, periodisch, mit konstanter oder wechselnder Dosierrate, im Wesentlichen zeitgleich oder zeitversetzt erfolgen. Vorzugsweise erfolgt die Zugabe aller Zuläufe zum Reaktionsansatz kontinuierlich.

Bevorzugt werden zur radikalischen Polymerisation die Monomerzusammensetzung M1) und die Polyetherkomponente PE) in einem Gewichtsverhältnis von 0,5 : 1 bis 5 : 1, besonders bevorzugt von 0,7 : 1 bis 3 : 1, eingesetzt.

Sofern zur Herstellung der Polymerzusammensetzung ein Lösungsmittel LM1) eingesetzt wird, liegt das Gewichtsverhältnis der Polyetherkomponente PE) zur Komponente LM1) vorzugsweise im Bereich von 0,1 : 1 bis 5 : 1, besonders bevorzugt von 0,5 : 1 bis 3 : 1.

Bevorzugt erfolgt die radikalische Polymerisation in Schritt B) bei einer Temperatur im Bereich von 20 bis 95 °C, besonders bevorzugt von 30 bis 90 °C, insbesondere von 40 bis 80 °C.

Die radikalische Polymerisation in Schritt B) kann in Gegenwart wenigstens eines Zusatzstoffes erfolgen. Geeignete Zusatzstoffe sind beispielsweise Korrosionsinhibitoren, Entschäumer, Farbstoffe, Duftstoffe, Verdicker, Löslichkeitsvermittler, organische Lösemittel, Elektrolyte, antimikrobielle Wirkstoffe, Antioxidantien, UV-Absorber, Anti-Vergilbungsmittel, Bitterstoffe (z. B. Bitrex®) und Mischungen davon.

Bevorzugt umfasst die radikalische Polymerisation in Schritt B) des Verfahrens
B1) Bereitstellung einer Vorlage, die wenigstens einen Teil der Polyetherkomponente PE), gegebenenfalls wenigstens einen Teil des Reglers R) und, falls die Polymerisation in Gegenwart eines Lösungsmittels LM1) erfolgt, gegebenenfalls wenigstens einen Teil von LM1) enthält;
B2) Zugabe der Monomerzusammensetzung M1) in einem Zulauf oder in mehreren Zuläufen sowie Zugabe eines Zulaufs, der den Radikalstarter S), gelöst in einem Teil der wenigstens einen Polyetherkomponente PE) und/oder des Lösungsmittels LM1) enthält und gegebenenfalls Zugabe eines Zulaufs der die Menge des Reglers R) enthält, die nicht in der Vorlage eingesetzt wird,
B3) gegebenenfalls Nachpolymerisierung der in Schritt B2) erhaltenen Reaktionsmischung.

Üblicherweise wird die Vorlage vor der Zugabe der Zuläufe unter Rühren auf die Polymerisationstemperatur erwärmt.

Bevorzugt werden die einzelnen Reaktanden simultan in getrennten Zuläufen zugegeben, wobei die Flussraten der Zuläufe in der Regel über den Zeitraum der Zugabe möglichst konstant gehalten werden.

Bevorzugt beträgt die Menge an Polyetherkomponente PE) in der Vorlage (Schritt B1)) 30 bis 100 Gew.-%, besonders bevorzugt 65 bis 100 Gew.-% und insbesondere 80 bis 100 Gew.-% bezogen auf das Gesamtgewicht des zur Polymerisation eingesetzten Polyetherkomponente PE).

Bevorzugt liegt der Gehalt an Lösungsmittel LM1) in der Vorlage bei maximal 70 Gew.-%, bezogen auf das Gesamtgewicht der im Vorlauf befindlichen Einsatzstoffe. Bevorzugt liegt der Gehalt an Lösungsmittel im Vorlauf bei maximal 40 Gew.-%, insbesondere bei maximal 35 Gew.-%, bezogen auf das Gesamtgewicht der im Vorlauf befindlichen Einsatzstoffe. Die Lösungsmittelmenge ändert sich über den gesamten Verlauf des Verfahrens in der Regel nur um wenige Gewichtsprozente. Üblicherweise werden Lösungsmittel LM1) verwendet, die einen Siedepunkt bei Normaldruck (1 bar) von unter 240 °C aufweisen.

In einer speziellen Variante enthält die Vorlage kein Lösungsmittel. Dieses wird erst in Schritt B2) über wenigstens einen der Zuläufe zugegeben. In einer ganz speziellen Variante wird kein Lösungsmittel vorgelegt sowie über den gesamten Verlauf des Verfahrens kein Lösungsmittel zugegeben.

In einer weiteren speziellen Variante wird das Lösungsmittel vollständig vorgelegt.

In einer weiteren speziellen Variante enthält die Vorlage keinen Regler. Falls ein Regler eingesetzt wird, wird dieser erst in Schritt B2) über wenigstens einen der Zuläufe zugegeben.

Die Zugabe der Zuläufe in Schritt B2) erfolgt über einen Zeitraum der in vorteilhafter Weise so gewählt wird, dass die bei der exothermen Polymerisationsreaktion entstehende Reaktionswärme ohne größeren technischen Aufwand, z. B. ohne die Verwendung eines Rückflusskühlers, abgeführt werden kann. Üblicherweise erfolgt die Zugabe der Zuläufe über einen Zeitraum von 1 bis 10 Stunden. Bevorzugt erfolgt die Zugabe der Zuläufe über einen Zeitraum von 2 bis 8 Stunden, besonders bevorzugt über 2 bis 6 Stunden.

In einer alternativen Ausführung erfolgt die radikalische Polymerisation in Schritt B) des Verfahrens kontinuierlich. Dann erfolgt die Zugabe der Monomerzusammensetzung M1), der Polyetherkomponente PE), wenigstens eines Initiators, gegebenenfalls wenigstens eines Reglers R) und gegebenenfalls wenigstens eines Lösungsmittels LM1) in den Reaktor in Form von einem flüssigen Strom oder vorzugsweise von wenigstens zwei flüssigen Strömen. In der Regel enthält der den Initiator enthaltende Strom im Allgemeinen nicht auch den Regler. Werden wenigstens zwei flüssige Ströme eingesetzt, so werden diese in üblicher Weise unter Erhalt des Reaktionsgemischs vermischt. Die Polymerisation kann einstufig oder in zwei oder mehr als zwei, d. h. in 2, 3, 4, 5 oder mehr Stufen, erfolgen. In einer geeigneten Ausführungsform wird im Falle einer mehrstufigen Polymerisation zwischen wenigstens zwei der Polymerisationsstufen wenigstens ein zusätzlicher Strom zugemischt. Dabei kann es sich um einen monomerhaltigen Strom, initiatorhaltigen Strom, lösungsmittelhaltigen Strom, reglerhaltigen Strom, eine Mischung daraus und/oder um einen beliebigen anderen Stoffstrom handeln.

Während der radikalischen Polymerisation werden in der Regel das optional eingesetzte Lösungsmittel und/oder etwaig entstehende Kondensationsprodukte nicht abgeführt. D. h. während der Polymerisation findet üblicherweise kein oder ein im Rahmen der technischen Möglichkeiten nur sehr geringer Stoffaustausch mit der Umgebung statt.

Die Polymerisation kann in der Regel bei Umgebungsdruck oder vermindertem oder erhöhtem Druck erfolgen. Bevorzugt wird die Polymerisation bei Umgebungsdruck durchgeführt.

Die Polymerisation erfolgt in der Regel bei konstanter Temperatur, kann aber auch bei Bedarf während der Polymerisation variiert werden. Bevorzugt wird die Polymerisationstemperatur über den gesamten Reaktionszeitraum, d. h. der Schritte B2) und B3), möglichst konstant gehalten. Je nachdem welche Einsatzstoffe im erfindungsgemäßen Verfahren eingesetzt werden, bewegt sich die Polymerisationstemperatur üblicherweise im Bereich von 20 bis 95 °C. Bevorzugt bewegt sich die Polymerisationstemperatur im Bereich von 30 bis 90 °C und insbesondere im Bereich von 40 bis 80 °C. Sofern die Polymerisation nicht unter erhöhtem Druck durchgeführt wird und der Reaktionsmischung wenigstens ein optionales Lösungsmittel LM1) zugesetzt wurde, bestimmt das Lösungsmittel bzw. Lösungsmittelgemisch durch die entsprechenden Siedetemperaturen die maximale Reaktionstemperatur.

Die Polymerisation kann in Abwesenheit oder in Gegenwart eines Inertgases erfolgen. Üblicherweise wird die Polymerisation in Anwesenheit eines Inertgases durchgeführt. Unter Inertgas wird in der Regel ein Gas verstanden, welches unter den gegebenen Reaktionsbedingungen keine Reaktion mit den an den Reaktion beteiligten Edukten, Reagenzien, Lösungsmitteln oder den entstehenden Produkten eingeht.

Falls die Polymerisation in Gegenwart eines Lösungsmittels durchgeführt wird, so ist dieses ausgewählt unter den zuvor beschriebenen Lösungsmitteln LM1).

Zur Herstellung der Polymerisate können die Monomeren mit Hilfe von Radikale bildenden Initiatoren, im Nachfolgenden auch als Radikalstarter oder Starter bezeichnet, polymerisiert werden. Als Radikalstarter (Initiatoren) für die radikalische Polymerisation kommen grundsätzlich alle Radikalstarter in Frage, die im Reaktionsmedium, wie es zum Zeitpunkt ihrer Zugabe vorherrscht, im Wesentlichen löslich sind und bei den gegebenen Reaktionstemperaturen eine ausreichende Aktivität besitzen, um die Polymerisation zu starten. In das erfindungsgemäße Verfahren kann ein einzelner Radikalstarter oder eine Kombination wenigstens zweier Radikalstarter eingesetzt werden. Im letzteren Fall können die wenigstens zwei Radikalstarter im Gemisch oder vorzugsweise getrennt, gleichzeitig oder nacheinander, z. B. zu unterschiedlichen Zeitpunkten im Reaktionsverlauf, eingesetzt werden.

Als Radikalstarter für die radikalische Polymerisation können die hierfür üblichen Peroxo- und/oder Azo-Verbindungen eingesetzt werden, beispielsweise Wasserstoffperoxid, Alkali- oder Ammoniumperoxodisulfate (wie z. B. Natriumperoxodisulfat), Diacetylperoxid, Dibenzoylperoxid, Succinylperoxid, Di-tert.-butylperoxid, tert.-Butylperoxybenzoat, tert.-Butylperoxypivalat, tert.-Butylperoxyneodecanoat, tert.-Butylperoxy-2-ethylhexanoat, tert.-Butylperoxymaleinat, Cumolhydroperoxid, Diisopropylperoxidicarbamat, Bis-(o-toluoyl)-peroxid, Didecanoylperoxid, Dioctanoylperoxid, tert.-Butylperoctoat, Dilauroylperoxid, tert.-Butylperisobutyrat, tert.-Butylperacetat, Di-tert.-amylperoxid, tert.-Butylhydroperoxid, 2,2'-Azo-bis-isobutyronitril, 2,2'-Azo-bis-(2-amidinopropan)dihydrochlorid (= Azo-bis(2-methylpropionamidin)dihydrochloride), Azo-bis(2,4-dimethylvaleronitril) oder 2,2'-Azo-bis-(2-methyl-butyronitril).

Geeignet sind auch Initiatormischungen oder Redox-Initiator-Systeme, wie z. B. Ascorbinsäure/Eisen(II)sulfat/Natriumperoxodisulfat,
tert.-Butylhydroperoxid/Natriumdisulfit,
tert.-Butylhydroperoxid/Natriumhydroxymethansulfinat,
H₂O₂/Cu^{I}.

In dem erfindungsgemäßen Verfahren bewegt sich die Menge an eingesetztem Initiatorsystem (Starter) im Bereich von 0,01 bis 10 pphm, bevorzugt im Bereich von 0,1 bis 5 pphm, besonders bevorzugt im Bereich von 0,2 bis 2 pphm und insbesondere im Bereich von 0,3 bis 1,5 pphm (parts per hundred monomer = Gewichtsteile pro hundert Gewichtsteile Monomer).

Im erfindungsgemäßen Verfahren wird der Radikalstarter in der Regel als Lösung in einem Lösungsmittel bereitgestellt, das wenigstens eines der zuvor genannten Lösungsmittel LM1) und gegebenenfalls zusätzlich wenigstens einen Polyether der Polyetherkomponente PE) umfasst.

Die Polymerisation kann ohne Einsatz eines Reglers (Polymerisationsregler) oder in Gegenwart wenigstens eines Reglers erfolgen. Als Regler werden allgemein Verbindungen mit hohen Übertragungskonstanten bezeichnet, die Kettenübertragungsreaktionen beschleunigen und damit eine Herabsetzung des Polymerisationsgrades der resultierenden Polymere bewirken. Bei den Reglern kann man zwischen mono-, bi- oder polyfunktionalen Reglern unterscheiden je nach Anzahl der funktionellen Gruppen im Molekül, die zu einer oder mehreren Kettenübertragungsreaktionen führen können. Geeignete Regler werden beispielsweise ausführlich beschrieben von K. C. Berger und G. Brandrup in J. Brandrup, E. H. Immergut, Polymer Handbook, 3. Aufl., John Wiley & Sons, New York, 1989, S. II/81 - II/141.

Als Regler eignen sich beispielsweise Aldehyde wie Formaldehyd, Acetaldehyd, Propionaldehyd, n-Butyraldehyd, Isobutyraldehyd.

Ferner können als Regler Ameisensäure, ihre Salze oder Ester, wie Ammoniumformiat, 2,5-Diphenyl-1-hexen, Hydroxylammoniumsulfat und Hydroxylammoniumphosphat eingesetzt werden.

Weitere geeignete Regler sind Allylverbindungen, wie z. B. Allylalkohol, funktionalisierte Allylether, wie Allylethoxylate, Alkylallylether, oder Glycerinmonoallylether.

Bevorzugt werden als Regler Verbindungen eingesetzt, die Schwefel in gebundener Form enthalten. Verbindungen dieser Art sind beispielsweise anorganische Hydrogensulfite, Disulfite und Dithionite oder organische Sulfide, Disulfide, Polysulfide, Sulfoxide und Sulfone. Dazu zählen Di-n-butylsulfid, Di-n-octylsulfid, Diphenylsulfid, Thiodiglykol, Ethylthioethanol, Diisopropyldisulfid, Di-n-butyldisulfid, Di-n-hexyldisulfid, Diacetyldisulfid, Diethanolsulfid, Di-t-butyltrisulfid, Dimethylsulfoxid, Dialkylsulfid, Dialkyldisulfid und/oder Diarylsulfid. Geeignet als Polymerisationsregler sind weiterhin Thiole (Verbindungen, die Schwefel in Form von SH-Gruppen erhalten, auch als Mercaptane bezeichnet). Bevorzugt sind als Regler mono-, bi- und polyfunktionale Mercaptane, Mercaptoalkohole und/oder Mercaptocarbonsäuren. Beispiele für diese Verbindungen sind Allylthioglykolate, Ethylthioglykolat, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan oder n-Dodecylmercaptan. Beispiele für bifunktionale Regler, die zwei Schwefelatome in gebundener Form enthalten sind bifunktionale Thiole wie z. B. Dimercaptopropansulfonsäure (Natriumsalz), Dimercaptobernsteinsäure, Dimercapto-1-propanol, Dimercaptoethan, Dimercaptopropan, Dimercaptobutan, Dimercaptopentan, Dimercaptohexan, Ethylenglykol-bis-thioglykolate und Butandiol-bis-thioglykolat. Beispiele für polyfunktionale Regler sind Verbindungen, die mehr als zwei Schwefel in gebundener Form enthalten. Beispiele hierfür sind trifunktionale und/oder tetrafunktionale Mercaptane.

Besonders bevorzugt ist der Regler ausgewählt unter Mercaptoethanol, Mercaptoessigsäure, Mercaptopropionsäure, Ethylhexylthioglycolat und Natriumhydrogensulfit.

Bevorzugt als Regler sind weiterhin hypophosphorige Säure (Phosphinsäure) und Salze der hypophosphorigen Säure. Ein bevorzugtes Salz der hypophosphorigen Säure ist das Natriumsalz.

Wird in dem erfindungsgemäßen Verfahren ein Regler eingesetzt wird, so beträgt die Menge üblicherweise 1 bis 40 pphm ("parts per hundred monomer", d.h. Gewichtsteile bezogen auf hundert Gewichtsteile Monomerzusammensetzung). Bevorzugt liegt die in dem erfindungsgemäßen Verfahren eingesetzte Menge an Regler im Bereich von 3 bis 30 pphm, besonders bevorzugt im Bereich von 5 bis 25 pphm. Es ist auch möglich, die Polymerisation ohne Zusatz eines Reglers durchzuführen.

Üblicherweise wird der Regler in Schritt B2) vollständig über einen der Zuläufe kontinuierlich zur Polymerisationsmischung zugegeben. Es ist jedoch auch möglich, den Regler entweder vollständig zur Vorlage, d.h. vor der eigentlichen Polymerisation, zuzugeben oder es wird nur ein Teil des Reglers in der Vorlage vorgelegt und der Rest in Schritt B2) über einen der Zuläufe kontinuierlich zur Polymerisationsmischung zugegeben. Die Zugabe des Reglers kann dabei jeweils ohne oder mit Lösungsmittel LM1) erfolgen.

Die Menge des Reglers und die Art wie dieser zur Reaktionsmischung zugegeben wird, haben einen starken Einfluss auf das mittlere Molekulargewicht der Polymerzusammensetzung. Wenn kein Regler oder nur eine geringe Menge Regler eingesetzt wird und/oder wenn die Zugabe überwiegend vor der Polymerisation erfolgt, führt dies in der Regel zu höheren mittleren Molekulargewichten des gebildeten Polymers. Werden hingegen größere Menge Regler verwendet und/oder findet die Zugabe des Reglers größtenteils während der Polymerisation statt (Schritt B2)), führt dies in der Regel zu einem kleineren mittleren Molekulargewicht.

Bevorzugt wird die nach Beendigung der Polymerisation (Schritt B3)) erhaltene Polymerzusammensetzungen in ein geeignetes Gefäß transferiert und gegebenenfalls direkt auf Umgebungstemperatur (20 °C) abgekühlt.

Die auf diese Weise erhaltenen Polymerzusammensetzungen P1) eignen sich vorteilhaft zur Herstellung von Mehrschichtfolien, z. B. für den Einsatz als Wasch- oder Reinigungsmittel oder als Umhüllung eines flüssigen Wasch- oder Reinigungsmittels. Die Herstellung von Mehrschichtfolien und von Umhüllungen auf deren Basis wird im Folgenden noch näher beschrieben.

Das gewichtsmittlere Molekulargewicht M_{w} der erfindungsgemäßen Polymerzusammensetzung kann bspw. mittels Gelpermeationschromatographie (GPC) in wässriger Lösung unter Verwendung von neutralisierter Polyacrylsäure als Polymerstandard bestimmt werden wie dem Fachmann allgemein bekannt. Bei dieser Art der Molekulargewichtsbestimmung werden die Komponenten der Polymerzusammensetzung erfasst, welche die Monomere M1) einpolymerisiert enthalten. Die Polymerzusammensetzung P1) weist vorzugsweise ein gewichtsmittleres Molekulargewicht von 2000 bis 100000 g/mol, bevorzugt von 3000 bis 80000 g/mol, auf.

Die Polymerzusammensetzung P1) verfügt über eine zur Folienbildung geeignete ausreichend niedrige Glasübergangstemperatur T_{G}. Vorzugsweise weisen die Polymerzusammensetzungen P1) eine Glasübergangstemperatur T_{G} im Bereich von 0 bis 80 °C, besonders bevorzugt von 0 bis 60 °C, insbesondere von 0 bis 30 °C, auf.

Die Polymerzusammensetzung P1) weist vor ihrem Einsatz zur Folienherstellung (d. h. bevor sie eine Trocknung durchläuft) vorzugsweise einen Gehalt an Säuregruppen von mehr als 1 mmol/g, besonders bevorzugt von mehr als 1,3 mmol/g auf. Die Polymerzusammensetzung P1) weist vorzugsweise vor ihrem Einsatz zur Folienherstellung einen Gehalt an Säuregruppen von höchstens 15 mmol/g auf. Die Polymerzusammensetzung P1) weist vor ihrem Einsatz zur Folienherstellung insbesondere einen Gehalt an Säuregruppen von 1,5 mmol/g bis 10 mmol/g auf.

In einer bevorzugten Ausführungsform liegen die Säuregruppen der erfindungsgemäßen Polymerzusammensetzung in nicht neutralisierter Form vor.

Die vorliegende Erfindung betrifft ferner eine funktionelle wasserlösliche Folie, herstellbar oder hergestellt durch einem Verfahren wie hier dargestellt und beschrieben.

Wie hier verwendet, umfassen die Singularformen von "ein(e)" oder "der/die/das" jeweils auch die Pluralformen, sofern nicht entsprechend anders dargestellt.

Die Darstellung von "und/oder"-Verbindungen wie hier verwendet umfasst jeweils sowohl die einzelnen Bedeutungen "und" und "oder", als auch die Bedeutung "alle oder jede einzelne Kombination(en)" der jeweiligen Aufzählung.

Der Begriff "etwa" wie hier verwendet ist synonym zu verstehen zu "ungefähr" oder "c(irc)a" und umfasst Bereiche von 20%, bevorzugt 15%, 10%, 5%, 3%, 2%, oder 1% jeweils über- und unterhalb des angegeben Wertes. Der Begriff "etwa" umfasst ebenfalls den jeweils exakten angegeben Wert.

Der Begriff "umfassend" oder "enthaltend" (sowie Formen davon) bedeutet sowohl die Möglichkeit der Anwesenheit weiterer Bestandteile oder Formen, umfasst aber jeweils auch die Form "bestehend aus", welche weitere Bestandteile oder Formen ausschließt.

Der Begriff "herstellbar durch" umfasst alle durch das genannte Verfahren herstellbaren Produkte, unabhängig davon, ob sie direkt durch das bezeichnete Verfahren hergestellt wurden. Letztere Produkte werden hier durch den Begriff "hergestellt durch" bezeichnet. Der Begriff "herstellbar durch" wie hier verwendet umfasst als eingeschränkte Form aber auch den engeren Begriff "hergestellt durch" und ist ggf. durch diesen ersetzbar.

Die Figuren zeigen:
Figur 1 1. Rührorgan; 2. Einlass/Auslass; 3. doppelwandiger Kessel; 4. Pumpe; 5. Umpumpe; 6. Filtrationseinheiten; 7. Kessel
Figur 2 1. Abwicklung mit Rolle des Trägermaterials; 2. Stützrolle; 3. Kastenrakel; 4. Flüssigkeitszufuhr (Feed); 5. Online Messung Flächengewicht. 6./7./8. Konvektive Trockner (unterschiedliche T und Luftstrom); 9. Aufwicklung des beschichteten Trägermaterials
Figur 3 1. Abwicklung mit Rolle des Trägermaterials; 2. Stützrolle; 3. Schlitzdüse zum Auftragen der Polymerzusammensetzung; 4. Flüssigkeitszufuhr der Schlitzdüse (Feed); 5./6./7. Konvektive Trockner (unterschiedliche T und Luftstrom); 8.Aufwicklung des beschichteten Trägermaterials
Figur 4 1. Abwicklung mit Rolle des Trägermaterials; 2. Stützrolle; 3. 2-lagige Schlitzdüse zum gleichzeitigen Auftragen zweier Polymerzusammensetzung; 4. Flüssigkeitszufuhr der Schlitzdüse (bottom layer); 5. Flüssigkeitszufuhr der Schlitzdüse (top layer); 6./7./8. Konvektive Trockner (unterschiedliche T und Luftstrom); 9. Aufwicklung des beschichteten Trägermaterials
Figur 5 1. 2-lagige Schlitzdüse zum gleichzeitigen Auftragen zweier Polymerzusammensetzung; 2. Flüssigkeitszufuhr der Schlitzdüse (bottom layer); 3. Flüssigkeitszufuhr der Schlitzdüse (top layer); 4. Stahlband als Trägermaterial (über beide Rollen im Kreis gefahren); 5./6. Konvektive Trocknungszonen (unterschiedliche T und Luftstrom); 7. Abzug der 2-lagigen Folie vom Stahlband; 8. Freistehende Folie; 9./10. Nachtrocknung der freistehenden 2-lagigen Folie (unterschiedliche T und Luftstrom); 11. Kühlwalze (optional); 12. Aufwicklung der 2-lagigen Folie
Figur 6 1. Abwicklung mit Rolle des Trägermaterials; 2. Stützrolle; 3. Sprühdüse; 4. Flüssigkeitszufuhr (Feed); 5./6. Konvektive Trockner (unterschiedliche T und Luftstrom); 7. Abwicklung Laminierfolie; 8. Stützrolle; 9. Anpressrolle; 10. Aufwicklung des gefügten Folienverbundes (Laminat)
Figur 7 1. 2-lagige Schlitzdüse zum gleichzeitigen Auftragen zweier Polymerzusammensetzung; 2. Flüssigkeitszufuhr der Schlitzdüse (bottom layer); 3. Flüssigkeitszufuhr der Schlitzdüse (top layer); 4. Heizzylinder; 5. Abzug der 2-lagigen Folie vom Stahlband; 6. Freistehende Folie; 7./8. Nachtrocknung der freistehenden 2-lagigen Folie (unterschiedliche T und Luftstrom); 9. Kühlwalze (optional); 10. Aufwicklung der 2-lagigen Folie
Figur 8 1. 2-lagige Schlitzdüse zum gleichzeitigen Auftragen zweier Polymerzusammensetzung; 2. Flüssigkeitszufuhr der Schlitzdüse (bottom layer); 3. Flüssigkeitszufuhr der Schlitzdüse (top layer); 4. Stahlband als Trägermaterial (über beide Rollen im Kreis gefahren); 5./6. Konvektive Trocknungszonen (unterschiedliche T und Luftstrom); 7. Abzug der 2-lagigen Folie vom Stahlband; 8. Freistehende Folie; 9./12. Nachtrocknung der freistehenden 2-lagigen Folie (unterschiedliche T und Luftstrom); 10. Schlitzdüse zum Auftragen einer weiterer Lage Polymerzusammensetzung; 11. Flüssigkeitszufuhr der Schlitzdüse; 13. Kühlwalze (optional); 14. Aufwicklung der 2-lagigen Folie
Figur 9 1. 2-lagige Schlitzdüse zum gleichzeitigen Auftragen zweier Polymerzusammensetzung; 2. Flüssigkeitszufuhr der Schlitzdüse (bottom layer); 3. Flüssigkeitszufuhr der Schlitzdüse (top layer); 4. Stahlband als Trägermaterial (über beide Rollen im Kreis gefahren); 5./6. Konvektive Trocknungszonen (unterschiedliche T und Luftstrom); 7. Abzug der 2-lagigen Folie vom Stahlband; 8. Freistehende Folie; 9./13. Nachtrocknung der freistehenden 2-lagigen Folie (unterschiedliche T und Luftstrom); 10. Auftragswalze zum Auftragen einer weiterer Lage Polymerzusammensetzung; 11. Kammer für Polymerzusammensetzung; 12. Flüssigkeitszufuhr (Feed); 14. Kühlwalze (optional); 15. Aufwicklung der 2-lagigen Folie
Figur 10 1. Trägermaterial; 2. Stützrolle; 3. Schlitzdüse zum Auftragen der Polymerzusammensetzung (1 oder mehrlagig); 4. Flüssigkeitszufuhr der Schlitzdüse (Feed); 5. Vakuum Box; 6. Unterdruck erzeugendes Gebläse; 7. Beschichtetes Trägermaterial
Figur 11 1. Film / Substrat; 2. Applikationsrollen; 3. Kammerrakel; 4. Kanal / Zufuhr Beschichtungslösung; 5. Rückfluss zum Vorlagebehälter
Figur 12 1. Film / Substrat; 2. Applikationsrollen; 3. Schlitzdüsen; 4.Kanal / Zufuhr Beschichtungslösung
Figur 13 1. Rakel (Doctor blade); 2. Film / Substrat; 3. Führungsrolle / Anpressrolle; 4. Applikationsrolle; 5. Reservoir Beschichtungslösung
Figur 14 1. Reservoir Beschichtungslösung; 2. Rolle; 3. Rakel; 4. Applikationsrolle; 5. Film / Substrat; 6. Stützrolle/Anpressrolle; 7. Rolle

Die vorliegende Erfindung wird durch die folgenden Beispiele näher erläutert und illustriert, ohne auf die dort aufgeführten Ausführungsformen und Merkmale beschränkt zu sein.

### Beispiele

### Ansetzen der Lösungen

### Herstellung der Polymerzusammensetzung P1-1)

**Tabelle 1**

| | Einsatzstoff | Menge (Gew.-%) | Gehalt (%) |
|---|---|---|---|
| Vorlage | C₁₃C₁₅-Oxoalkohol mit 7 EO | 24,40 | 100,00 |
| | Wasser^{a)} | 18,40 | 100,00 |
| Zulauf 1 | Acrylsäure | 48,80 | 100,00 |
| Zulauf 2 | Initiator^{b)} | 0,34 | 100,00 |
| | Wasser^{a)} | 3,89 | 100,00 |
| Zulauf 3 | 2-Mercaptoethanol | 0,49 | 100,00 |
| | Natriumhypophosphit | 1,33 | 55,00 |
| | Wasser^{a)} | 2,42 | 100,00 |

| | | | |
|---|---|---|---|
| a) vollentsalztes Wasser, b) 2,2'-Azobis(2-methylpropionamidine)dihydrochloride (CAS-Nr. 2997-92-4) | | | |

Die Vorlage wurde unter Rühren mit 100 Upm auf 75 °C erwärmt. Dann wurden die Zuläufe 1, 2 und 3 in 4 h zudosiert und das Reaktionsgemisch eine weitere Stunde nachpolymerisiert. Anschließend ließ man auf Raumtemperatur abkühlen. Die Polymerzusammensetzung fällt in Form einer transparenten und dickflüssigen Lösung an. Das gewichtsmittlere Molekulargewicht M_{w} der erhaltenen Polymerzusammensetzung betrug 12.100 g/mol.
Das gewichtsmittlere Molekulargewicht Mw der erhaltenen Polymerzusammensetzung P1-1) wurde mittels Gelpermeationschromatographie (GPC) in wässriger Lösung unter Verwendung von neutralisierter Polyacrylsäure als Polymerstandard bestimmt. Bei dieser Art der Molekulargewichtsbestimmung werden die Komponenten der Polymerzusammensetzung erfasst, welche die zuvor genannten Monomere M) einpolymerisiert enthalten.

Standard: neutralisierte Polyacrylsäure. Die Kalibrierung erfolgte mit eng verteilten Na-PAA-Standards der Fa. PSS (Polymer Standards Service GmbH) mit Molekulargewichten von M = 1.250 bis M = 1.100.000 g/mol. Zusätzlich wurden PAA-Standards der Fa. American Polymer Standards Corporation mit Molekulargewicht M = 1.770 sowie M = 900 g/mol verwendet. Die Werte außerhalb dieses Elutionsbereiches wurden extrapoliert.
Elutionsmittel: 0,01 mol/l Phosphatpuffer pH=7,4 in destilliertem Wasser mit 0,01 M NaN₃ Fluss: 0.8 mL/min
Injektionsmenge: 100 µL
Konzentration: 1.5 mg/mL
Die Probelösungen wurden über Millipore IC Millex-LG Filter (0,2 µm)
filtriert.
Säulenbezeichnung: TSKgel GMPWXL
Säulensatz: 2 Trennsäulen (Länge = je 30 cm), Ausschlußgrenze 1.000 - 8.000.000 g/mol Detektor: DRI Agilent 1200 UV Agilent 1200 VWD [260nm]

### Herstellung einer Applikationslösung A (für Folienschichten aus Polyvinylalkohol)

18 g eines festen Polyvinylalkohols (Poval® 26-88 der Fa. Kuraray, nicht flüchtige An-teile: 97,5 %) wurden in 82 g deionisiertem Wasser bei 60°C unter Rühren gelöst. 1,8 g Glycerin (>99,5%, Sigma Aldrich) und 0,18 g eines C₁₃C₁₅-Oxoalkohols mit 7 EO wurden zu 100 g der so hergestellten Polyvinylalkohol-Lösung gegeben. Die Lösung wurde auf 80°C erwärmt. Die Polyvinylalkohol -Applikationslösung A wurde gut durchmischt und bei 80°C temperiert bis die eingerührte Luft komplett entwichen war.

### Herstellung einer Applikationslösung B (für Folienschichten aus Polymerzusammensetzung P1-1)

Zu 397,30g der oben beschrieben Polymerzusammensetzung P1-1) werden unter Rühren bei 80°C zuerst 29,00g Glycerin (>99,5%, Sigma Aldrich) und zuletzt 26,80g deionisiertes Wasser gegeben. Die -Applikationslösung B wurde gut durchmischt und bei 80°C temperiert bis die eingerührte Luft komplett entwichen war.

### Herstellung einer Applikationslösung C (für Folienschichten aus Carboxymethylcellulose)

4 g einer Natrium-Carboxymethylcellulose (WALOCEL® CRT 2000 PA von Dow Wolff Cellulosics, Feststoffgehalt: 92 %) wurden in 96 g deionisiertem Wasser bei 60°C unter Rühren gelöst. 1 g Glycerin (>99,5%, Sigma Aldrich) wurden zu 100 g der so hergestellten Carboxymethylcellulose-Lösung gegeben. Die Lösung wurde auf 80°C erwärmt. Die Carboxymethylcellulose-Applikationslösung C wurde gut durchmischt und bei 80°C temperiert bis die eingerührte Luft komplett entwichen war.

### Herstellung einer Applikationslösung D (für Folienschichten, die ein als Farbübertragungsinhibitor (FÜI) wirkendes Copolymer enthalten)

51,55 g eines Copolymers aus 1-Vinylpyrrolidon und 1-Vinylimidazol (Sokalan® HP 56 Granulat der Fa. BASF SE, Feststoffgehalt: 97%) wurden in 48,45 g deionisiertem Wasser unter Rühren gelöst. 12,5 g Glycerin (>99,5%, Sigma Aldrich) wurden zu 100 g der hergestellten Farbübertragungsinhibitor-Lösung gegeben. Anschließend wurde durch Zugabe von deionisiertem Wasser die Polymer-Konzentration der Lösung auf 35,0 Gew.-% eingestellt. Die Polymer-Applikationslösung D wurde gut durchmischt und bei 80°C temperiert bis die eingerührte Luft komplett entwichen war.
Wässrige Lösungen der Schichten S1-S2, sofern es sich um inkludierbare Schichten handelt, werden in gerührten, heizbaren Kesseln hergestellt **(****Figur 1****).** Diese Kessel bestehen aus korrisionsfesten Materialien, bzw. sind mit ihnen überzogen. Hierzu gehören emaillierte Kessel bzw. solche aus Stählen wie hier oben allgemein beschrieben. Die einzusetzenden Rührer sind so auszulegen, dass sie eine gute Durchmischung der Lösung gewährleisten (z.B. Intermig-, Ankerrührer, etc.), wobei das Eintragen von Luft in die Lösung zu minimieren ist, z.B. durch komplettes eintauchen der Rührorgane in die Lösung oder angepasste Rührerdrehzahl. Zur Lösungsherstellung wird Wasser (i.d.R entionisiertes Wasser) vorgelegt und bei Raumtemperatur wird unter Rühren das entsprechende Polymer hinzugegeben. Die Mischung wird im Anschluss aufgeheizt, dies kann durch Zugabe von Direktdampf oder über eine Mantelheizung erfolgen. Bei Einsatz von Direktdampf wird die durch den Dampf eingetragene Wassermenge in der gesamt Mengenbilanz berücksichtigt. Weiterhin können die Polymere auch mit dem Wasser direkt über drehzahlgeregelte Mischer (dynamische Mischer) gemischt und oder gelöst werden. Die Polymerlösungen können auf Verarbeitungstemperatur temperiert werden oder im weiteren Verlauf des Prozesses auf diese Temperatur reguliert werden. Weitere Zuschlagsstoffe wie Weichmacher, Füller, Aktivstofffe (Enzyme, Duftstoffe, etc.) können mit dem Verdünnungswasser vorgelegt, nach Lösungsherstellung oder beim Fördern der Lösung hinzugemischt werden. Zuführungen zu weiteren Mischern und Düsen sind so ausgelegt, dass entweder die Temperatur der Lösung konstant bleibt oder so, dass sie auf eine gewünschte Temperatur absinken. Ein Teil dieser Leitungen ist so ausgelegt, dass die Lösung zum Teil oder ganz im "Kreis" gefahren werden kann, wodurch bei Anfahrprozessen, Unterbrechungen oder bei vermindertem Durchsatz, Lösungen und Leitungen temperiert werden können und Gelbildung etc. verhindert werden kann. Weiterhin befindet sich mind. eine Filtereinheit in besagter Leitungsstrecke, in der vorhandene Fremdstoffe sowie Gelpartikel entfernt werden. Optional ist die Filtereinheit rückspülbar. Optional werden die geförderten Polymerlösungen vor dem gießen in einem Vorlagebehälter gepumpt, dessen Ein- und Auslass sich im Boden des Behälters befinden. Optional kann der Einlass auch seitlich oder oben im Behälter montiert sein. Optional befindet sich ein weiteres Rührorgan in besagtem Vorlagebehälter. Der Behälter ist so zu gestalten, dass Lufteintrag in die Lösung minimiert wird. Durch den Einbau eines Vorlagebehälters kann die diskontinuierliche Lösungsherstellung ab gepuffert werden und ein kontinuierliches Gießen des Filmes ist gewährleistet. Optional befindet sich nach dem Vorlagegefäß eine weitere Filtrationseinheit. Behälter und Filter sind so auszurüsten, dass ein Temperaturabfall der Lösung minimiert wird. Folienherstellung

Alle Schichten aus den Applikationslösungen A bis D können hierbei u.a. weiterhin auch Weichmacher enthalten wie hier allgemein beschrieben.

Die Folienschichtenzusammensetzung entspricht der Zusammensetzung der Mehrschichtfolie nach der Trocknung. Die applizierten Lösungen werden im allgemeinen Teil "Ansetzen der Lösung" beschrieben.

### Dickenmessung und Bestimmung des Flächengewichts:

Foliendicken wurden über eine digitale Messuhr (Mitutoyo Absolute Digimatic Messuhr Modell ID-H) mit einem flachen, kreisrunden Taster von 5 mm Durchmesser bestimmt. Die Dickenmessung erfolge über eine Mittelung von mindestens 10 Messpositionen je Folie. Die Schichtdickenschwankungen bewegen sich in einem Bereich von ± 10%. Das Flächengewicht wurde gravimetrisch über eine Fläche von 80mm x 80mm bestimmt.

### Beispiel 1.1:

### 2-schichtige Folie A-B: 1. Schicht aus Polyvinylalkohol, 2. Schicht aus Polymerzusammensetzung P1-1)

Zur Herstellung der Mehrschichtfolie wird an einer Beschichtungsanlage der Firma Mathis AG mit einer Kastenrakel als Auftragswerk verwendet **(****Figur 2****).** Die Applikationslösung A (Herstellung wie oben beschrieben) wird in der Kastenrakel vorgelegt und bei einer Bandgeschwindigkeit von 0,5m/min auf eine silikonisierte Polyesterfolie (Foliendicke 36µm, Hostaphan® RN 2PRK) als Trägermaterial aufgetragen. Über eine berührungslose online Schichtdickenmessung basierend auf Ultraschallabsorption (MeSys GmbH, USM-200) wird der Rakelspalt bis zum Erreichen des gewünschten Flächengewichts von 10g/m² variiert. Anschließend wird der Film in einem Schlitzdüsentrockner konvektiv getrocknet. Die Temperaturen der 3 jeweils 1m langen Trocknerzonen betragen 100, 80 und 60°C in der Reihenfolge der Beschichtungsrichtung folgend. Die aufgewickelte Rolle wird von der Aufwicklung genommen und in der Abwicklung montiert, um die zweite Lage darauf zu beschichten. In diesem folgenden Schritt wird die Applikationslösung B in der Kastenrakel vorgelegt und bei einer Bandgeschwindigkeit von 1m/min auf das bereits mit A beschichtete Trägermaterial aufgetragen. Über eine berührungslose online Schichtdickenmessung basierend auf Ultraschallabsorption (MeSys GmbH, USM-200) wird der Rakelspalt bis zum Erreichen des gewünschten Flächengewichts von 70g/m² variiert. Anschließend wird der Film in einem Schlitzdüsentrockner konvektiv getrocknet. Die Temperaturen der 3 jeweils 1m langen Trocknerzonen betragen 100, 80 und 60°C in der Reihenfolge der Beschichtungsrichtung folgend. Das Trägermaterial kann für die Lagerung oder den Transport Teil der Rolle bleiben und dient als Trennmittel. Vor der Weiterverwendung der 2-lagigen A-B Beschichtung als freistehende, wasserlösliche Folie müssen die 2-lagige Folie entfernt werden. Dies kann in einem eigenständigen Schritt (Umspulen von der Rolle auf einen neuen Wickelkern) oder im Verarbeitungsschritt selbst erfolgen, z.B. bei der Pouchherstellung. Die auf diese Art hergestellte Folie hat ein Flächengewicht von ca. 80g/m² und enthält ca. 70g/m² B.

### Beispiel 1.2

### 2-schichtige Folie A-B: 1. Schicht aus Polyvinylalkohol, 2. Schicht aus Polymerzusammensetzung P1-1)

Zur Herstellung der Mehrschichtfolie wird an einer Beschichtungsanlage der Firma Mathis AG eine Schlitzdüse der Firma TSE Troller AG mit 150mm Breite verwendet **(****Figur 3****).** Die Spritze mit der vorgelegten fließfähigen Polymerzusammensetzung, die Flüssigkeitszufuhr und die Düse sind auf 40°C temperiert. Die Applikationslösung A wird über eine Spritzenpumpe (Nexus 6000 der Firma Chemyx) mit 4,2ml/min bei einer Bandgeschwindigkeit von 0,5m/min auf eine silikonisierte Polyesterfolie (Foliendicke 36µm, Hostaphan® RN 2PRK) als Trägermaterial aufgetragen und anschließend in einem Schlitzdüsentrockner konvektiv getrocknet. Die Temperaturen der 3 jeweils 1m langen Trocknerzonen betragen 100, 80 und 60°C in der Reihenfolge der Beschichtungsrichtung folgend. Die aufgewickelte Rolle wird von der Aufwicklung genommen und in der Abwicklung montiert, um die zweite Lage darauf zu beschichten. In diesem folgenden Schritt wird die Applikationslösung B über eine Spritzenpumpe (Nexus 6000 der Firma Chemyx) mit 16,2ml/min bei einer Bandgeschwindigkeit von 1m/min auf das bereits mit A beschichtete Trägermaterial aufgetragen und anschließend in einem Schlitzdüsentrockner konvektiv getrocknet. Die Temperaturen der 3 Trocknerzonen betragen 100, 80 und 60°C in der Reihenfolge der Beschichtungsrichtung folgend. Das Trägermaterial kann für die Lagerung oder den Transport Teil der Rolle bleiben und dient als Trennmittel. Vor der Weiterverwendung der 2-lagigen A-B Beschichtung als freistehende, wasserlösliche Folie müssen die 2-lagige Folie entfernt werden. Dies kann in einem eigenständigen Schritt (Umspulen von der Rolle auf einen neuen Wickelkern) oder im Verarbeitungsschritt selbst erfolgen, z.B. bei der Pouchherstellung. Die auf diese Art hergestellte Folie hat ein Flächengewicht von ca. 80g/m² und enthält ca. 70g/m² B.

### Beispiel 1.3

### 2-schichtige Folie A-B: 1. Schicht aus Polyvinylalkohol, 2. Schicht aus Polymerzusammensetzung P1-1)

Zur Herstellung der Mehrschichtfolie wird an einer Beschichtungsanlage der Firma Mathis AG eine 2-lagige Schlitzdüse der Firma TSE Troller AG mit 150mm Breite verwendet **(****Figur 4****).** Die beiden Spritzen mit den vorgelegten fließfähigen Polymerzusammensetzungen, die Flüssigkeitszufuhr und die Düse sind auf 40°C temperiert. Die Applikationslösung A wird über eine Spritzenpumpe (Nexus 6000 der Firma Chemyx) mit 4,2ml/min in den in Beschichtungsrichtung vorderen Schlitz zugeführt. Die Applikationslösung B wird über eine Spritzenpumpe (Nexus 6000 der Firma Chemyx) mit 8,1ml/min bei einer Bandgeschwindigkeit von 0,5m/min in den in Beschichtungsrichtung hinteren Schlitz zugeführt. Somit werden durch parallelen Betrieb der beiden Pumpen, beide Polymerzusammensetzungen simultan auf das Trägermaterial aufgetragen und anschließend in einem Schlitzdüsentrockner konvektiv getrocknet. Die Temperaturen der 3 Trocknerzonen betragen 120, 110 und 60°C in der Reihenfolge der Beschichtungsrichtung folgend. Das Trägermaterial kann für die Lagerung oder den Transport Teil der Rolle bleiben und dient als Trennmittel. Vor der Weiterverwendung der 2-lagigen A-B Beschichtung als freistehende, wasserlösliche Folie, muss die Trägerfolie entfernt werden. Dies kann in einem eigenständigen Schritt (Umspulen von der Rolle auf einen neuen Wickelkern) oder im Verarbeitungsschritt selbst erfolgen, z.B. bei der Pouchherstellung. Die auf diese Art hergestellte Folie hat ein Flächengewicht von ca. 80g/m² und enthält ca. 70g/m² B.

### Beispiel 1.4

### 2-schichtige Folie A-B: 1. Schicht aus Polyvinylalkohol, 2. Schicht aus Polymerzusammensetzung P1-1)

Zur Herstellung der Mehrschichtfolie wird an einer Foliengießanlage mit umlaufendem Stahlband (CrNi Stahl, 16m Länge) eine 2-lagige Schlitzdüse der Firma TSE Troller AG mit 150mm Breite verwendet **(****Figur 5****).** Die beiden Vorlagebehälter mit den vorgelegten fließfähigen Polymerzusammensetzungen, die Flüssigkeitszufuhr und die Düse sind auf 40°C temperiert. Die Applikationslösung A wird über eine Zahnradpumpe (P64627/71023201/1MA-A/6-19 der Firma Gather) mit 16,7ml/min in den in Beschichtungsrichtung vorderen Schlitz zugeführt. Die Applikationslösung B wird über eine Zahnradpumpe (P64627/71023201/1MA-A/6-19 der Firma Gather) mit 27,7ml/min bei einer Bandgeschwindigkeit von 1m/min in den in Beschichtungsrichtung hinteren Schlitz zugeführt. Somit werden durch parallelen Betrieb der beiden Pumpen, beide Polymerzusammensetzungen simultan auf das Trägermaterial, in diesem Fall ein CrNi Stahlband aufgetragen und anschließend in einem Schlitzdüsentrockner konvektiv getrocknet. Die Temperaturen, im oberen Teil 150°C und im unteren Teil 60°C und die Gebläseleistung der Trocknerzonen wird so gewählt, dass beim Abzug der Folie vom Stahlband der Feuchtegehalt an Wasser <15Gew.% ist. Nach der Trennung von Stahlband und Folie, wird die Folie nachfolgend freistehend in einem konvektiven Trockner bei 60°C nachgetrocknet. Vor der Aufwicklung wird die Folie über eine Kühlwalze auf Raumtemperatur abgekühlt und die Oberfläche mit Talkum als Trennmittel behandelt. Die auf diese Art hergestellte Folie hat ein Flächengewicht von ca. 140g/m² und enthält ca. 120g/m² B.

### Beispiel 2.1

### 3-schichtige Folie A-B-A: 1. Schicht aus Polyvinylalkohol, 2. Schicht aus Polymerzusammensetzung P1-1) 3. Schicht aus Polyvinylalkohol

Zur Herstellung einer 3-lagigen Mehrschichtfolie wird an einer Beschichtungsanlage der Firma Mathis AG mit einer Kastenrakel als Auftragswerk verwendet **(****Figur 2****).** Analog zu Beispiel 1.2 wird zuvor eine 2-lagige A-B Beschichtung auf der Trägerfolie hergestellt. Die Applikationslösung A wird nun in der Kastenrakel vorgelegt und bei einer Bandgeschwindigkeit von 1m/min auf das bereits 2 Mal beschichtete Trägermaterial aufgetragen. Über eine berührungslose online Schichtdickenmessung basierend auf Ultraschallabsorption (MeSys GmbH, USM-200) wird der Rakelspalt bis zum Erreichen des gewünschten Flächengewichts von 10g/m² variiert. Anschließend wird die 3-lagige Beschichtung in einem Schlitzdüsentrockner konvektiv getrocknet. Die Temperaturen der 3 jeweils 1m langen Trocknerzonen betragen 100, 80 und 60°C in der Reihenfolge der Beschichtungsrichtung folgend. Das Trägermaterial kann für die Lagerung oder den Transport Teil der Rolle bleiben und dient als Trennmittel. Vor der Weiterverwendung der 3-lagigen A-B-A Beschichtung als freistehende, wasserlösliche Folie muss die Trägerfolie entfernt werden. Dies kann in einem eigenständigen Schritt (Umspulen von der Rolle auf einen neuen Wickelkern) oder im Verarbeitungsschritt selbst erfolgen, z.B. bei der Pouchherstellung. Die auf diese Art hergestellte Folie hat ein Flächengewicht von ca. 90g/m² und enthält im Mittel ca. 70g/m² B.

### Beispiel 2.2

### 3-schichtige Folie A-B-A: 1. Schicht aus Polyvinylalkohol, 2. Schicht aus Polymerzusammensetzung P1-1), 3. Schicht aus Polyvinylalkohol

Zur Herstellung der 3-lagigen Mehrschichtfolie wird an einer Beschichtungsanlage der Firma Mathis AG eine Schlitzdüse der Firma TSE Troller AG mit 150mm Breite verwendet **(****Figur 3****).** Analog zu Beispiel 1.2 wird eine 2-lagige A-B Beschichtung auf der Trägerfolie hergestellt. Anschließend wird erneut Applikationslösung A über eine Spritzenpumpe (Nexus 6000 der Firma Chemyx) mit 8,3ml/min bei einer Bandgeschwindigkeit von 1m/min auf das bereits 2 Mal beschichtete Trägermaterial aufgetragen und anschließend in einem Schlitzdüsentrockner konvektiv getrocknet. Auch hierbei sind die Spritze mit der vorgelegten fließfähigen Polymerzusammensetzung, die Flüssigkeitszufuhr und die Düse auf 40°C temperiert. Die Temperaturen der 3 jeweils 1m langen Trocknerzonen betragen 100, 80 und 60°C in der Reihenfolge der Beschichtungsrichtung folgend. Das Trägermaterial kann für die Lagerung oder den Transport Teil der Rolle bleiben und dient als Trennmittel. Vor der Weiterverwendung der 3-lagigen A-B-A Beschichtung als freistehende, wasserlösliche Folie muss die Trägerfolie entfernt werden. Dies kann in einem eigenständigen Schritt (Umspulen von der Rolle auf einen neuen Wickelkern) oder im Verarbeitungsschritt selbst erfolgen, z.B. bei der Pouchherstellung. Die auf diese Art hergestellte Folie hat ein Flächengewicht von ca. 90g/m² und enthält im Mittel ca. 70g/m² B.

### Beispiel 2.3

### 3-schichtige Folie A-B-A: 1. Schicht aus Polyvinylalkohol, 2. Schicht aus Polymerzusammensetzung P1-1), 3. Schicht aus Polyvinylalkohol

Zur Herstellung der 3-lagigen Mehrschichtfolie wird analog zu Beispiel 1.2 eine 2-lagige A-B Beschichtung auf der Trägerfolie hergestellt. Anschließend wird auf die 2-lagig beschichtete Trägerfolie in einer Kaschieranlage der Firma Kroenert (Fig. 6) eine PVOH-Folie (Polyvinylalkohol-Folie, Monosol M8630 der Fa. Kuraray, 76µm) laminiert (mittels thermischen Fügens) bzw. kaschiert (mittels Klebstoff). Hierzu wird bei einer Bandgeschwindigkeit von 5m/min die Polymerzusammensetzungsoberfläche durch eine Ultraschalldüse (WideTrack der Firma SonoTek Corporation, Düsenfrequenz 48kHz) bei einer Pumpenrate von 18,0ml/min (Nexus 6000 der Firma Chemyx) mit Wasser angefeuchtet. Im Kaschiermodul werden unter 4 bar Druck durch eine gummierte Walze (Shore Härte 80) die A-Folie und die angefeuchtete mehrlagig beschichtete Trägerfolie zusammengefügt. Das Trägermaterial kann für die Lagerung oder den Transport Teil der Rolle bleiben und dient als Trennmittel. Vor der Weiterverwendung des 3-lagigen A-B-A Verbundes als freistehende, wasserlösliche Folie muss die Trägerfolie entfernt werden. Dies kann in einem eigenständigen Schritt (Umspulen von der Rolle auf einen neuen Wickelkern) oder im Verarbeitungsschritt selbst erfolgen, z.B. bei der Pouchherstellung. Die auf diese Art hergestellte Folie hat ein Flächengewicht von ca. 156g/m² und enthält im Mittel ca. 70g/m² B.

### 4-lagige Folie

### Beispiel 3.1

### 4-schichtige Folie C-B-D-A: 1. Schicht aus Carboxymethylcellulose, 2. Schicht aus Polymerzusammensetzung P1-1), 3. Schicht aus Farbübertragungsinhibitor, 4. Schicht aus Polyvinylalkohol

Zur Herstellung der Mehrschichtfolie wird an einer Beschichtungsanlage der Firma Mathis AG mit einer Kastenrakel als Auftragswerk verwendet **(****Figur 2****).** Die Applikationslösung C wird in der Kastenrakel vorgelegt und bei einer Bandgeschwindigkeit von 0,5m/min auf eine silikonisierte Polyesterfolie (Foliendicke 36µm, Hostaphan® RN 2PRK) als Trägermaterial aufgetragen. Über eine berührungslose online Schichtdickenmessung basierend auf Ultraschallabsorption (MeSys GmbH, USM-200) wird der Rakelspalt bis zum Erreichen des gewünschten Flächengewichts von 10g/m² variiert. Anschließend wird der Film in einem Schlitzdüsentrockner konvektiv getrocknet. Die Temperaturen der 3 jeweils 1m langen Trocknerzonen betragen 100, 80 und 60°C in der Reihenfolge der Beschichtungsrichtung folgend.

Die aufgewickelte Rolle wird von der Aufwicklung genommen und in der Abwicklung montiert, um die zweite Lage darauf zu beschichten. In diesem folgenden Schritt wird die Applikationslösung B in der Kastenrakel vorgelegt und bei einer Bandgeschwindigkeit von 1m/min auf das bereits mit A beschichtete Trägermaterial aufgetragen. Über eine berührungslose online Schichtdickenmessung basierend auf Ultraschallabsorption (MeSys GmbH, USM-200) wird der Rakelspalt bis zum Erreichen des gewünschten Flächengewichts von 70g/m² variiert. Anschließend wird der Film in einem Schlitzdüsentrockner konvektiv getrocknet. Die Temperaturen der 3 jeweils 1m langen Trocknerzonen betragen 100, 80 und 60°C in der Reihenfolge der Beschichtungsrichtung folgend.

Die aufgewickelte Rolle wird von der Aufwicklung genommen und in der Abwicklung montiert, um die dritte Lage darauf zu beschichten. In diesem folgenden Schritt wird die Applikationslösung D in der Kastenrakel vorgelegt und bei einer Bandgeschwindigkeit von 0,5m/min auf das bereits mit C und B beschichtete Trägermaterial aufgetragen. Über eine berührungslose online Schichtdickenmessung basierend auf Ultraschallabsorption (MeSys GmbH, USM-200) wird der Rakelspalt bis zum Erreichen des gewünschten Flächengewichts von 40g/m² variiert. Anschließend wird der Film in einem Schlitzdüsentrockner konvektiv getrocknet. Die Temperaturen der 3 jeweils 1m langen Trocknerzonen betragen 100, 80 und 60°C in der Reihenfolge der Beschichtungsrichtung folgend.

Die aufgewickelte Rolle wird von der Aufwicklung genommen und in der Abwicklung montiert, um die vierte Lage darauf zu beschichten. In diesem folgenden Schritt wird die Applikationslösung A in der Kastenrakel vorgelegt und bei einer Bandgeschwindigkeit von 0,5m/min auf das bereits mit C, B und D beschichtete Trägermaterial aufgetragen. Über eine berührungslose online Schichtdickenmessung basierend auf Ultraschallabsorption (MeSys GmbH, USM-200) wird der Rakelspalt bis zum Erreichen des gewünschten Flächengewichts von 10g/m² variiert. Anschließend wird der Film in einem Schlitzdüsentrockner konvektiv getrocknet. Die Temperaturen der 3 jeweils 1m langen Trocknerzonen betragen 100, 80 und 60°C in der Reihenfolge der Beschichtungsrichtung folgend.

Das Trägermaterial kann für die Lagerung oder den Transport Teil der Rolle bleiben und dient als Trennmittel. Vor der Weiterverwendung des 4-lagigen C-B-D-A Verbundes als freistehende, wasserlösliche Folie muss die Trägerfolie entfernt werden. Dies kann in einem eigenständigen Schritt (Umspulen von der Rolle auf einen neuen Wickelkern) oder im Verarbeitungsschritt selbst erfolgen, z.B. bei der Pouchherstellung. Die auf diese Art hergestellte Folie hat ein Flächengewicht von ca. 130g/m² und enthält ca. 10g/m² C, ca. 70g/m² B und ca. 40g/m² D.

### Beispiel 3.2

### 4-schichtige Folie C-B-D-A: 1. Schicht aus Carboxymethylcellulose, 2. Schicht aus Polymerzusammensetzung P1-1), 3. Schicht aus Farbübertragungsinhibitor, 4. Schicht aus Polyvinylalkohol

Zur Herstellung der Mehrschichtfolie wird an einer Beschichtungsanlage der Firma Mathis AG eine Schlitzdüse der Firma TSE Troller AG mit 150mm Breite verwendet (Fig. 3). Die Spritze mit der vorgelegten fließfähigen Polymerzusammensetzung, die Flüssigkeitszufuhr und die Düse sind auf 40°C temperiert. Die Applikationslösung C wird über eine Spritzenpumpe (Nexus 6000 der Firma Chemyx) mit 18,8ml/min bei einer Bandgeschwindigkeit von 0,5m/min auf eine silikonisierte Polyesterfolie (Foliendicke 36µm, Hostaphan® RN 2PRK) als Trägermaterial aufgetragen und anschließend in einem Schlitzdüsentrockner konvektiv getrocknet. Die Temperaturen der 3 jeweils 1m langen Trocknerzonen betragen 100, 80 und 60°C in der Reihenfolge der Beschichtungsrichtung folgend.

Die aufgewickelte Rolle wird von der Aufwicklung genommen und in der Abwicklung montiert, um die zweite Lage darauf zu beschichten. In diesem folgenden Schritt wird die Applikationslösung B über eine Spritzenpumpe (Nexus 6000 der Firma Chemyx) mit 16,2ml/min bei einer Bandgeschwindigkeit von 1m/min auf das bereits mit C beschichtete Trägermaterial aufgetragen und anschließend in einem Schlitzdüsentrockner konvektiv getrocknet. Die Temperaturen der 3 Trocknerzonen betragen 100, 80 und 60°C in der Reihenfolge der Beschichtungsrichtung folgend.

Die aufgewickelte Rolle wird von der Aufwicklung genommen und in der Abwicklung montiert, um die dritte Lage darauf zu beschichten. In diesem folgenden Schritt wird die Applikationslösung D über eine Spritzenpumpe (Nexus 6000 der Firma Chemyx) mit 7,5ml/min bei einer Bandgeschwindigkeit von 0,5m/min auf das bereits mit C und B beschichtete Trägermaterial aufgetragen und anschließend in einem Schlitzdüsentrockner konvektiv getrocknet. Die Temperaturen der 3 Trocknerzonen betragen 100, 80 und 60°C in der Reihenfolge der Beschichtungsrichtung folgend.

Die aufgewickelte Rolle wird von der Aufwicklung genommen und in der Abwicklung montiert, um die vierte Lage darauf zu beschichten. In diesem folgenden Schritt wird die Applikationslösung A über eine Spritzenpumpe (Nexus 6000 der Firma Chemyx) mit 4,2ml/min bei einer Bandgeschwindigkeit von 0,5m/min auf das bereits mit C, B und D beschichtete Trägermaterial aufgetragen und anschließend in einem Schlitzdüsentrockner konvektiv getrocknet. Die Temperaturen der 3 Trocknerzonen betragen 150, 110 und 60°C in der Reihenfolge der Beschichtungsrichtung folgend.

Das Trägermaterial kann für die Lagerung oder den Transport Teil der Rolle bleiben und dient als Trennmittel. Vor der Weiterverwendung der 4-lagigen C-B-D-A Beschichtung als freistehende, wasserlösliche Folie muss die Trägerfolie entfernt werden. Dies kann in einem eigenständigen Schritt (Umspulen von der Rolle auf einen neuen Wickelkern) oder im Verarbeitungsschritt selbst erfolgen, z.B. bei der Pouchherstellung. Die auf diese Art hergestellte Folie hat ein Flächengewicht von ca. 130g/m² und enthält ca. 10g/m² C, ca. 70g/m² B und ca. 40g/m² D.

### Beispiel 3.3

4-schichtige Folie A-B-D-A: 1. Schicht aus Polyvinylalkohol, 2. Schicht aus Polymerzusammensetzung P1-1), 3.Schicht aus Farbübertragungsinhibitor, 4. Schicht aus Polyvinylalkohol Zur Herstellung der Mehrschichtfolie wird an einer Foliengießanlage mit umlaufendem Stahlband (CrNi Stahl, 16m Länge) eine 2-lagige Schlitzdüse der Firma TSE Troller AG mit 150mm Breite verwendet (Fig. 5). Die beiden Spritzen mit den vorgelegten fließfähigen Polymerzusammensetzungen, die Flüssigkeitszufuhr und die Düse sind auf 40°C temperiert. Die Applikationslösung A wird über eine Zahnradpumpe (P64627/71023201/1MA-A/6-19 der Firma Gather) mit 32,2ml/min in den in Beschichtungsrichtung vorderen Schlitz zugeführt. Die Applikationslösung B wird über eine Zahnradpumpe (P64627/71023201/1MA-A/6-19 der Firma Gather) mit 16,7ml/min bei einer Bandgeschwindigkeit von 2m/min in den in Beschichtungsrichtung hinteren Schlitz zugeführt. Somit werden durch parallelen Betrieb der beiden Pumpen, beide Polymerzusammensetzungen simultan auf das Trägermaterial, in diesem Fall ein CrNi Stahlband aufgetragen und anschließend in einem Schlitzdüsentrockner konvektiv getrocknet. Die Temperaturen, im oberen Teil 150°C und im unteren Teil 60°C und die Gebläseleistung der Trocknerzonen wird so gewählt, dass beim Abzug der Folie vom Stahlband der Feuchtegehalt an Wasser <15Gew.% ist. Nach der Trennung von Stahlband und Folie, wird die Folie nachfolgend freistehend in einem Konvektiven Trockner bei 60°C nachgetrocknet. Vor der Aufwicklung wird die Folie über eine Kühlwalze auf Raumtemperatur abgekühlt.

In einem weiteren Schritt wird an einer Foliengießanlage mit umlaufendem Stahlband (CrNi Stahl, 16m Länge) eine 2-lagige Schlitzdüse der Firma TSE Troller AG mit 150mm Breite verwendet (Fig. 5). Die beiden Spritzen mit den vorgelegten fließfähigen Polymerzusammensetzungen, die Flüssigkeitszufuhr und die Düse sind auf 40°C temperiert. Die Applikationslösung A wird über eine Zahnradpumpe (P64627/71023201/1MA-A/6-19 der Firma Gather) mit 12,5ml/min in den in Beschichtungsrichtung vorderen Schlitz zugeführt. Die Applikationslösung D wird über eine Zahnradpumpe (P64627/71023201/1MA-A/6-19 der Firma Gather) mit 22,5ml/min bei einer Bandgeschwindigkeit von 1,5m/min in den in Beschichtungsrichtung hinteren Schlitz zugeführt. Somit werden durch parallelen Betrieb der beiden Pumpen, beide Polymerzusammensetzungen simultan auf das Trägermaterial, in diesem Fall ein CrNi Stahlband aufgetragen und anschließend in einem Schlitzdüsentrockner konvektiv getrocknet. Die Temperaturen, im oberen Teil 150°C und im unteren Teil 60°C und die Gebläseleistung der Trocknerzonen wird so gewählt, dass beim Abzug der Folie vom Stahlband der Feuchtegehalt an Wasser <15Gew.% ist. Nach der Trennung von Stahlband und Folie, wird die Folie nachfolgend freistehend in einem Konvektiven Trockner bei 60°C nachgetrocknet. Vor der Aufwicklung wird die Folie über eine Kühlwalze auf Raumtemperatur abgekühlt.

Anschließend wird auf die im ersten Schritt hergestellte 2-lagige A-B Folie in einer Kaschieranlage der Firma Kroenert (Fig. 6) die im zweiten Schritt hergestellte D-A Folie laminiert bzw. kaschiert. Hierzu wird bei einer Bandgeschwindigkeit von 5m/min die B-Oberfläche durch eine Ultraschalldüse (WideTrack der Firma SonoTek Corporation, Düsenfrequenz 48kHz) bei einer Pumpenrate von 18,0ml/min (Zahnradpumpe P64627/71023201/1MA-A/6-19 der Firma Gather) mit Wasser angefeuchtet. Im Kaschiermodul werden unter 4 bar Druck durch eine gummierte Walze (Shore Härte 80) beide Folien zusammengefügt indem die B und D Lagen zusammengefügt werden. Die auf diese Art hergestellte Folie hat ein Flächengewicht von ca. 130g/m² und enthält im Mittel ca. 70g/m² B und ca. 40g/m² D.

### Beispiel 3.4

4-schichtige Folie A-B-C-A: 1. Schicht aus Polyvinylalkohol, 2. Schicht aus Polymerzusammensetzung P1-1), 3.Schicht aus Carboxymethylcellulose, 4. Schicht aus Polyvinylalkohol Zur Herstellung der Mehrschichtfolie wird an einer Foliengießanlage mit umlaufendem Stahlband (CrNi Stahl, 16m Länge) eine 2-lagige Schlitzdüse der Firma TSE Troller AG mit 150mm Breite verwendet (Fig. 5). Die beiden Vorlagebehäter mit den vorgelegten fließfähigen Polymerzusammensetzungen, die Flüssigkeitszufuhr und die Düse sind auf 40°C temperiert. Die Applikationslösung A wird über eine Zahnradpumpe (P64627/71023201/1MA-A/6-19 der Firma Gather) mit 32,2ml/min in den in Beschichtungsrichtung vorderen Schlitz zugeführt. Die Applikationslösung B wird über eine Zahnradpumpe (P64627/71023201/1MA-A/6-19 der Firma Gather) mit 16,7ml/min bei einer Bandgeschwindigkeit von 2m/min in den in Beschichtungsrichtung hinteren Schlitz zugeführt. Somit werden durch parallelen Betrieb der beiden Pumpen, beide Polymerzusammensetzungen simultan auf das Trägermaterial, in diesem Fall ein CrNi Stahlband aufgetragen und anschließend in einem Schlitzdüsentrockner konvektiv getrocknet. Die Temperaturen, im oberen Teil 150°C und im unteren Teil 60°C und die Gebläseleistung der Trocknerzonen wird so gewählt, dass beim Abzug der Folie vom Stahlband der Feuchtegehalt an Wasser <15Gew.% ist. Nach der Trennung von Stahlband und Folie, wird die Folie nachfolgend freistehend in einem Konvektiven Trockner bei 60°C nachgetrocknet. Vor der Aufwicklung wird die Folie über eine Kühlwalze auf Raumtemperatur abgekühlt.

In einem weiteren Schritt wird an einer Foliengießanlage mit umlaufendem Stahlband (CrNi Stahl, 16m Länge) eine 2-lagige Schlitzdüse der Firma TSE Troller AG mit 150mm Breite verwendet **(****Figur 5****).** Die beiden Vorlagebehälter mit den vorgelegten fließfähigen Polymerzusammensetzungen, die Flüssigkeitszufuhr und die Düse sind auf 40°C temperiert. Die Applikationslösung A wird über eine Zahnradpumpe (P64627/71023201/1MA-A/6-19 der Firma Gather) mit 16,7ml/min in den in Beschichtungsrichtung vorderen Schlitz zugeführt. Die Applikationslösung C wird über eine Zahnradpumpe (P64627/71023201/1MA-A/6-19 der Firma Gather) mit 37,5ml/min bei einer Bandgeschwindigkeit von 1m/min in den in Beschichtungsrichtung hinteren Schlitz zugeführt. Somit werden durch parallelen Betrieb der beiden Pumpen, beide Polymerzusammensetzungen simultan auf das Trägermaterial, in diesem Fall ein CrNi Stahlband aufgetragen und anschließend in einem Schlitzdüsentrockner konvektiv getrocknet. Die Temperaturen, im oberen Teil 150°C und im unteren Teil 60°C und die Gebläseleistung der Trocknerzonen wird so gewählt, dass beim Abzug der Folie vom Stahlband der Feuchtegehalt an Wasser <15Gew.% ist. Nach der Trennung von Stahlband und Folie, wird die Folie nachfolgend freistehend in einem Konvektiven Trockner bei 60°C nachgetrocknet. Vor der Aufwicklung wird die Folie über eine Kühlwalze auf Raumtemperatur abgekühlt.

Anschließend wird auf die im ersten Schritt hergestellte 2-lagige A-B Folie in einer Kaschieranlage der Firma Kroenert **(****Figur 6****)** die im zweiten Schritt hergestellte C-A Folie laminiert (mittels thermischen Fügens) bzw. kaschiert (mittels Klebstoff). Hierzu wird bei einer Bandgeschwindigkeit von 5m/min die Polymerzusammenstzungsoberfläche durch eine Ultraschalldüse (WideTrack der Firma SonoTek Corporation, Düsenfrequenz 48kHz) bei einer Pumpenrate von 18,0ml/min (Zahnradpumpe P64627/71023201/1MA-A/6-19 der Firma Gather) mit Wasser angefeuchtet. Im Kaschiermodul werden unter 4 bar Druck durch eine gummierte Walze (Shore Härte 80) beide Folien zusammengefügt indem die B und C Lagen zusammengefügt werden. Die auf diese Art hergestellte Folie hat ein Flächengewicht von ca. 110g/m² und enthält im Mittel ca. 70g/m² B und ca. 10g/m² C.

### Filmnachbehandlung

Filme bestehend aus S1) und ggf. S2) können nach erfolgter Trocknung bzw. Teiltrocknung weiteren Prozessschritten unterworfen werden. Das Verstrecken des Filmes (Recken) kann während der Trocknung oder danach erfolgen, während des Vorganges wird der Wassergehalt und die Temperatur des Filmes kontrolliert und gesteuert, je nach Grad der Deformation. Die Reckung des Filmes erfolgt mindestens uniaxial und kann durch gängige Verfahren wie Rollen oder Spannrahmen, z.B. auf kommerziell erhältliche Anlagen wie Andritz Biax, erzeugt werden. (z.B. beschrieben in DE 3939721 A1) Über abgeänderte Walzengeometrien können auch nicht gleichmäßig verstreckte Filme hergestellt werden. Verstreckte Filme zeigen gegenüber ihren nicht verstreckten Vergleichsfilmen eine höhere mechanische Zugfestigkeit auf. Diese entsteht, ohne an die Theorie gebunden zu sein, durch ein ausrichten der Polymerketten und eine gesteigerte Interaktion dieser.

Nach erfolgter Trocknung bzw. Teiltrocknung kann vor der Aufwicklung die Oberfläche mit Talkum oder anderen Stoffen als Trennmittel behandelt werden.

Des Weiteren können Filme bestehend aus S1) bis optional aus S2 nach Trocknung, Verreckung etc. bedruckt werden, hierbei werden die Filme über Walzen an einer farbführenden und geprägten Walze entlanggerollt, dabei wird die Farbe in dem gewünschten Muster auf den Film übertragen. Dieser Prozess kann wenn gewünscht auf beiden Seiten erfolgen. Möglich ist es hierbei auch keine pigmenthaltigen Suspensionen sondern flächige Schichten einer Lösung zu übertragen. Diese Lösungen können Stoffe enthalten die nach Trocknung eine Sperrschicht gegenüber den Verpackungsinhalt (z.B. Tenside, Builder, Lösungsmittel, etc.) darstellen oder auch die Wasserlöslichkeit des Filmes herabsetzen. Letzteres kann unter anderem gewährleisten, dass besagte Filme nicht zu früh in Lösung gehen und z.B. den Verpackungsinhalt bereits beim Handhaben der Packung freisetzen.

## Patentansprüche

1. Verfahren zur Herstellung einer funktionellen wasserlöslichen Folie, wobei die wasserlösliche Folie mindestens eine Schicht S1) umfasst enthaltend oder bestehend aus eine(r) Polymerzusammensetzung P1), erhältlich durch radikalische Polymerisation einer Monomerzusammensetzung M1) in Gegenwart mindestens einer Polyetherkomponente PE), wobei M1) wenigstens ein Monomer A) enthält, das ausgewählt ist unter α,β-ethylenisch ungesättigten Mono- und Dicarbonsäuren, Salzen α,β-ethylenisch ungesättigter Mono- und Dicarbonsäuren, Anhydriden, α,β-ethylenisch ungesättigter Mono- und Dicarbonsäuren und Mischungen davon, in Gegenwart wenigstens einer Polyetherkomponente PE), die ausgewählt ist unter Polyetherolen mit einem zahlenmittleren Molekulargewicht von wenigstens 200 g/mol, Mono- und Di-(C₁-C₆-alkyl)ethern solcher Polyetherole, Polyethergruppen-haltigen Tensiden und Mischungen davon,
wobei das Verfahren folgende Schritte umfasst:
(a) Herstellen einer wässrigen Lösung der Polymerzusammensetzung P1), wobei die wässrige Lösung neben oder statt Wasser unter anderem auch Alkohol wie 2-Propanol umfassen kann,
(b) Gießen der wässrigen Polymerzusammensetzung P1) aus (a) als Film auf ein Trägermaterial,
(c) Optional Trocknen des Films nach dem Auftragen von S1) auf das Trägermaterial,
(d) Auftragen einer Schicht S2),
wobei die Schicht S2) wenigstens ein Polymer P2) enthält oder aus wenigstens einem Polymer P2) besteht, das von der Polymerzusammensetzung P1) verschieden und ausgewählt ist unter
- natürlichen und modifizierten Polysacchariden,
- Homo- und Copolymeren, die Wiederholungseinheiten enthalten, die sich von Vinylalkohol, Vinylestern, alkoxilierten Vinylalkoholen oder Mischungen davon ableiten,
- Homo- und Copolymeren, die wenigstens ein Monomer einpolymerisiert enthalten, das ausgewählt ist unter N-Vinylpyrrolidon, N-Vinylcaprolactam, N-Vinylimidazol, 2-Vinylpyridin, 4-Vinylpyridin, Salzen der drei letztgenannten Monomere, Vinylpyridin-N-oxid, N-carboxymethyl-4-vinylpyridiumhalogeniden und Mischungen davon,
- Homo- und Copolymeren der Acrylsäure und/oder Methacrylsäure, insbesondere Copolymeren, die wenigstens ein Acrylsäuremonomer, ausgewählt unter Acrylsäure, Acrylsäuresalzen und Mischungen davon und wenigstens ein Maleinsäuremonomer, ausgewählt unter Maleinsäure, Maleisäureanhydrid, Maleinsäuresalzen und Mischungen davon, einpolymerisiert enthalten,
- Copolymeren, die wenigstens ein (Meth)acrylsäuremonomer, ausgewählt unter Acrylsäure, Methacrylsäure, ihren Salzen und Mischungen davon und wenigstens ein hydrophobes Monomer, ausgewählt unter C₁-C₈-Alkylestern der (Meth)acrylsäure, C₂-C₁₀-Olefinen, Styrol und α-Methylstyrol einpolymerisiert enthalten,
- Copolymeren, die wenigstens ein Maleinsäuremonomer, ausgewählt unter Maleinsäure, Maleinsäureanhydrid, Maleinsäuresalzen und Mischungen davon und wenigstens ein C₂-C₈-Olefin einpolymerisiert enthalten,
- Homo- und Copolymeren des Acrylamids und/oder Methacrylamids,
- Polyaminosäuren,
- wasserlöslichen oder wasserdispergierbaren Polyamiden,
- Polyalkylenglykolen, Mono- oder Diethern von Polyalkylenglykolen,
- Polyalkylenoxide wie bspw. Polyethylenoxid, und
- Mischungen davon,
(e) Optional Trocknen des Films nach dem Auftragen von S2) auf das Trägermaterial,
(f) Optional Auftragen einer oder mehrerer weiteren Schichten S1) und/oder S2),
(g) Optional Trocknen des Films nach dem Auftragen von einer oder mehreren weiteren Schichten S1) und/oder S2) auf das Trägermaterial nach (f),
(h) Trocknen der Folie nach dem Auftragen aller Schichten S1) und S2) auf das Trägermaterial,
wobei die Schichten S1) und/oder S2) in frei gewählter Reihenfolge oder auch gleichzeitig aufgetragen und jeweils optional nach jedem Auftragen einer oder mehrerer Schichten getrocknet werden können.

2. Verfahren nach Anspruch 1, wobei zumindest eine der Schichten wenigstens einen Zusatzstoff enthält, der ausgewählt ist unter Weichmachern, Scavengern, weiteren Polymeren, Mitteln zur Modifikation der Gasdurchlässigkeit und Wasserdampfdurchlässigkeit, Antistatikmitteln, Gleitmitteln, Slipmitteln, Auflösungshilfsmitteln, Farbstoffen, Pigmenten, Enzymen, Korrosionsinhibitoren, Entschäumern, Duftstoffen, Verdickern, Löslichkeitsvermittlern, Lösemitteln, pH-Stellmitteln, Antiredepositionsmitteln, optischen Aufhellern, Vergrauungsinhibitoren, Farbübertragungsinhibitoren, antimikrobiellen Wirkstoffen, Antioxidantien, UV-Absorbern, Anti-Vergilbungsmitteln, Bitterstoffen und Mischungen davon.

3. Verfahren nach einem der vorhergehenden Ansprüche, wobei in Schritt (a) die Polymerzusammensetzung P1) in Wasser gelöst wird, so dass sich eine Lösung von mindestens etwa 55 Gew% Polymerzusammensetzung ergibt, gemessen an der Gesamtmasse Polymerzusammensetzung P1) und Wasser.

4. Verfahren nach einem der vorhergehenden Ansprüche, wobei das Gießen der Lösung auf ein Trägermaterial in Schritt (b) mittels eines vordosierten Verfahrens wie z.B. einer Schlitzdüse erfolgt.

5. Verfahren nach einem der vorhergehenden Ansprüche, wobei das Trägermaterial aus Schritt (b) aus einem Material besteht ausgewählt aus der Gruppe bestehend aus Eisenlegierung, Vliesstoff, Polyvinylalkohol, (orientiertes)Polypropylen, Polyethylen, Polyethylenterephtalat, Polyvinylchlorid, Polystyrol, Polytetrafluorethylen, und Polyalkylenglykol.

6. Verfahren nach einem der vorhergehenden Ansprüche, wobei die Polymerzusammensetzung P1) im polymerisierten Zustand als wässrige Lösung auf das Trägermaterial in Schritt (b) gegossen wird.

7. Verfahren nach einem der vorhergehenden Ansprüche, wobei Schicht S1) bis zu einem Restfeuchtegehalt von 15 Gew% oder weniger getrocknet wird, gemessen an der Gesamtmasse der aufgetragenen Schicht S1).

8. Verfahren nach einem der vorhergehenden Ansprüche, wobei das Gießen in Schritt (b) auf das Trägermaterial in Unterdruck erfolgt relativ zum Umgebungsdruck der Gießvorrichtung.

9. Verfahren nach einem der vorhergehenden Ansprüche, wobei das Trägermaterial aus Schritt (b) beschichtet ist mit einer Zusammensetzung umfassend Talk, Tensid, Wachs, Polyolefin, Polyethylen, Polypropylen, Polyvinylchlorid, Polystyrol, oder Silikon.

10. Verfahren nach einem der vorhergehenden Ansprüche, wobei zwei oder mehrere der Schichten S1) und optional S2) gleichzeitig auf das Trägermaterial in Schritt (b) aufgetragen werden.

11. Verfahren nach einem der vorhergehenden Ansprüche, wobei das Auftragen mehrerer Schichten gleichzeitig mit einem mehrlagigen, vordosiertem Verfahren wie z.B. einer Mehrschlitzdüse oder als Kaskadenguss durchgeführt wird.

12. Verfahren nach einem der vorhergehenden Ansprüche, wobei das Trägermaterial aus Schritt (b) ausgewählt ist aus der Gruppe bestehend aus Vliesstoff, Polyvinylalkohol, Polyethylenterephtalat, Polyvinylchlorid, und Polyalkylenglykol, und das Trägermaterial nach Trocknung aller aufgetragenen Schichten S1) und optional S2) mit der funktionellen wasserlöslichen Folie verbunden bleibt.

13. Verfahren nach einem der vorhergehenden Ansprüche, wobei die Restfeuchte der funktionellen wasserlöslichen Folie nicht mehr als 15 Gew% beträgt, bezogen auf die Gesamtmasse der Folie, und dieser Restfeuchtegehalt erst nach dem Auftragen aller Schichten S1) und S2) erreicht wird.

14. Verfahren nach einem der vorhergehenden Ansprüche, wobei die funktionelle wasserlösliche Folie mindestens eine Schicht S1), mindestens eine Schicht S2), und insgesamt mindestens 3 Schichten umfasst.

15. Verfahren nach einem der vorhergehenden Ansprüche, wobei die Schicht S1) bei einem Restfeuchtegehalt von nicht mehr als 15 Gew% eine Dicke aufweist von 10 bis 200 µm.

16. Wasserlösliche Folie herstellbar nach einem der vorhergehenden Ansprüche.

## Claims

1. A process for producing a functional water-soluble foil, wherein the water-soluble foil comprises at least one layer S1) comprising or consisting of a polymer composition P1) obtainable by free-radical polymerization of a monomer composition M1) in the presence of at least one polyether component PE), wherein M1) comprises at least one monomer A) selected from α,β-ethylenically unsaturated mono- and dicarboxylic acids, salts of α,β-ethylenically unsaturated mono- and dicarboxylic acids, anhydrides, of α,β-ethylenically unsaturated mono- and dicarboxylic acids and mixtures thereof, in the presence of at least one polyether component PE) selected from polyetherols having a number-average molecular weight of at least 200 g/mol, mono- and di(C₁-C₆-alkyl) ethers of such polyetherols, surfactants containing polyether groups, and mixtures thereof,
wherein the process comprises the following steps:
(a) preparing an aqueous solution of the polymer composition P1), wherein the aqueous solution may comprise, as well as or in place of water, alcohol such as 2-propanol inter alia,
(b) casting the aqueous polymer composition P1) from (a) as a film onto a carrier material,
(c) optionally drying the film after the applying of S1) to the carrier material,
(d) applying a layer S2),
wherein layer S2) comprises at least one polymer P2) or consists of at least one polymer P2) which is different than the polymer composition P1) and is selected from
- natural and modified polysaccharides,
- homo- and copolymers comprising repeat units which derive from vinyl alcohol, vinyl esters, alkoxylated vinyl alcohols or mixtures thereof,
- homo- and copolymers comprising at least one copolymerized monomer selected from N-vinylpyrrolidone, N-vinylcaprolactam, N-vinylimidazole, 2-vinylpyridine, 4-vinylpyridine, salts of the three latter monomers, vinylpyridine N-oxide, N-carboxymethyl-4-vinylpyridium halides and mixtures thereof,
- homo- and copolymers of acrylic acid and/or methacrylic acid, especially copolymers comprising at least one copolymerized acrylic monomer selected from acrylic acid, acrylic salts and mixtures thereof, and at least one copolymerized maleic monomer selected from maleic acid, maleic anhydride, maleic salts and mixtures thereof,
- copolymers comprising at least one copolymerized (meth)acrylic monomer selected from acrylic acid, methacrylic acid, salts thereof and mixtures thereof and at least one copolymerized hydrophobic monomer selected from C₁-C₈-alkyl esters of (meth)acrylic acid, C₂-C₁₀ olefins, styrene and α-methylstyrene,
- copolymers comprising at least one copolymerized maleic monomer selected from maleic acid, maleic anhydride, maleic salts and mixtures thereof and at least one copolymerized C₂-C₈ olefin,
- homo- and copolymers of acrylamide and/or methacrylamide,
- polyamino acids,
- water-soluble or water-dispersible polyamides,
- polyalkylene glycols, mono- or diethers of polyalkylene glycols,
- polyalkylene oxides, for example polyethylene oxide, and
- mixtures thereof,
(e) optionally drying the film after the applying of S2) to the carrier material,
(f) optionally applying one or more further layers S1) and/or S2),
(g) optionally drying the film after the applying of one or more further layers S1) and/or S2) to the carrier material in (f),
(h) drying the foil after the applying of all layers S1) and S2) to the carrier material,
wherein layers S1) and/or S2) may be applied in a freely chosen sequence or else simultaneously and in each case optionally dried after every application of one or more layers.

2. The process according to claim 1, wherein at least one of the layers comprises at least one additive, preferably selected from plasticizers, scavengers, further polymers, gas permeability and water vapor permeability modifiers, antistats, lubricants, slip agents, dissolution auxiliaries, dyes, pigments, enzymes, corrosion inhibitors, defoamers, fragrances, thickeners, solubilizers, solvents, pH adjusters, antiredeposition agents, optical brighteners, graying inhibitors, dye transfer inhibitors, active antimicrobial ingredients, antioxidants, UV absorbers, antiyellowing agents, bitter substances and mixtures thereof.

3. The process according to either of the preceding claims, wherein, in step (a), the polymer composition P1) is dissolved in water so as to give a solution of at least about 55% by weight of polymer composition, measured by the total mass of polymer composition P1) and water.

4. The process according to any of the preceding claims, wherein the solution is cast onto a carrier material in step (b) by means of a predosed method, for example a slot die.

5. The process according to any of the preceding claims, wherein the carrier material from step (b) consists of a material selected from the group consisting of iron alloy, nonwoven, polyvinyl alcohol, (oriented) polypropylene, polyethylene, polyethylene terephthalate, polyvinyl chloride, polystyrene, polytetrafluoroethylene, and polyalkylene glycol.

6. The process according to any of the preceding claims, wherein the polymer composition P1) is cast onto the carrier material in step (b) in the polymerized state as an aqueous solution.

7. The process according to any of the preceding claims, wherein layer S1) is dried down to a residual moisture content of 15% by weight or less, measured by the total mass of the applied layer S1).

8. The process according to any of the preceding claims, wherein the casting in step (b) onto the carrier material is effected at reduced pressure relative to the ambient pressure of the casting device.

9. The process according to any of the preceding claims, wherein the carrier material from step (b) has been coated with a composition comprising talc, surfactant, wax, polyolefin, polyethylene, polypropylene, polyvinyl chloride, polystyrene, or silicone.

10. The process according to any of the preceding claims, wherein two or more of layers S1) and optionally S2) are applied simultaneously to the carrier material in step (b).

11. The process according to any of the preceding claims, wherein the applying of multiple layers is conducted simultaneously by a multilayer predosed method, for example a multislot die, or in the form of cascade casting.

12. The process according to any of the preceding claims, wherein the carrier material from step (b) is selected from the group consisting of nonwoven, polyvinyl alcohol, polyethylene terephthalate, polyvinyl chloride and polyalkylene glycol, and the carrier material, after drying of all applied layers S1) and optionally S2), remains bonded to the functional water-soluble foil.

13. The process according to any of the preceding claims, wherein the residual moisture content of the functional water-soluble foil is not more than 15% by weight, based on the total mass of the foil, and this residual moisture content is attained only after the applying of all layers S1) and S2).

14. The process according to any of the preceding claims, wherein the functional water-soluble foil comprises at least one layer S1), at least one layer S2), and a total of at least 3 layers.

15. The process according to any of the preceding claims, wherein layer S1), at a residual moisture content of not more than 15% by weight, has a thickness of 10 to 200 µm.

16. A water-soluble foil producible according to any of the preceding claims.

## Revendications

1. Procédé pour la préparation d'une feuille hydrosoluble fonctionnelle, la feuille hydrosoluble comprenant au moins une couche S1) contenant ou constituée d'une composition de polymère P1), qui peut être obtenue par polymérisation radicalaire d'une composition de monomères M1) en présence d'au moins un composant de polyéther PE), M1) contenant au moins un monomère A), qui est choisi parmi des acides monocarboxyliques et dicarboxyliques éthyléniquement α,β-insaturés, des sels d'acides monocarboxyliques et dicarboxyliques éthyléniquement α,β-insaturés, des anhydrides d'acides monocarboxyliques et dicarboxyliques éthyléniquement α,β-insaturés et des mélanges correspondants, en présence d'au moins un composant de polyéther PE), qui est choisi parmi des polyétherols dotés d'un poids moléculaire moyen en nombre d'au moins 200 g/mole, des mono-C₁₋₆-alkyléthers et des di-C₁-₆-alkyléthers de tels polyétherols, des tensioactifs contenant des groupes polyéther et des mélanges correspondants, le procédé comprenant les étapes suivantes :
(a) préparation d'une solution aqueuse de la composition de polymère P1), la solution aqueuse, outre de l'eau ou à la place de l'eau, pouvant comprendre entre autres également un alcool comme le 2-propanol,
(b) versement de la composition aqueuse de polymère P1) de (a) en tant que film sur un matériau de support,
(c) éventuellement séchage du film après le dépôt de S1) sur le matériau de support,
(d) dépôt d'une couche S2),
la couche S2) contenant au moins un polymère P2) ou étant constituée d'au moins un polymère P2), qui est différent de la composition de polymère P1) et est choisi parmi
- des polysaccharides naturels et modifiés,
- des homopolymères et des copolymères, qui contiennent des motifs de répétition qui sont issus de l'alcool vinylique, d'esters vinyliques, d'alcools vinyliques alcoxylés ou de leurs mélanges,
- des homopolymères et des copolymères qui contiennent au moins un monomère copolymérisé qui est choisi parmi la N-vinylpyrrolidone, le N-vinylcaprolactame, le N-vinylimidazole, la 2-vinylpyridine, la 4-vinylpyridine, des sels des trois derniers monomères, une vinylpyridine-N-oxyde, des halogénures de N-carboxyméthyl-4-vinylpyridinium et des mélanges correspondants,
- des homopolymères et des copolymères de l'acide acrylique et/ou de l'acide méthacrylique, en particulier des copolymères qui contiennent, sous forme copolymérisée, au moins un monomère d'acide acrylique choisi parmi l'acide acrylique, des sels d'acide acrylique et des mélanges correspondants et au moins un monomère d'acide maléique choisi parmi l'acide maléique, l'anhydride d'acide maléique, des sels d'acide maléique et des mélanges correspondants,
- des copolymères qui contiennent, sous forme copolymérisée, au moins un monomère d'acide (méth)acrylique choisi parmi l'acide acrylique, l'acide méthacrylique, leurs sels et des mélanges correspondants et au moins un monomère hydrophobe choisi parmi des esters de C₁₋₈-alkyle de l'acide (méth)acrylique, des oléfines en C₂₋₁₀, le styrène et l'a-méthylstyrène,
- des copolymères, qui contiennent, sous forme copolymérisée, au moins un monomère d'acide maléique choisi parmi l'acide maléique, l'anhydride d'acide maléique, des sels d'acide maléique et des mélanges correspondants et au moins une oléfine en C₂₋₈,
- des homopolymères et des copolymères de l'acrylamide et/ou du méthacrylamide,
- des polyaminoacides,
- des polyamides hydrosolubles ou dispersibles dans l'eau,
- des polyalkylèneglycols, des monoéthers ou des diéthers de polyalkylèneglycols,
- des poly(oxyde d'alkylène) comme par exemple un poly(oxyde d'éthylène), et
- des mélanges correspondants,
(e) éventuellement séchage du film après le dépôt de S2) sur le matériau de support,
(f) éventuellement dépôt d'une ou plusieurs couches S1) et/ou S2) supplémentaires,
(g) éventuellement séchage du film après le dépôt d'une ou plusieurs couches S1) et/ou S2) supplémentaires sur le matériau de support après (f),
(h) séchage de la feuille après le dépôt de toutes les couches S1) et S2) sur le matériau de support,
les couches S1) et/ou S2) pouvant être déposées dans n'importe quel ordre ou également simultanément et séchées à chaque fois éventuellement après chaque dépôt d'une ou plusieurs couches.

2. Procédé selon la revendication 1, au moins une des couches contenant au moins un additif qui est choisi parmi des plastifiants, des agents de piégeage, des polymères supplémentaires, des agents pour la modification de la perméabilité aux gaz et de la perméabilité à la vapeur d'eau, des antistatiques, des lubrifiants, des agents glissants, des auxiliaires de dissolution, des colorants, des pigments, des enzymes, des inhibiteurs de corrosion, des antimousses, des parfums, des épaississants, des promoteurs de solubilité, des solvants, des agents d'ajustement du pH, des agents anti-redéposition, des azurants optiques, des inhibiteurs de grisonnement, des inhibiteurs de transfert de couleur, des principes actifs antimicrobiens, des antioxydants, des absorbants UV, des agents anti-jaunissement, des substances amères et des mélanges correspondants.

3. Procédé selon l'une quelconque des revendications précédentes, dans lequel dans l'étape (a) la composition de polymère P1) est dissoute dans l'eau, de sorte qu'une solution d'au moins environ 55 % en poids de composition de polymère se forme, mesuré par rapport à la masse totale de la composition de polymère P1) et d'eau.

4. Procédé selon l'une quelconque des revendications précédentes, le versement de la solution sur un matériau de support dans l'étape (b) étant réalisé au moyen d'un procédé prédosé comme par ex. au moyen d'une buse à fente.

5. Procédé selon l'une quelconque des revendications précédentes, le matériau de support de l'étape (b) étant constitué d'un matériau choisi dans le groupe constitué par un alliage de fer, un non-tissé, un poly(alcool vinylique), un polypropylène (orienté), un polyéthylène, un poly(téréphtalate d'éthylène), un poly(chlorure de vinyle), un polystyrène, un polytétrafluoroéthylène et un polyalkylèneglycol.

6. Procédé selon l'une quelconque des revendications précédentes, la composition de polymère P1) étant versée à l'état polymérisé en tant que solution aqueuse sur le matériau de support dans l'étape (b) .

7. Procédé selon l'une quelconque des revendications précédentes, la couche S1) étant séchée jusqu'à une teneur en humidité résiduelle de 15 % en poids ou moins, mesurée par rapport à la masse totale de la couche S1) déposée.

8. Procédé selon l'une quelconque des revendications précédentes, le versement dans l'étape (b) sur le matériau de support étant réalisé sous pression réduite par rapport à la pression ambiante du dispositif de versement.

9. Procédé selon l'une quelconque des revendications précédentes, le matériau de support de l'étape (b) étant revêtu avec une composition comprenant du talc, un tensioactif, une cire, une polyoléfine, un polyéthylène, un polypropylène, un poly(chlorure de vinyle), un polystyrène ou une silicone.

10. Procédé selon l'une quelconque des revendications précédentes, deux couches S1) et éventuellement S2) ou plus étant déposées simultanément sur le matériau de support dans l'étape (b).

11. Procédé selon l'une quelconque des revendications précédentes, le dépôt de plusieurs couches étant mis en œuvre simultanément avec un procédé multicouche, prédosé comme par ex. avec une buse à plusieurs fentes ou en tant que versement en cascade.

12. Procédé selon l'une quelconque des revendications précédentes, le matériau de support de l'étape (b) étant choisi dans le groupe constitué par un non-tissé, un poly(alcool vinylique), un poly(téréphtalate d'éthylène), un poly(chlorure de vinyle) et un polyalkylèneglycol, et le matériau de support, après le séchage de toutes les couches S1) et éventuellement S2) déposées, restant relié avec la feuille hydrosoluble fonctionnelle.

13. Procédé selon l'une quelconque des revendications précédentes, l'humidité résiduelle de la feuille hydrosoluble fonctionnelle n'étant pas supérieure à 15 % en poids, par rapport à la masse totale de la feuille, et cette teneur en humidité résiduelle n'étant seulement atteinte qu'après le dépôt de toutes les couches S1) et S2).

14. Procédé selon l'une quelconque des revendications précédentes, la feuille hydrosoluble fonctionnelle comprenant au moins une couche S1), au moins une couche S2), et en tout au moins 3 couches.

15. Procédé selon l'une quelconque des revendications précédentes, la couche S1), à une teneur en humidité résiduelle non supérieure à 15 % en poids, présentant une épaisseur de 10 à 200 µm.

16. Feuille hydrosoluble pouvant être préparée selon l'une quelconque des revendications précédentes.
